# EUROPEAN PATENT APPLICATION

(11) **EP 4 325 798 A1**
(43) Date of publication of application: **21.02.2024**
(21) Application number: 22806327.7
(22) Date of filing: 29.03.2022
(51) Int. Cl.: H04L 45/00

(54) **COMMUNICATION METHOD AND APPARATUS**

(30) Priority: 11.05.2021 CN 202110512937; 13.05.2021 CN 202110523511
(71) Applicant: Huawei Digital Power Technologies Co., Ltd., Shenzhen, Guangdong 518129 (CN)
(72) Inventor: ZHU, Yuanping, Shenzhen, Guangdong 518129 (CN); SHI, Yulong, Shenzhen, Guangdong 518129 (CN); LIU, Jing, Shenzhen, Guangdong 518129 (CN); CAO, Zhenzhen, Shenzhen, Guangdong 518129 (CN)
(74) Representative: Pfenning, Meinig & Partner mbB
(86) International application number: PCT/CN2022/083664
(87) International publication number: WO 2022/237357

(57) **Abstract**

This application provides a communication method. The method includes: A first node receives first information from a second node, where the first information includes a size of an available space in a first buffer space of the second node, the first buffer space is for buffering a data packet that is to be transmitted through a first path, the first path is a primary path that is for transmitting the data packet, and the second node is a next-hop node of the first node on the primary path. If the size of the available space in the first buffer space is less than or equal to a first threshold, the first node determines to transmit, through a third node, the data packet that is to be transmitted through the first path, where the third node is a next-hop node of the first node on a backup path that is for transmitting the data packet. Therefore, congestion on the second node is relieved, an average transmission delay of the data packet is reduced, and user experience is improved.

## Description

This application claims priority to Chinese Patent Application No. 202110512937.7, filed with the China National Intellectual Property Administration on May 11, 2021 and entitled "COMMUNICATION METHOD AND APPARATUS", which is incorporated herein by reference in its entirety.

This application claims priority to Chinese Patent Application No. 202110523511.1, filed with the China National Intellectual Property Administration on May 13, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

Currently, considering introduction of an integrated access and backhaul (integrated access and backhaul, IAB) node, a multi-hop radio link is introduced to a radio air interface. To enable a parent node to obtain a congestion status of a link of a child node, a downlink hop-by-hop flow control feedback (flow control feedback) is introduced in the IAB subject of the R16, in other words, the IAB node may perform flow control feedback to the parent node of the IAB node. The flow control feedback may reflect a buffer status of a link between the IAB node and the child node of the IAB node.

However, after the parent node receives flow control feedback information sent by the child node, if the parent node learns that the link of the child node is congested, the parent node slows down downlink data sending. Consequently, data packets are stacked at the parent node, and there is a risk of an overflow of the buffered data packets. In addition, if link congestion cannot be relieved in short time, the data packet is buffered for long time on a wireless backhaul link and cannot be sent. Consequently, a delay of the data packet is excessively long, and user experience is affected.

Therefore, how to control sending of a data packet becomes a technical problem that needs to be resolved currently.

### SUMMARY

This application provides a communication method and apparatus. A data packet is rerouted to reduce a transmission delay of the data packet and improve user experience.

A first aspect provides a communication method. The method includes: A first node receives first information from a second node, where the first information includes a size of an available space in a first buffer space of the second node, the first buffer space is for buffering a data packet that is to be transmitted through a first path, the first path is a primary path that is for transmitting the data packet, and the second node is a next-hop node of the first node on the primary path. If the size of the available space in the first buffer space is less than or equal to a first threshold, the first node determines to transmit, through a third node, the data packet that is to be transmitted through the first path, where the third node is a next-hop node of the first node on a backup path that is for transmitting the data packet.

According to the technical method, the first node may reroute the data packet based on received flow control feedback information at a path identifier granularity when a link is congested. In this way, link congestion can be relieved, and an average transmission delay of the data packet can be reduced, thereby improving user experience.

In this application, the first buffer space may be a storage space of the second node. The size of the available space in the first buffer space may refer to a maximum amount of data sent by a transmit end.

In this application, when the available space size is equal to a threshold, a determining result of the first node may be flexibly determined. This is not limited.

In this application, to ensure normal data transmission between a terminal and an IAB donor, the IAB donor needs to configure a routing table for each IAB node, that is, configure next-hop nodes corresponding to different paths. In addition, the IAB donor needs to determine a transmission path corresponding to data transmission. To be specific, a transmission path is determined before data transmission. The transmission path may be referred to as a primary path. Routing (routing) transmission of data is performed between the terminal and the IAB donor over the primary path, and other paths may be referred to as backup (backup) paths.

In this application, a next-hop node of the first node may be a child node or a parent node. This is not limited in this application.

With reference to the first aspect, in some implementations of the first aspect, if the size of the available space in the first buffer space is greater than the first threshold, the first node determines to transmit, through the second node, the data packet that is to be transmitted through the first path.

Based on the foregoing technical solution, if the first node determines that a buffer status of the second node is suitable for sending the data packet that is on the first path, the first node may determine that the second node is the next-hop node. Therefore, timely transmission of the data packet can be ensured, implementations of data packet transmission are reduced, and service experience is ensured.

With reference to the first aspect, in some implementations of the first aspect, that a first node receives first information from a second node includes: The first node receives N pieces of first information from the second node in first duration, where the N pieces of first information include sizes of available spaces in N first buffer spaces. If there are X available spaces whose sizes are less than or equal to the first threshold in the N first buffer spaces, the first node determines to transmit, through the third node, the data packet that is to be transmitted through the first path, where N is an integer greater than 1, and X is less than or equal to N.

Based on the foregoing technical solution, the first node may determine the buffer status of the second node in a period of duration, so as to further ensure accuracy of determining congestion on the second node, thereby ensuring that the data packet can be successfully transmitted in a timely manner.

With reference to the first aspect, in some implementations of the first aspect, the method further includes: The first node receives second information from the second node, where the second information includes a size of an available space in a second buffer space of the second node, the second buffer space is for buffering a data packet that is to be mapped to a first radio link control channel on a first link, and the first link is a link between the first node and the second node. The first node determines, based on the size of the available space in the first buffer space and the size of the available space in the second buffer space, to transmit, through the third node, the data packet that is to be transmitted through the first path.

Based on the foregoing technical solution, the first node may determine a congestion status of the second node based on flow control feedback information that is at two granularities, so as to further ensure accuracy of determining congestion on the second node, thereby ensuring that the data packet can be successfully transmitted in a timely manner.

With reference to the first aspect, in some implementations of the first aspect, that the first node determines, based on the size of the available space in the first buffer space and the size of the available space in the second buffer space, to transmit, through the third node, the data packet that is to be transmitted through the first path includes: If the size of the available space in the first buffer space is less than or equal to the first threshold, and/or the size of the available space in the second buffer space is less than or equal to a second threshold, the first node determines to transmit, through the third node, the data packet that is to be transmitted through the first path.

In this application, the first threshold may be equal to the second threshold, or the first threshold may not be equal to the second threshold.

Based on the foregoing technical solution, a donor node may flexibly configure a threshold based on an actual situation.

With reference to the first aspect, in some implementations of the first aspect, that the first node determines, based on the size of the available space in the first buffer space and the size of the available space in the second buffer space, to transmit, through the third node, the data packet that is to be transmitted through the first path includes: If the size that is of the available space in the first buffer space and that is received by the first node in the first duration is less than or equal to the first threshold, and/or the size that is of the available space in the second buffer space and that is received by the first node in second duration is less than or equal to the first threshold, the first node determines to transmit, through the third node, the data packet that is to be transmitted through the first path.

In this application, the first duration may be equal to the second duration, or the first duration may not be equal to the second duration.

Based on the foregoing technical solution, a donor node may flexibly configure a threshold based on an actual situation.

With reference to the first aspect, in some implementations of the first aspect, if the size of the available space in the first buffer space is less than or equal to a first threshold, that the first node determines to transmit, through a third node, the data packet that is to be transmitted through the first path includes: If the first node determines that a data packet that is to be transmitted through the first path and whose data amount is equal to the size of the available space in the first buffer space has been sent to the second node in third duration before the first node receives the first information, the first node determines to transmit, through the third node, the data packet that is to be transmitted through the first path. Alternatively, if the first node determines that a data packet that is to be transmitted through the first path and whose data amount is equal to the size of the available space in the first buffer space has been sent to the second node in fourth duration after the first node receives the first information, the first node determines to transmit, through the third node, the data packet that is to be transmitted through the first path.

It should be noted that in this application, "if the first node determines that a data packet that is to be transmitted through the first path and whose data amount is equal to the size of the available space in the first buffer space has been sent to the second node in third duration before the first node receives the first information, the first node determines to transmit, through the third node, the data packet that is to be transmitted through the first path" may be understood as: The first node determines that a second-type data packet whose data amount is equal to the size of the available space in the first buffer space has been sent to the second node in the third duration before the first node receives the first information, where the second-type data packet is the data packet that is to be transmitted by the first node through the first path. Similarly, the technical solution for the fourth duration may also be understood in this way.

In this application, the second-type data packet is the data packet that is to be transmitted by the first node through the first path. That is, when the second-type data packet whose data amount is the size of the available space in the first buffer space has been sent to the second node in duration before the first information is received, the first node may also determine that the second node is not available, and determine to transmit the data packet through the third node. Alternatively, when the second-type data packet whose data amount is the size of the available space in the first buffer space has been sent to the second node in duration after the first information is received, the first node may also determine that the second node is not available, and determine to transmit the data packet through the third node. In other words, if the first node determines that the second-type data packet whose data amount is the size of the available space in the first buffer space has been sent, the first node may also determine that the second node is not available, and may send the data packet through the third node.

Based on the foregoing technical solution, the first node can determine a congestion status for the second node in a timely manner, so that the data packet can be transmitted in a timely manner, thereby reducing implementations of data packet transmission and ensuring service experience.

With reference to the first aspect, in some implementations of the first aspect, if the size of the available space in the first buffer space is less than or equal to a first threshold, that the first node determines to transmit, through a third node, the data packet that is to be transmitted through the first path includes: If the size of the available space in the first buffer space is less than or equal to the first threshold, and the first node determines that the third node can be for transmitting the data packet that is to be transmitted through the first path, the first node determines to transmit, through the third node, the data packet that is to be transmitted through the first path.

Based on the foregoing technical solution, when determining that the second node is not available, the first node may further determine availability of a backup link. Therefore, congestion on the second node is relieved, and it is ensured that the data packet can be transmitted on the backup link in a timely manner, thereby reducing a delay of the data packet and ensuring service experience.

With reference to the first aspect, in some implementations of the first aspect, that the first node determines that the third node can be for transmitting the data packet that is to be transmitted through the first path includes: The first node receives third information from the third node, where the third information includes a size of an available space in at least one buffer space of the third node, the at least one buffer space is in one-to-one correspondence with at least one backup path, and the at least one backup path and the first path have a same destination node. If a sum of sizes of available spaces in the at least one buffer space is greater than a third threshold, the first node determines that the third node can be for transmitting the data packet that is to be transmitted through the first path.

In this application, there may be a plurality of backup paths of a data packet that needs to be rerouted.

Based on the foregoing technical solution, the first node may determine, at a path identifier granularity, whether a backup link is available, so that the data packet can be successfully rerouted.

With reference to the first aspect, in some implementations of the first aspect, that the first node determines that the third node can be for transmitting the data packet that is to be transmitted through the first path includes: The first node receives fourth information from the third node, where the fourth information includes a size of an available space in a fourth buffer space of the third node, the fourth buffer space is for buffering a data packet that is to be mapped to a first radio link control channel on a second link, and the second link is a link between the first node and the third node. If the size of the available space in the fourth buffer space is greater than a fourth threshold, the first node determines that the third node can be for transmitting the data packet that is to be transmitted through the first path.

With reference to the first aspect, in some implementations of the first aspect, that the first node determines that the third node can be for transmitting the data packet includes: The first node receives fourth information from the third node, where the fourth information includes a size of an available space in at least one buffer space of the third node, the at least one buffer space is for buffering a data packet that is to be mapped to at least one radio link control channel on a second link, the at least one buffer space is in one-to-one correspondence with the at least one radio link control channel, and the second link is a link between the first node and the third node. If a sum of sizes of available spaces in the at least one buffer space is greater than a fourth threshold, the first node determines that the third node can be for transmitting the data packet that is to be transmitted through the first path.

Based on the foregoing technical solution, the first node may determine, at a radio link control channel granularity, whether a backup link is available, so that the data packet can be successfully rerouted.

With reference to the first aspect, in some implementations of the first aspect, the first node receives fifth information from the second node, where the fifth information includes a size of an available space in the first buffer space of the second node. If the size of the available space in the first buffer space is greater than a fifth threshold, the first node determines that the second node can be for transmitting the data packet that is to be transmitted through the first path.

With reference to the first aspect, in some implementations of the first aspect, that the first node receives fifth information from the second node includes: The first node receives Y pieces of fifth information from the second node in fifth duration, where the Y pieces of fifth information include sizes of available spaces in Y first buffer spaces. If the sizes of the available spaces in the Y first buffer spaces are all greater than the fifth threshold, the first node determines that the second node can be for transmitting the data packet that is to be transmitted through the first path, where Y is an integer greater than 1.

Based on the foregoing technical solution, if the first node determines that congestion of a primary link is relieved, the first node may not need to reroute the data packet, thereby reducing impact caused by occupation of the backup link for long time.

With reference to the first aspect, in some implementations of the first aspect, the first threshold is configured by a donor node of the first node, the first threshold is indicated by the donor node of the first node based on indication information, or the first threshold is preconfigured for the first node; or the first duration is configured by a donor node of the first node, the first duration is indicated by the donor node of the first node based on indication information, or the first duration is preconfigured for the first node.

It should be understood that in this application, the first threshold to the fifth threshold may be configured according to the foregoing technical solution. Similarly, the first duration to the fifth duration may also be configured according to the foregoing technical solution.

Based on the foregoing technical solution, the threshold in this application may be flexibly configured based on an actual situation.

According to a second aspect, a communication method is provided. The method includes: A first node receives second information from a second node, where the second information includes a size of an available space in a second buffer space of the second node, the second buffer space is for buffering a data packet that is to be mapped to a first radio link control channel on a first link, and the first link is a link between the first node and the second node. If the size of the available space in the second buffer space is less than or equal to a second threshold, the first node determines to transmit a first data packet through a third node, where the first data packet is the data packet that is to be mapped to the first radio link control channel on the first link, a primary path of the first data packet is a first path, the second node is a next-hop node of the first node on the first path, the third node is a next-hop node of the first node on a second path that is for transmitting the first data packet, the second path is a backup path of the first data packet, a link between the first node and the third node is a second link, and the first path and the second path have a same destination node.

According to the foregoing technical solution and the technical method, the first node may reroute the data packet based on received flow control feedback information at a radio link control channel granularity when a link is congested. In this way, link congestion can be relieved, and an average transmission delay of the data packet can be reduced, thereby improving user experience.

With reference to the second aspect, in some implementations of the second aspect, if the size of the available space in the second buffer space is greater than the second threshold, the first node determines to transmit the first data packet through the second node.

With reference to the second aspect, in some implementations of the second aspect, that a first node receives second information from a second node includes: The first node receives K pieces of second information from the second node in second duration, where the K pieces of second information include sizes of available spaces in K second buffer spaces. If L sizes of available spaces in the K second buffer spaces are less than or equal to the second threshold, the first node determines to transmit the first data packet through the third node, where K is an integer greater than 1, and L is less than or equal to K.

With reference to the second aspect, in some implementations of the second aspect, the method further includes: The first node receives first information from the second node, where the first information includes a size of an available space in a first buffer space of the second node, and the first buffer space is for buffering a data packet that is to be transmitted through the first path. The first node determines, based on the size of the available space in the second buffer space and the size of the available space in the first buffer space, to transmit the first data packet through the third node, where the third node is the next-hop node of the first node on the backup path that is for transmitting the first data packet.

With reference to the second aspect, in some implementations of the second aspect, that the first node determines, based on the size of the available space in the second buffer space and the size of the available space in the first buffer space, to transmit the first data packet through the third node includes: If the size of the available space in the second buffer space is less than or equal to the second threshold and/or the size of the available space in the first buffer space is less than or equal to a first threshold, the first node determines to transmit the first data packet through the third node.

With reference to the second aspect, in some implementations of the second aspect, that the first node determines, based on the size of the available space in the second buffer space and the size of the available space in the first buffer space, to transmit the first data packet through the third node includes: If the size that is of the available space in the second buffer space and that is received by the first node in the second duration is less than or equal to the second threshold, and/or the size that is of the available space in the first buffer space and that is received by the first node in first duration is less than or equal to a first threshold, the first node determines to transmit the first data packet through the third node.

With reference to the second aspect, in some implementations of the second aspect, if the size of the available space in the second buffer space is less than or equal to a second threshold, that the first node determines to transmit a first data packet through a third node includes: If the first node determines that a first-type data packet whose data amount is equal to the size of the available space that is in the second buffer space has been sent to the second node in third duration before the first node receives the second information, where the first-type data packet is a data packet mapped, by the first node for sending to the second node, to the first radio link control channel on the first link, the first node determines to transmit the first data packet through the third node. Alternatively, if the first node determines that a first-type data packet whose data amount is equal to the size of the available space that is in the second buffer space has been sent to the second node in fourth duration after the first node receives the second information, the first node determines to transmit the first data packet through the third node.

It should be noted that, in this application, the first-type data packet is the data packet that is mapped to the first radio link control channel on the first link by the first node for sending to the second node. That is, when the first-type data packet whose data amount is the size of the available space that is in the second buffer space has been sent to the second node in duration before the second information is received, the first node may also determine that the second node is not available, and determine to transmit the first data packet through the third node. Alternatively, when the first-type data packet whose data amount is the size of the available space that is in the second buffer space has been sent to the second node in duration after the second information is received, the first node may also determine that the second node is not available, and determine to transmit the first data packet through the third node. In other words, if the first node determines that the first-type data packet whose data amount is the size of the available space that is in the second buffer space has been sent, the first node may also determine that the second node is not available, and may send the data packet through the third node.

With reference to the second aspect, in some implementations of the second aspect, if the size of the available space in the second buffer space is less than or equal to a second threshold, that the first node determines to transmit a first data packet through a third node includes: If the size of the available space in the second buffer space is less than or equal to the second threshold, and the first node determines that the third node can be for transmitting the first data packet, the first node determines to transmit the first data packet through the third node.

With reference to the second aspect, in some implementations of the second aspect, that the first node determines that the third node can be for transmitting the first data packet includes: The first node receives fourth information from the third node, where the fourth information includes a size of an available space in at least one buffer space of the third node, the at least one buffer space is for buffering a data packet mapped, for sending to the third node, to at least one radio link control channel on the second link, the at least one buffer space is in one-to-one correspondence with the at least one radio link control channel. If a sum of sizes of available spaces in the at least one buffer space is greater than a fourth threshold, the first node determines that the third node can be for transmitting the first data packet.

With reference to the second aspect, in some implementations of the second aspect, that the first node determines to transmit a first data packet through a third node includes: The first node receives fourth information from the third node, where the fourth information includes a size of an available space in a fourth buffer space of the third node, the fourth buffer space is for buffering a data packet mapped, for sending to the third node, to a second radio link control channel on the second link, and the second link is the link between the first node and the third node. If the size of the available space in the fourth buffer space is greater than a fourth threshold, the first node determines to transmit the first data packet through the third node.

With reference to the second aspect, in some implementations of the second aspect, that the first node determines to transmit a first data packet through a third node includes: The first node receives third information from the third node, where the third information includes a size of an available space in at least one buffer space of the third node, the at least one buffer space is in one-to-one correspondence with at least one backup path, and the at least one backup path and the first path have a same destination node. If a sum of sizes of available spaces in the at least one buffer space is greater than a third threshold, the first node determines to transmit the first data packet through the third node.

With reference to the second aspect, in some implementations of the second aspect, the first node receives fifth information from the second node, where the fifth information includes a size of an available space in the second buffer space of the second node. If the size of the available space in the second buffer space is greater than a fifth threshold, the first node determines that the second node can be for transmitting the data packet that is to be mapped to the first radio link control channel on the first link.

With reference to the second aspect, in some implementations of the second aspect, that the first node receives fifth information from the second node includes: The first node receives P pieces of fifth information from the second node in fifth duration, where the P pieces of fifth information include sizes of available spaces in P second buffer spaces. If the sizes of available spaces in the P second buffer spaces are all greater than the fifth threshold, the first node determines to transmit, through the third node, the data packet that is to be mapped to the first radio link control channel on the first link, where the fifth threshold is greater than or equal to the second threshold, the fifth duration is greater than or equal to the second duration, P is an integer greater than 1, and P is greater than or equal to K.

With reference to the second aspect, in some implementations of the second aspect, the second threshold is configured by a donor node of the first node, the second threshold is indicated by the donor node of the first node based on indication information, or the second threshold is preconfigured for the first node; or the second duration is configured by a donor node of the first node, the second duration is indicated by the donor node of the first node based on indication information, or the second duration is preconfigured for the first node.

According to a third aspect, a communication method is provided. The method includes: A donor node configures a threshold or duration for a first node, or the donor node indicates the threshold or the duration of the first node based on indication information. The threshold may be a minimum value used when congestion does not occur on a second node.

According to a fourth aspect, a communication apparatus is provided. The apparatus is configured to perform the communication method in any one of the first aspect or the possible implementations of the first aspect.

According to a fifth aspect, a communication apparatus is provided. The apparatus is configured to perform the communication method in any one of the second aspect or the possible implementations of the second aspect.

According to a sixth aspect, a communication apparatus is provided. The apparatus is configured to perform the communication method in the third aspect.

According to a seventh aspect, a communication apparatus is provided, and includes a processor. The processor is coupled to a memory, and may be configured to execute instructions in the memory, to implement the method according to any one of the possible implementations of the first aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

In an implementation, the communication apparatus is a donor node device. When the communication apparatus is the donor node device, the communication interface may be a transceiver or an input/output interface.

In another implementation, the communication apparatus is a chip disposed in a donor node. When the communication apparatus is the chip configured in the donor node, the communication interface may be an input/output interface. Optionally, the transceiver may be a transceiver circuit. Optionally, the input/output interface may be an input/output circuit.

According to an eighth aspect, a communication apparatus is provided, and includes a processor. The processor is coupled to a memory, and may be configured to execute instructions in the memory, to implement the method according to any one of the possible implementations of the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

In an implementation, the communication apparatus is a donor node device. When the communication apparatus is the donor node device, the communication interface may be a transceiver or an input/output interface.

In another implementation, the communication apparatus is a chip configured in a donor node device. When the communication apparatus is the chip configured in the donor node device, the communication interface may be an input/output interface.

Optionally, the transceiver may be a transceiver circuit. Optionally, the input/output interface may be an input/output circuit.

According to a ninth aspect, a communication apparatus is provided, and includes a processor. The processor is coupled to a memory, and may be configured to execute instructions in the memory, to implement the method according to any one of the possible implementations of the third aspect. Optionally, the communication apparatus further includes the memory. Optionally, the communication apparatus further includes a communication interface, and the processor is coupled to the communication interface.

In an implementation, the communication apparatus is a donor node device. When the communication apparatus is the donor node device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may be a transceiver circuit. Optionally, the input/output interface may be an input/output circuit.

According to a tenth aspect, a processor is provided, and includes an input circuit, an output circuit, and a processing circuit. The processing circuit is configured to: receive a signal through the input circuit; and transmit a signal through the output circuit, so that the processor is enabled to perform the method according to any one of the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be, for example but not limited to, received and input by a transceiver, a signal output by the output circuit may be, for example but not limited to, output to and transmitted by a transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a processing apparatus is provided, and includes a processor and a memory. The processor is configured to: read instructions stored in the memory; receive a signal via a transceiver; and transmit a signal via a transmitter, to perform the method according to any one of the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM), and the memory and the processor may be integrated on a same chip, or may be separately disposed on different chips. A type of the memory and a manner of setting the memory and the processor are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing apparatus in the eleventh aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twelfth aspect, a computer program product is provided. The computer program product includes a computer program (which may also be referred to as code or instructions). When the computer program is run, a computer is enabled to perform the method in any one of the possible implementations of the first aspect to the third aspect.

According to a thirteenth aspect, a computer-readable medium is provided. The computer-readable medium stores a computer program (which may also be referred to as code or instructions). When the computer program is run on a computer, the computer is enabled to perform the method in any one of the possible implementations of the first aspect to the third aspect.

According to a fourteenth aspect, a chip system is provided. The chip system includes a processor, configured to invoke a computer program in a memory and execute the computer program, to enable a device on which the chip system is installed to perform the method according to the implementations of the first aspect to the third aspect.

According to a fifteenth aspect, a communication system is provided. The communication system includes any one of the apparatus in the fourth aspect, the apparatus in the fifth aspect, and the communication apparatus in the sixth aspect.

### BRIEF DESCRIPTION OF DRAWINGS

FIG. 1 is a schematic diagram of an IAB standalone according to this application;
FIG. 2 is a schematic diagram of an IAB non-standalone according to this application;
FIG. 3 is a schematic diagram of an IAB system architecture according to this application;
FIG. 4 is a schematic diagram of IAB network protocol stacks according to this application;
FIG. 5 is a schematic diagram of a flow control feedback format of an IAB node according to this application;
FIG. 6 is a schematic diagram of node routing in an IAB network according to this application;
FIG. 7 is a schematic flowchart of a communication method according to this application;
FIG. 8 is a schematic flowchart of a communication method according to this application;
FIG. 9 is a schematic block diagram of a communication apparatus according to this application; and
FIG. 10 is a schematic block diagram of a communication apparatus according to this application.

### DESCRIPTION OF EMBODIMENTS

A wireless communication system mentioned in embodiments of this application includes but is not limited to a global system for mobile communications (global system for mobile communications, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (such as a 5G or 6G communication system), a system integrating a plurality of access systems, or an evolved system.

The technical solutions provided in this application may be further applied to machine type communication (machine type communication, MTC), long term evolution-machine (Long Term Evolution-machine, LTE-M), a device to device (device to device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The terminal device in embodiments of this application is an ingress for interaction between a mobile user and a network, and can provide a basic computing capability and a storage capability, display a service window to the user, and receive user operation input. A terminal device in 5G may establish a signal connection and a data connection to a wireless access network device by using a new radio technology, to transmit a control signal and service data to a mobile network. The terminal device in embodiments of this application may include various access terminals, mobile devices, user terminals, or user apparatuses that have a wireless communication function. For example, the terminal device may be user equipment (user equipment, UE), such as a mobile phone (mobile phone), a tablet computer (pad), a desktop computer, a computer with a wireless transceiver function, a virtual reality (virtual reality, VR) terminal device, a television, or an augmented reality (augmented reality, AR) terminal device. The terminal device may alternatively be a wireless terminal in industrial control (industrial control), a machine type communication (machine type communication, MTC) terminal, customer premise equipment (customer premise equipment, CPE), a wireless terminal in self driving (self driving), a wireless terminal in telemedicine (telemedicine), a wireless terminal in smart grid (smart grid), a wireless terminal in transportation security (transportation safety), a wireless terminal in a smart city (smart city), a smart home (smart home), a smart speaker, an electronic door lock, a cellular phone, a cordless phone, a session initiation protocol (session initiation protocol, SIP) telephone, a wireless local loop (wireless local loop, WLL) station, a personal digital assistant (personal digital assistant, PDA), a handheld device with a wireless communication function, a computing device or another processing device connected to a wireless modem, an automatic guided vehicle (automatic guided vehicle, AGV), a drone, a car, a vehicle-mounted device, a wearable device, a terminal device in a 5G network, a terminal device in a future evolved public land mobile network (public land mobile network, PLMN), a terminal device in a non-public network (non-public network, NPN), or the like.

The radio access network device in embodiments of this application is similar to a base station in a conventional network, is deployed at a location close to the terminal device, provides a network access function for an authorized user in a specific area, and can determine, based on a user level, a service requirement, and the like, transmission tunnels of different quality to transmit user data. The radio access network device can manage resources of the radio access network device, appropriately use the resources, provide an access service for the terminal device as required, and is responsible for forwarding the control signal and the user data between the terminal device and a core network. The radio access network device in embodiments of this application may be an access device through which the terminal device accesses the mobile communication system in a wireless manner. The radio access network device may be a base station, an evolved NodeB (evolved NodeB, eNB), a home base station, an access point (access point, AP) in a wireless fidelity (wireless fidelity, Wi-Fi) system, a station (station, STA), a wireless relay node, a wireless backhaul node, a transmission point (transmission point, TP) or a transmission reception point (transmission reception point, TRP), a macro base station or a micro base station, a high frequency base station, or the like. Alternatively, the radio access network device may be a next-generation base station (next-generation NodeB, gNB) in an NR system, or may be a component or a part of a device that constitutes a base station, for example, a central unit (central unit, CU), a distributed unit (distributed unit, DU), or a baseband unit (baseband unit, BBU). It should be understood that a specific technology used by and a specific device form of the radio access network device are not limited in embodiments of this application. In this application, the radio access network device is referred to as a network device for short. Unless otherwise specified, in this application, all network devices are radio access network devices. In this application, the network device may be a network device, or may be a chip used in the network device to complete a wireless communication processing function.

Compared with a 4th generation mobile communication system, 5th generation (5G) mobile communication comprehensively raises stricter requirements on various network performance indicators, for example, capacity indicators improved by 1000 times, wider coverage requirements, and ultra-high reliability and ultra-low latency. Considering that high-frequency carrier frequency resources are abundant, high-frequency small cell networking becomes more popular in hotspot areas to meet ultra-high capacity requirements of 5G. High-frequency carriers have poor propagation characteristics, severe attenuation due to blocking, and small coverage. Therefore, a large quantity of small cells need to be deployed intensively. Correspondingly, providing fiber backhaul for the large quantity of small cells that are deployed intensively needs high costs and has great difficulty in construction. Therefore, an economical and convenient backhaul solution is needed. In addition, from the perspective of wide coverage requirements, to provide network coverage in some remote areas, fiber deployment is difficult and needs high costs. Therefore, a design of a flexible and convenient access and backhaul solution is needed. An IAB technology resolves the foregoing two problems in the following manner: A wireless transmission solution is used for an access link (access link) and a backhaul link (backhaul link) of the IAB technology, and fiber deployment is avoided.

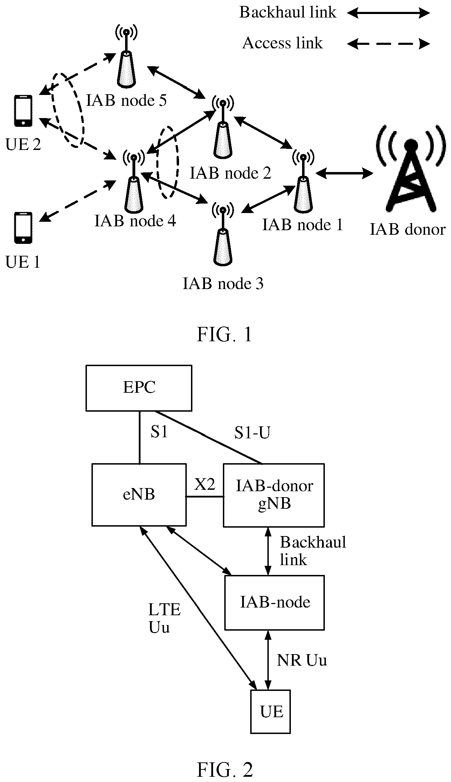

With reference to FIG. 1, FIG. 2, and FIG. 3, the following describes in detail an integrated access and backhaul (Integrated access and backhaul, IAB) scenario to which embodiments of this application are applicable.

FIG. 1 shows a scenario of IAB standalone (standalone, SA). In an IAB network, a relay node RN (relay node, RN) or an IAB node (IAB node) may provide a radio access service for user equipment (user equipment, UE), and service data of the UE is transmitted by the IAB node to an IAB donor (IAB donor) through a wireless backhaul link. In this application, the IAB donor may also be referred to as a donor node (donor node) or a donor base station (donor gNodeB, DgNB). A base station supporting the IAB node may specifically include an IAB-donor-CU part and at least one IAB-donor-DU part. Correspondingly, the IAB-donor-CU part may further include an IAB-donor-CU-CP (responsible for a control plane) and at least one IAB-donor-CU-UP (responsible for a user plane). The IAB node may include a mobile terminal (mobile termination, MT) part and a DU (distributed unit, DU) part. When facing a parent node of the IAB node, the IAB node may serve as a terminal device, namely, an MT role. When facing a child node (where the child node may be another IAB node or common UE) of the IAB node, the IAB node is considered as a network device, namely, a DU role. The MT part of the IAB node has some or all functions of the UE. The donor base station DgNB may be an access network element having a complete base station function, or may be an access network element in a form of separation of a central unit (central unit, CU) and a distributed unit (distributed unit, DU). The donor base station is connected to a core network (for example, connected to a 5G core network (5GC)) element that serves the UE, and provides a wireless backhaul function for the IAB node. For ease of description, the central unit of the donor node is briefly referred to as a donor CU (or directly referred to as a CU), and the distributed unit of the donor node is briefly referred to as a donor DU. The donor CU may alternatively be in a form of separation of a control plane (control plane, CP) and a user plane (user plane, UP). For example, the CU may include one CU-CP and one (or more CU-UPs).

In a current 5G standard, in consideration of small coverage of high-frequency bands, multi-hop networking may be used in the IAB network, to ensure network coverage performance. In addition, in consideration of a requirement on service transmission reliability, the IAB node may support dual connectivity (Dual connectivity, DC) or multi-connectivity (multi-connectivity), to cope with potential exceptions that may occur on the backhaul link, for example, link interruption or blockage (blockage) and load fluctuation, to improve a transmission reliability guarantee. Therefore, the IAB network supports multi-hop networking, and may further support multi-connectivity networking. There is at least one transmission path including a plurality of segments of links between the LTE served by the IAB node and the IAB donor. On a transmission path, a plurality of nodes are included, for example, the UE, one or more IAB nodes, and the IAB donor (where if the IAB donor is in the form of separation of the CU and the DU, the IAB-donor-DU part and the IAB-donor-CU part are further included). Each IAB node considers a neighboring node that provides access and backhaul services for the IAB node as a parent node. Accordingly, each IAB node can be considered as a child node of the parent node.

For example, in FIG. 1, a parent node of IAB node 1 is an IAB donor, IAB node 1 is also a parent node of IAB node 2 and IAB node 3, both IAB node 2 and IAB node 3 are parent nodes of IAB node 4, and a parent node of IAB node 5 is IAB node 2. An uplink of the UE may be transmission to the donor site IAB donor through one or more IAB nodes, and then the IAB donor performs sending to a mobile gateway device (for example, a user plane function unit UPF in a 5G core network). A downlink of the UE is sending to the UE through the IAB nodes after reception by the IAB donor from the mobile gateway device. FIG. 1 shows an IAB standalone scenario. Both the IAB node and the LTE establish connections to a network only through air interfaces of an NR standard.

The IAB standalone scenario shown in FIG. 1 is merely an example. In an IAB scenario combining multi-hop and multi-connectivity, there are more other possibilities. For example, an IAB donor in the figure and an IAB node under another IAB donor form dual connectivity to serve the UE (in other words, the UE supports dual connectivity, one connection 1 directly accesses a cell served by an IAB donor DU, and the other connection 2 establishes a connection to an IAB node X, where an IAB donor connected to the IAB node X is different from an IAB donor corresponding to connection 1 of the UE). These are not listed herein one by one.

FIG. 2 shows a scenario of IAB non-standalone (non-standalone, NSA). As shown in FIG. 2, an IAB node supports 4G and 5G network dual connectivity (E-UTRAN NR dual connectivity, EN-DC). An LTE base station eNB is a master base station (Master eNB, MeNB), provides an LTE air interface (LTE Uu) connection for the IAB node, and establishes an S1 interface with a 4G evolved packet core (evolved packet core, EPC) to perform user plane and control plane transmission. For UE or the IAB node in an EN-DC mode, the LTE base station eNB is the master base station. A gNB is a base station in a 5G standard. For the UE or the IAB node, the gNB may be a master base station or a secondary base station of the IAB node in a dual-connectivity mode. An IAB-donor gNB provides an NR air interface (NR Uu) connection for the IAB node, and establishes an S 1 interface with the core EPC to perform user plane transmission. Similarly, the UE also supports the EN-DC. The UE is connected to the master base station eNB through an LTE Uu interface, and is connected to a secondary base station IAB node through an NR Uu interface. A secondary base station of the LTE may also be the IAB-donor gNB.

It should be noted that FIG. 2 is merely an example of networking. The NSA scenario of an IAB network also supports multi-hop IAB networking. For example, the UE in FIG. 2 may be another IAB node, in other words, the IAB node may be connected to the IAB-donor gNB through a multi-hop wireless backhaul link. The IAB non-standalone scenario in this application may also be referred to as an IAB EN-DC networking scenario.

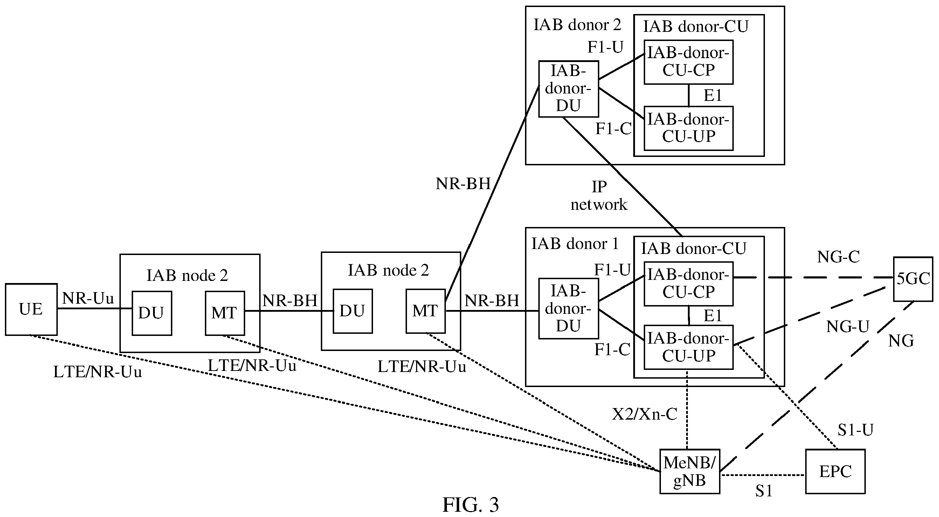

FIG. 3 is an architectural diagram of an IAB network system to which this application is applicable. As shown in FIG. 3, the IAB network includes an IAB network in a standalone (SA) and an IAB network in a non-standalone (NSA). As described above, an IAB node includes an MT part and a DU part, an IAB donor may be further divided into a DU part and a CU part, and a CU may be further divided into a CU-CP part and a CU-UP part. There is an F1 interface between a DU part of each IAB node and an IAB donor CU. The F1 interface includes two parts: a control plane part and a user plane part. The user plane part is maintained between the IAB-DU and an IAB-donor-CU-UP, and the control plane part is maintained between the IAB-DU and an IAB donor CU-CP. It should be noted that the F1 interface between the IAB-DU and the IAB donor CU is not shown in FIG. 3.

When the IAB node works in an SA mode, the IAB node can be in a single connection to one parent node or in a dual connection to two parent nodes. The two parent nodes can be controlled by a same IAB donor or controlled by different IAB donors. An F1 interface is established between the DU part of the IAB node and one IAB donor, and the IAB donor may be connected to a 5G core network (5G core network, 5GC). The IAB-donor-CU-CP is connected to a control plane network element (for example, an access and mobility management function AMF) in the 5GC through an NG control plane interface, and the IAB-donor-CU-UP is connected to a user plane network element (for example, a user plane function UPF) in the 5GC through an NG user plane interface. In this application, the 5G core network may be for performing authentication, mobility management, PDU session management, and the like on a terminal device, and includes a functional entity or a network element such as the access and mobility management function AMF and the user plane function UPF.

When the IAB node operates in an NSA mode (or EN-DC mode), the IAB-donor-CU-UP may be connected to the EPC (for example, connected to a serving gateway (serving gateway, SGW)) through an S1 user plane interface. There is an LTE Uu air interface connection between the MeNB and the MT of the IAB node. There is an X2-C interface between the MeNB and the IAB-donor-CU-CP. The MeNB is connected to the EPC through an S1 interface (including an S1 interface user plane and an S1 interface control plane).

In another possible case, the MeNB in FIG. 3 may also be replaced with a 5G base station gNB, and an LTE-Uu interface in a dashed line part in the figure is correspondingly replaced with an NR-Uu interface. The gNB may establish a user plane interface and/or a control plane interface with the 5GC. The gNB and the IAB-donor provide a dual connectivity service for the IAB node. The gNB may serve as a master base station or a secondary base station of the IAB node.

It should be noted that, the IAB node in this application may be UE serving as a relay node, or may alternatively be a device serving as a relay node, such as a residential gateway (residential gateway, RG) or customer premises equipment (customer premise Equipment, CPE).

In current discussion on the IAB network, it is determined to introduce a new protocol layer, namely, a backhaul adaptation protocol (backhaul adaptation protocol, BAP) layer, to a wireless backhaul link. The protocol layer may be located above a radio link control (radio link control, RLC) layer, and may be used to implement functions such as routing and bearer mapping on the wireless backhaul link.

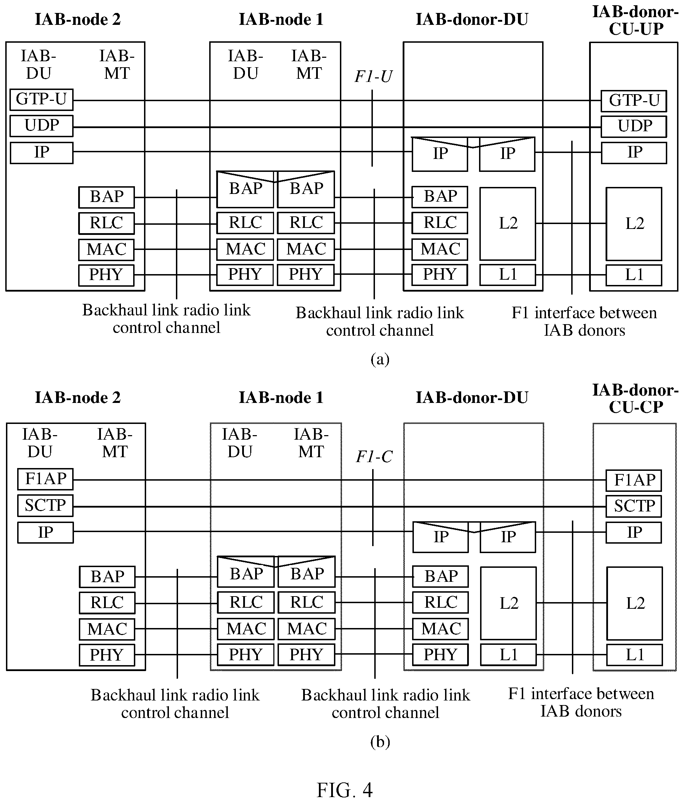

FIG. 4 is a schematic diagram of an IAB network user plane protocol stack and an IAB network control plane protocol stack. (a) in FIG. 4 is a schematic diagram of the IAB network user plane protocol stack. (b) in FIG. 4 is a schematic diagram of the IAB network control plane protocol stack. An F1 interface (or referred to as an F1* interface, which may be collectively referred to as an F1 interface in this application, but a name is not limited) needs to be established between an IAB node (for example, a DU part of the IAB node) and a donor node (for example, an IAB-donor-CU). The interface supports a user plane protocol (F1-U/F 1 *-U) (for example, (a) in FIG. 4) and a control plane protocol (F1-C/F 1 *-C) (for example, (b) in FIG. 4), where the user plane protocol includes one or more of the following protocol layers: a general packet radio service (general packet radio service, GPRS) tunneling protocol-user plane (tunneling protocol-user plane, GTP-U), a user datagram protocol (user datagram protocol, UDP), an internet protocol (internet protocol, IP), and the like; and the control plane protocol of the interface includes one or more of the following protocol layers: an F1 application protocol (F 1 application protocol, F1AP), a stream control transport protocol (stream control transport protocol, SCTP), an IP, and the like.

As shown in (b) in FIG. 4, through a control plane of the F1/F1* interface, the IAB node and an IAB donor may perform interface management, manage the IAB-DU, perform LTE context-related configuration, and the like. Through a user plane of the F 1/F 1 * interface, functions such as user plane data transmission and downlink transmission status feedback may be performed between the IAB node and the IAB donor.

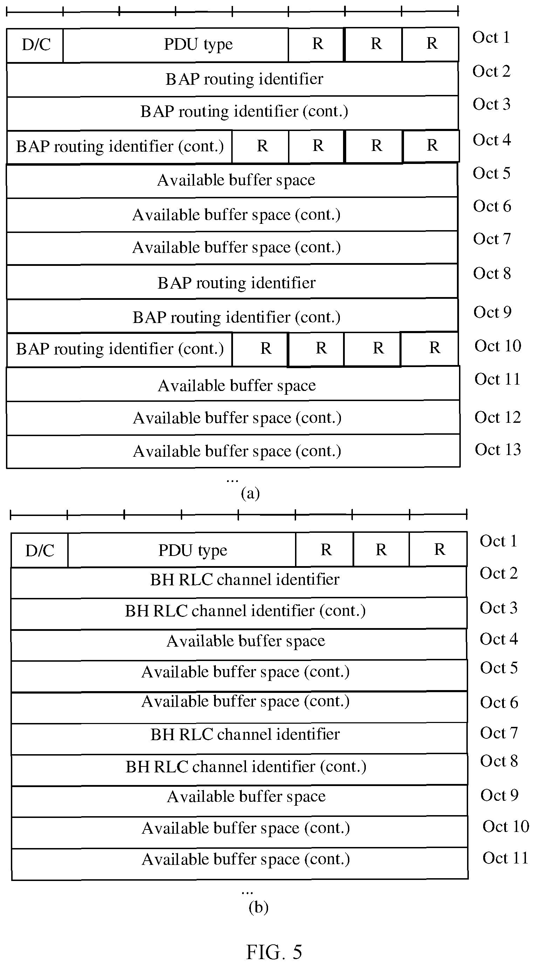

Currently, considering introduction of the IAB node, a multi-hop radio link is introduced to a radio air interface. To prevent an upstream node from unknowing a congestion status of a downstream link, a downlink hop-by-hop flow control feedback (flow control feedback) is introduced in an R16 IAB subject. To be specific, the IAB node may perform flow control feedback to a parent node of the IAB node. The flow control feedback may reflect a buffer status of a link between the IAB node and a child node of the IAB node. Specifically, there may be buffer status feedbacks that are at two different granularities. One is at a backhaul adaptation protocol routing identifier (BAP routing ID) granularity (To be specific, an available buffer size fed back by the IAB node to the parent node is an available buffer space size corresponding to each BAP routing ID, and for a specific format of a fed-back BAP control (control) protocol data unit (protocol data unit, PDU), refer to (a) in FIG. 5). The other is a feedback at a backhaul link radio link control channel (BH RLC channel, BH RLC CH) granularity (To be specific, an available buffer size fed back by the IAB node to the parent node is an available buffer space size corresponding to a BH RLC channel on a link between the IAB node and the parent node, and for a specific format of a fed-back BAP control PDU, refer to (b) in FIG. 5). The flow control feedback of either granularity is carried in the BAP control PDU and sent to the parent node. It should be noted that the IAB node may send, based on polling (polling) of the parent node, the BAP control PDU including flow control feedback information to the parent node, or the IAB node may directly trigger, based on monitoring by the IAB node on the buffer status, sending of the BAP control PDU including flow control feedback information to the parent node.

After the IAB donor adds a BAP routing ID to a downlink (when the IAB donor is in a CU-DU separation form, specifically, an IAB donor DU adds the BAP routing ID to the downlink), both the IAB donor and subsequent nodes may search a configured routing table based on the BAP routing ID to select a next-hop node until transmission terminates at a target IAB node of the downlink. Meanwhile, after the IAB node adds a BAP routing ID to an uplink, the IAB node and subsequent nodes search a configured routing table based on the BAP routing ID to select a next-hop node until transmission terminates at a target IAB donor DU of the uplink.

Based on the hop-by-hop flow control feedback, after the parent node receives the flow control feedback information sent by the child node, if the parent node learns that the link of the child node is congested, the parent node slows down downlink data sending. Consequently, data packets are stacked at the parent node, and there is a risk of a buffer overflow. In addition, if link congestion cannot be relieved in short time, the data packet is buffered for long time on a wireless backhaul link and cannot be sent. Consequently, a delay is excessively long, and user experience is affected.

In view of this, this application may provide a communication method. When a link is congested, a data packet is rerouted, to relieve link congestion, so that the data packet is transmitted in a timely manner, an average transmission delay of the data packet can be reduced, and user experience can be improved.

It should be noted that in this application, an available buffer space size (available buffer space size, or briefly referred to as an available buffer size), at a granularity, fed back by one IAB node #B to another IAB node #A may be a maximum data amount of a data packet, corresponding to the granularity, that may be further sent by IAB node #A to IAB node #B. For example, an available buffer space size that is in flow control feedback information sent by IAB node #B to IAB node #A and that corresponds to BAP routing ID#1 is M bytes (bytes). This means that a maximum of a total data amount of a data packet that can be further sent by IAB node #A to IAB node #B and that carries BAP routing ID#1 is M bytes. For another example, an available buffer space size that is in flow control feedback information sent by IAB node #B to IAB node #A and that corresponds to BH RLC CH#1 is M bytes (bytes). This means that a maximum of a total data amount of a data packet that can be further sent by IAB node #A to IAB node #B and that is mapped to BH RLC CH#1 is M bytes. BH RLC CH#1 identifies a wireless backhaul RLC channel on a wireless backhaul link between a first node and a second node.

It should be noted that, the first node in this application may be, for example, any node in an IAB network, or an IAB donor DU, and the second node in this application may be a next-hop node of the first node on some primary paths, for example, may be a child node or a parent node of the first node. Refer to FIG. 1. The first node in this application may be any node in the IAB network, for example, may be IAB node 1, IAB node 2, or IAB node 5, or may be an IAB donor. If IAB node 1 is the first node, the second node may be IAB node 2, and this case may correspond to downlink transmission. If IAB node 1 is the first node, the IAB donor may be the second node, and this case corresponds to uplink transmission. Details are not described below.

Generally, to ensure normal transmission of service data or signaling (which may be collectively referred to as data in embodiments of this application for ease of description) in the IAB network (for example, between a terminal and the IAB donor, or between an IAB node and the IAB donor), the IAB donor needs to configure a routing table for each IAB node, in other words, configure next-hop nodes corresponding to different transmission paths (where each transmission path is identified by a BAP routing ID). In addition, the IAB donor needs to determine a transmission path corresponding to data transmission on the wireless backhaul link. To be specific, a transmission path is determined before data transmission. The transmission path may be referred to as a primary path. Routing (routing) transmission of data is performed between the IAB node and the IAB donor over the primary path, and other paths may be referred to as backup (backup) paths. It should be understood that the primary path or the backup path is defined by a donor base station for transmission.

It should be noted that, in this application, during wireless backhaul link transmission in the IAB network, routing selection is performed based on a BAP routing ID carried in a BAP layer header, and the BAP routing ID includes two parts: a BAP address (address) and a BAP path identifier (path ID) that are of a target node. In other words, the BAP routing ID identifies a specific transmission path to the target node, namely, a primary path that is for transmitting a data packet. Generally, the BAP routing ID of the data packet is unique. This may also be understood as that a BAP routing ID (which may also be understood as a primary path) configured for each data packet is unique. Refer to FIG. 1. It is assumed that IAB node 1 has data packet #P1, data packet #P2, and data packet #P3. If data packet #P1 corresponds to target IAB node 5, and a primary path is path #A: IAB node 1→IAB node 2→IAB node 5, the BAP routing ID includes IAB node 5 and a path identifier #Path 1, and the BAP routing ID is used to identify path #A. If data packet #P2 corresponds to target IAB node 4, and a primary path is path #B: IAB node 1→IAB node 2→IAB node 4, the BAP routing ID includes IAB node 4 and a path identifier #Path 2, and the BAP routing ID is used to identify path #B. If data packet #P3 corresponds to target IAB node 4, and a primary path is path #C: IAB node 1→IAB node 3→IAB node 4, the BAP routing ID includes IAB node 4 and a path identifier #Path 3, and the BAP routing ID is used to identify path #C.

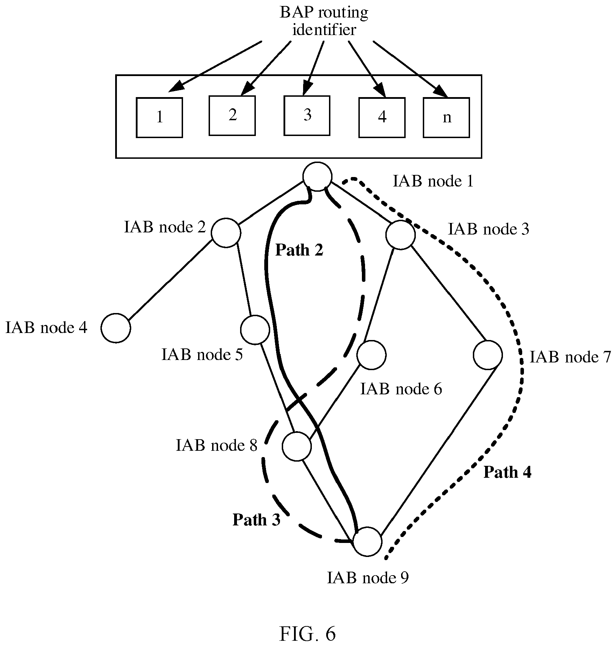

It should be noted that, in this application, for a data packet, there is one primary path (namely, the transmission path indicated by the BAP routing ID carried in the data packet), but there may be one or more backup paths. For a data packet, a backup path and a primary path are two different transmission paths, and at least one node on the two paths is different. In this application, from the perspective of IAB node #A, next-hop IAB node #C on a backup path of a data packet and next-hop IAB node #B on a primary path are not a same node. As shown in FIG. 6, assuming that a target address of a data packet is IAB node 9, a primary path of the data packet is path #2, and there may be two backup paths of the data packet, which are path #3 and path #4. If node 1 determines that the primary path is not available (not available) for the data packet, or that next-hop node 2 is not available, or that a wireless backhaul link between node 1 and next-hop node 2 is not available, IAB node 1 may further determine whether backup path #3 and/or backup path #4 are/is available (available), or determine whether IAB node 3 on the backup path is available (available), or determine whether a wireless backhaul link between IAB node 1 and next-hop IAB node 3 that is on the backup path is available. It should be noted that IAB node 1 in FIG. 6 may also be understood as an IAB donor or an IAB donor DU.

It should be noted that, in this application, the backup path may be preconfigured. For example, as shown in FIG. 6, for path #2, the IAB donor may pre-configure, on node 1, backup paths of path #2 as path #3 and path #4. Alternatively, the backup path may be determined by the first node based on a destination address of a data packet. For example, for a data packet that carries a BAP routing ID corresponding to path #2, the first node may determine that a destination address of the data packet is IAB node 9, and may determine, based on a routing table configured on the first node, transmission paths (for example, path #3 and path #4) whose destination addresses are IAB node 9. Then, the first node determines next-hop nodes on the backup paths of the data packet (where for example, next-hop nodes of IAB node 1 on path #4 and path #3 are both IAB node 3). In this application, for a node, a backup link of a data packet may be a link between the node and a next-hop node on a backup path of the data packet. For example, in the scenario shown in FIG. 6, for IAB node 1, a backup link of the data packet carrying the BAP routing ID corresponding to path #2 may be link #2 between IAB node 1 and IAB node 3.

It should be noted that in this application, the second node is a next-hop node of the first node on the primary path. If the primary path is available, it is determined that the next-hop node of the first node is the second node, in other words, this may be understood as that rerouting is not required, or rerouting is stopped; and a third node is a next-hop node of the first node on the backup path. If it is determined that the next-hop node of the first node is the third node, this may also be understood as that the primary path is not available, and rerouting needs to be performed. The second node may be a child node or a parent node of the first node. Similarly, the third node may also be a child node or a parent node of the first node.

When a data packet is transmitted to a next-hop node on a wireless backhaul link, the data packet needs to be mapped to a wireless backhaul RLC channel (backhaul RLC channel, BH RLC CH for short) for transmission to the next-hop node. One wireless backhaul link may have one or more different BH RLC CHs, and each BH RLC CH on the wireless backhaul link may provide a differentiated QoS guarantee. It should be noted that, in this application, for node #A, that "the primary path is not available" may be understood as that wireless backhaul link #1 between IAB node #A and next-hop IAB node #B of node #A on the primary path is not available, or may be understood as that next-hop IAB node #B of node #A is not available, or may be understood as that at least one of subsequent wireless backhaul links on the primary path is not available, or may be understood as that, for a specific data packet to be transmitted by IAB node #A, the next-hop node is not available or a wireless backhaul link between IAB node #A and the next-hop node is not available. For example, a link between IAB node #A and next-hop IAB node #B is not available for a data packet that includes BAP routing ID#1 on a BAP layer or that is to be mapped to BH RLC CH#1 for transmitting to next-hop IAB node #B. Details are not described below.

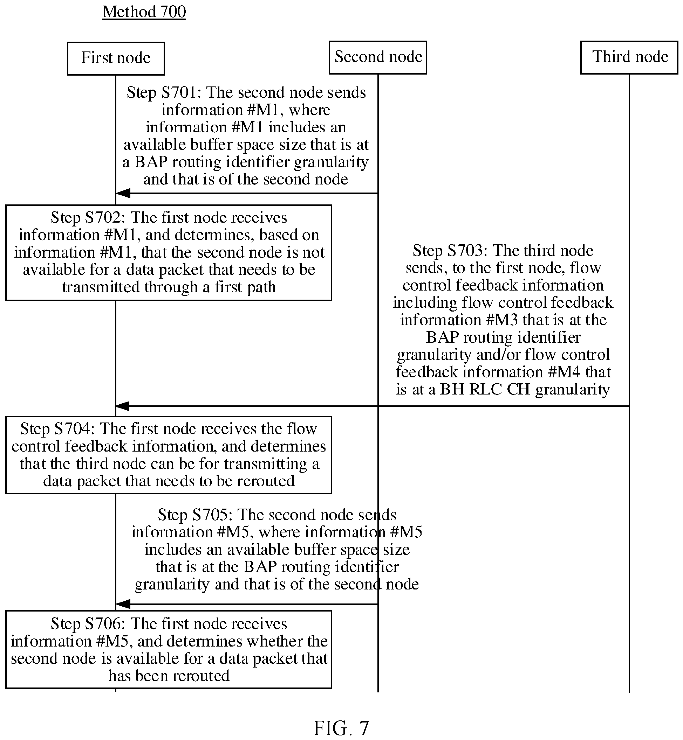

FIG. 7 shows a communication method according to this application. The method in FIG. 7 includes the following steps.

Step S701: A second node sends information #M1 to a first node, where information #M1 includes an available buffer space size that corresponds to BAP routing ID#1 and that is of the second node.

BAP routing ID#1 is used to identify a first path, and the second node is a next-hop node of the first node on the first path. For example, information #M1 may be flow control feedback information of the second node, and the flow control feedback information may include buffer status information at a BAP routing ID granularity, where the buffer status information includes an available buffer space size corresponding to BAP routing ID#1 of the first path.

In this application, because information #M1 sent by the second node includes the flow control feedback information, it may also be considered that information #M1 is fed back by the second node to the first node.

In this application, the first path may be considered as a primary path of a data packet carrying a BAP layer routing identifier as BAP routing ID#1, and a data packet that needs to be transmitted through the first path is a data packet whose transmission path indicated by the BAP layer routing identifier (for example, BAP routing ID#1) carried in a BAP layer header is the first path. It should be understood that there may be one or more data packets whose primary path is the first path.

Step S702: The first node receives information #M1, and determines, based on information #M1, that the second node is not available for the data packet that needs to be transmitted through the first path.

In this application, the first node may determine a next-hop node of the first node based on the available buffer space size that corresponds to BAP routing ID#1 and that is included in information #M1 sent by the second node. For example, in a possible implementation, if the available buffer space size that corresponds to BAP routing ID#1 and that is in information #M1 fed back by the second node is greater than threshold TH#1 (or may be equal to threshold TH#1), the first node may determine that the primary path of the data packet carrying BAP routing ID#1 is available, or the second node is available for the data packet carrying BAP routing ID#1, or a radio link between the first node and the second node is available for the data packet carrying BAP routing ID#1, so that the first node may determine that the data packet that needs to be transmitted through the first path is transmitted through the second node.

In another possible implementation, if the available buffer space size that corresponds to BAP routing ID#1 and that is in information #M1 fed back by the second node is less than or equal to threshold TH#1, the first node may determine that the primary path of the data packet carrying BAP routing ID#1 is not available, or the second node is not available for the data packet carrying BAP routing ID#1, or a radio link between the first node and the second node is not available for the data packet carrying BAP routing ID#1. In this case, the first node needs to select an appropriate backup link for the data packet carrying BAP routing ID#1. For example, if the first node may determine that a backup path can be for transmitting the data packet carrying BAP routing ID#1, and a next-hop node of the first node on the backup path is a third node, the first node may further determine to transmit, through the third node, the data packet that needs to be transmitted through the first path.

It should be noted that, in this application, determining performed by the first node when the value is equal to the threshold is not limited. In an example, if the available buffer space size corresponding to BAP routing ID#1 is equal to threshold TH#1, the first node may determine that the primary path of the data packet carrying BAP routing ID#1 is available. In this case, the first node determines, only when the available buffer space size corresponding to BAP routing ID#1 is less than threshold TH#1, that the primary path of the data packet carrying BAP routing ID#1 is not available. Alternatively, the first node may determine that the primary path of the data packet carrying BAP routing ID#1 is not available. In this case, the first node may determine, only when the available buffer space size corresponding to BAP routing ID#1 is greater than threshold TH#1, that the primary path of the data packet carrying BAP routing ID#1 is available. This is also applicable to a case in which the value is equal to the threshold described in the following specific examples.

In an example, flow control feedback information #M1 received by the first node may be at the BAP routing ID granularity. Specifically, refer to FIG. 1. It is assumed that the first node is IAB node 1, and the second node is IAB node 2. For data packet #P1 (or referred to as a first data packet) that carries BAP routing ID#1, the primary path is path #1: IAB node 1→IAB node 2→IAB node 4. If the available buffer space size that is fed back by IAB node 2 and that corresponds to BAP routing ID#1 is less than (or equal to) threshold TH#1, IAB node 1 may determine that the primary path of data packet #P1 is not available. This may also be understood as that, for data packet #P1 (namely, data packet #P1 that needs to be sent through path #1) whose primary path is path #1, link #1 is not available, or IAB node 2 is not available. Link #1 is the link between the first node and the second node.

In a possible implementation, the first node may receive M pieces of flow control feedback information of the second node in a period of continuous duration #T1, where M is a positive integer greater than or equal to 1, and the M pieces of flow control feedback information are available buffer space sizes that are at the BAP routing ID granularity and that are of the second node. It is assumed that N pieces in the M pieces of flow control feedback information include specific numeric values that are of available buffer space sizes corresponding to BAP routing ID#1 and that are {A1, A2, ..., AN} from the 1^{st} value to the N^{th} value (where Ax is an integer greater than 0, x is a positive integer, and 1≤x≤N), and N≤M. If each value in {A1, A2, ..., AN} is less than or equal to threshold TH#1, the first node may determine that for the data packet carrying BAP routing ID#1, congestion occurs on the second node. In this case, the first node needs to select an appropriate backup link for the data packet carrying BAP routing ID#1. For example, if the first node may determine that a backup path can be for transmitting the data packet carrying BAP routing ID#1, and a next-hop node of the first node on the backup path is the third node, the first node may further determine to transmit, through the third node, the data packet that needs to be transmitted through the first path.

In this application, the first node determines that for the data packet carrying BAP routing ID#1, congestion occurs on the second node. To be specific, the second node is not available for the data packet carrying BAP routing ID#1, or the primary path of the data packet carrying BAP routing ID#1 is not available, or link #1 between the first node and the second node is not available for the data packet carrying BAP routing ID#1. On the path (which may be considered as the primary path of the data packet carrying BAP routing ID#1) identified by BAP routing ID#1, the second node is the next-hop node of the first node. When determining that the next-hop node of the data packet on the primary path is not available for the data packet, the first node may reroute the data packet, to be specific, select the appropriate backup path for the data packet, and send the data packet to the next-hop node on the backup path.

In another possible implementation, the first node may receive M pieces of flow control feedback information of the second node in a period of continuous duration #T1, where M is a positive integer greater than or equal to 1, and the M pieces of flow control feedback information are available buffer space sizes that are at the BAP routing ID granularity and that are of the second node. It is assumed that N pieces in the M pieces of flow control feedback information include specific numeric values that are of available buffer space sizes corresponding to BAP routing ID#1 and that are {A1, A2, ..., AN} from the 1^{st} value to the N^{th} value (where Ax is an integer greater than 0, x is a positive integer, and 1≤x≤N), and N is a positive integer less than or equal to M. If at least Y numeric values in {A1, A2, ..., AN} are less than or equal to threshold TH#1, where Y is a positive integer that satisfies 1≤Y≤N, the first node may determine that for the data packet carrying BAP routing ID#1, congestion occurs on the second node. In this case, the first node needs to select an appropriate backup link for the data packet carrying BAP routing ID#1. For example, if the first node may determine that a backup path can be for transmitting the data packet carrying BAP routing ID#1, and a next-hop node of the first node on the backup path is the third node, the first node may further determine to transmit, through the third node, the data packet that needs to be transmitted through the first path.

For the foregoing two implementations in which the flow control feedback information is monitored in the period of continuous duration #T1 to determine whether the second node is available for the data packet carrying BAP routing ID#1, in an example, when the first node receives the flow control feedback information that is at the BAP routing ID granularity and that is sent by the second node, if an available buffer space value corresponding to BAP routing ID#1 is less than (or may be equal to) threshold TH#1, a timer (where for example, the timer is named as timer) is started for BAP routing ID#1. It is assumed that duration of the timer is T1=30s. If available buffer space values that correspond to BAP routing ID#1 and that are in flow control feedback information received within 30s after the timer is started are all less than (or equal to) threshold TH#1, the first node may determine that for the data packet carrying BAP routing ID#1, congestion occurs on the second node, and considers that the second node is not available for the data packet carrying BAP routing ID#1. If available buffer space values, corresponding to BAP routing ID#1, carried in X pieces in M pieces of updated flow control feedback information received from the next-hop node before the timer expires (in other words, within 30s after the timer is started) are all greater than (or equal to) threshold TH#1, where X is a positive integer that satisfies 1≤X≤M1, the first node may consider that the second node is still available for the data packet carrying BAP routing ID#1, may still select the second node as the next-hop node of the data packet carrying BAP routing ID#1, and may stop timing of the timer. Alternatively, if it is accumulated that available buffer space values (or numeric values), corresponding to BAP routing ID#1, carried in X pieces in updated flow control feedback information received from the next-hop node before the timer expires (in other words, within 30s after the timer is started) are all greater than (or equal to) threshold TH#1, where X is a positive integer, the first node may consider that the second node is still available for the data packet carrying BAP routing ID#1, may still select the second node as the next-hop node of the data packet carrying BAP routing ID#1, and may stop timing of the timer.

In this application, an available buffer space value at a granularity may also be described as an available buffer space size at a granularity, or an available buffer space numeric value at a granularity. Details are not described below again.

In an example, if M0 times of fed back available buffer space numeric values, corresponding to BAP routing ID#1, in M (where M is an integer greater than 1) times of flow control feedback information that are received by the first node and that are sent by the second node are less than (or equal to) threshold TH#1, or a proportion of a quantity of pieces of flow control feedback information to M is greater than (or equal to) RTH1, where such pieces of flow control feedback information are in the M times of flow control feedback information, and carry available buffer space numeric values that correspond to BAP routing ID#1 and that are less than (or equal to) threshold TH#1, and 0<RTH1≤1, the first node may determine that congestion occurs on the second node. Specifically, the M0 times may be consecutive M0 times or non-consecutive M0 times. M is an integer greater than or equal to 1, and M0 is less than or equal to M.

In an example, if available buffer space numeric values that correspond to BAP routing ID#1 and that are in M (where M is an integer greater than or equal to 1) times of flow control feedback information sent by the second node and received by the first node within running duration #T1 of the timer are all less than (or equal to) threshold TH#1, the first node may determine that for the data packet carrying BAP routing ID#1, congestion occurs on the second node. Specifically, the M0 times may be consecutive M0 times or non-consecutive M0 times.

In this application, timer duration #T1 of the first node may alternatively be configured by an IAB donor (or an IAB donor CU, or an IAB donor CP) for the first node through a radio resource control (radio resource control, RRC) message or an F1AP message. There may be a plurality of possible configuration manners.

Case 1: Duration #T1 may be configured on a per-BAP routing ID basis, in other words, configured duration #T1 may be different for different BAP routing ID values. Configuration information provided by the IAB donor for the first node may include a timer duration list, and each item in the list includes a specific value of one or more BAP routing IDs and a corresponding value of duration #T1.

Case 2: Duration #T1 may be configured on a per-next-hop node basis. To be specific, configured duration #T1 may be different for each next-hop node of the first node. However, for a same next-hop node, duration #T1 is applicable to all BAP routing IDs involved in flow control feedback information that is fed back by the next-hop node to the first node and that is at the BAP routing ID granularity. In this case, configuration information provided by the IAB donor needs to carry a value of one or more pieces of configured duration #T1, and further needs to indicate a next-hop node or some next-hop nodes, of the first node, to which each duration #T1 is specifically applicable. The next-hop node of the first node may be identified by a BAP address of the next-hop node.

Case 3: Duration #T1 may alternatively be configured by distinguishing between a BAP routing ID granularity and a BH RLC CH granularity, in other words, two different duration values are configured for feedback information at two different granularities. For example, duration of timers corresponding to all flow control feedback information at the BAP routing ID granularity is duration #T1, and duration of timers corresponding to all flow control feedback information at the BH RLC CH granularity is duration #T2. In this case, configuration information provided by the IAB donor needs to carry a value of configured timer duration, and further needs to indicate a granularity of flow control feedback information to which the timer duration is specifically applicable to, to be specific, specify whether the duration is duration corresponding to the flow control feedback information that is at the BAP routing ID granularity or duration corresponding to the flow control feedback information that is at the BH RLC CH granularity. For example, the configuration information provided by the IAB donor for the first node may carry a value of duration #T1 corresponding to the flow control feedback information that is at the BAP routing ID granularity, and duration #T1 is applicable to all different BAP routing IDs.

For configuration of duration #T1 in Case 3, there may also be a variant configuration manner, to distinguish between an uplink and a downlink for configuration of duration #T1. To be specific, when the first node is provided with duration-related configuration information for determining, based on the flow control feedback information, whether the next-hop node is available, the IAB donor specifies whether configured duration #T1 is specifically applicable to an uplink flow control feedback (hop-by-hop flow control feedback fed back by the parent node to the first node) or a downlink flow control feedback (hop-by-hop flow control feedback fed back by the child node to the first node). For example, in a variant 3a of Case 3, the IAB donor configures duration #T1-LTL-1 for all uplink flow control feedbacks that are at the BAP routing ID granularity, and configures duration #T1-DL-1 for all downlink flow control feedbacks that are at the BAP routing ID granularity.

In a possible implementation, the first node receives the flow control feedback information of the second node, where the flow control feedback information includes the available buffer space numeric value, for example, #B1, corresponding to BAP routing ID#1. If the first node detects that a data amount of a data packet that carries an adaptation layer routing identifier as BAP routing ID#1 and that has been sent to the second node is greater than or equal to #B1, the first node determines that the second node is not available for the data packet carrying the adaptation layer routing identifier as BAP routing ID#1.

In an example, the first node receives, from the second node, flow control feedback information #M1 that is at the BAP routing ID granularity, where flow control feedback information #M1 includes the available buffer space numeric value, for example, #B1, corresponding to BAP routing ID#1, and a data amount of a data packet that carries an adaptation layer routing identifier as BAP routing ID#1 and that has been sent by the first node to the second node within duration #TA1 before the first node receives flow control feedback information #M1 sent by the second node is greater than or equal to #B1. On this basis, the first node determines that the second node is not available (in other words, link #1 between the first node and the second node is not available) for the data packet that carries the adaptation layer routing identifier BAP routing ID#1 on a BAP layer. The first node may reroute the data packet carrying the adaptation layer routing identifier BAP routing ID#1, for example, select an available backup path, and send the data packet to a next-hop node on the backup path.

In another example, the first node receives, from the second node, flow control feedback information #M1 that is at the BAP routing ID granularity, where flow control feedback information #M1 includes the available buffer space numeric value, for example, #B1, corresponding to BAP routing ID#1, and a data amount of a data packet that carries an adaptation layer routing identifier as BAP routing ID#1 and that is sent by the first node to the second node within duration #TA2 after the first node receives flow control feedback information #M1 sent by the second node is greater than or equal to #B1. On this basis, the first node determines that the second node is not available (in other words, link #1 between the first node and the second node is not available) for the data packet that carries the adaptation layer routing identifier BAP routing ID#1 on a BAP layer. The first node may reroute the data packet carrying the adaptation layer routing identifier BAP routing ID#1, for example, select an available backup path, and send the data packet to a next-hop node on the backup path. Optionally, within duration #TA2 after the first node receives flow control feedback information #M1 sent by the second node, the first node has not received another piece of updated flow control feedback information that is at the BAP routing ID granularity and that is sent by the second node.

In still another example, the first node receives, from the second node, flow control feedback information #M1 that is at the BAP routing ID granularity, where flow control feedback information #M1 includes the available buffer space numeric value, for example, #B1, corresponding to BAP routing ID#1, and a data amount of a data packet that carries an adaptation layer routing identifier as BAP routing ID#1 and that is sent by the first node to the second node after the first node receives flow control feedback information #M1 reaches #B1. In this case, the first node may determine that the second node is not available (in other words, link #1 between the first node and the second node is not available) for the data packet that carries the adaptation layer routing identifier BAP routing ID#1 on a BAP layer. The first node may reroute the data packet carrying the adaptation layer routing identifier BAP routing ID#1, for example, select an available backup path, and send the data packet to a next-hop node on the backup path.

In yet another example, the first node receives, from the second node, flow control feedback information #M1 that is at the BAP routing ID granularity, where flow control feedback information #M1 includes the available buffer space numeric value, for example, #B1, corresponding to BAP routing ID#1, and a data amount of a data packet that carries an adaptation layer routing identifier as BAP routing ID#1 and that is sent by the first node to the second node reaches #B1, where the sending is performed after the first node receives flow control feedback information #M1 and before the first node receives another piece of updated flow control feedback information, at the BAP routing ID granularity, sent by the second node (in other words, when the first node has not received the another piece of updated flow control feedback information, at the BAP routing ID granularity, sent by the second node). In this case, the first node may determine that the second node is not available (in other words, link #1 between the first node and the second node is not available) for the data packet that carries the adaptation layer routing identifier BAP routing ID#1 on a BAP layer. The first node may reroute the data packet carrying the adaptation layer routing identifier BAP routing ID#1, for example, select an available backup path, and send the data packet to a next-hop node on the backup path.

In this application, timer duration #TA1 of the first node may alternatively be configured by the IAB donor (or the IAB donor CU, or the IAB donor CP) for the first node through an RRC message or an F1AP message. There may be a plurality of possible configuration manners.

Case 1: Duration #TA1 may be configured on a per-BAP routing ID basis, in other words, configured duration #TA1 may be different for different BAP routing ID values. Configuration information provided by the IAB donor for the first node may include a timer duration list, and each item in the list includes a specific value of one or more BAP routing IDs and a corresponding value of duration #TA1.

Case 2: Duration #TA1 may be configured on a per-next-hop node basis. To be specific, configured duration #TA1 may be different for each next-hop node of the first node. However, for a same next-hop node, duration #TA1 is applicable to all BAP routing IDs involved in flow control feedback information that is fed back by the next-hop node to the first node and that is at the BAP routing ID granularity. In this case, configuration information provided by the IAB donor needs to carry a value of one or more pieces of configured duration #TA1, and further needs to indicate a next-hop node or some next-hop nodes, of the first node, to which each duration #TA1 is specifically applicable. The next-hop node of the first node may be identified by a BAP address of the next-hop node.

Case 3: Configuration of duration #TA1 may alternatively be configuration of identical timer duration #TA1 for the feedback information that is at the BAP routing ID granularity. In other words, duration of timers corresponding to all flow control feedback information that is at the BAP routing ID granularity is duration #TA1. In this case, configuration information provided by the IAB donor needs to carry a value of configured timer duration #TA1, and further needs to indicate that timer duration #TA1 is specifically duration applicable to the flow control feedback information that is at the BAP routing ID granularity.

Similarly, for configuration of duration #TA1 in Case 3, there may also be a variant configuration manner, to distinguish between the uplink and the downlink for configuration of duration #TA1. To be specific, when the first node is provided with the duration-related configuration information for determining, based on the flow control feedback information, whether the next-hop node is available, the IAB donor specifies whether configured duration #TA1 is specifically applicable to the uplink flow control feedback (hop-by-hop flow control feedback fed back by the parent node to the first node) or the downlink flow control feedback (hop-by-hop flow control feedback fed back by the child node to the first node). For example, in a variant 3a of Case 3, the IAB donor configures duration #TA1-UL-1 for all uplink flow control feedbacks that are at the BAP routing ID granularity, and configures duration TA1-DL-1 for all downlink flow control feedbacks that are at the BAP routing ID granularity.

Manners of obtaining and configuring timer duration #TA2 are similar to those of duration #TA1. For details, refer to the foregoing descriptions of timer duration #TA1. Details are not described herein again.

In a possible implementation, the first node receives, from the second node, flow control feedback information #M1 that is at the BAP routing ID granularity, where flow control feedback information #M1 may include first indication information corresponding to BAP routing ID#1. The first indication information indicates that, for the data packet that carries the adaptation layer routing identifier BAP routing ID#1 on the BAP layer, congestion already occurs on the second node, in other words, the second node is not available for the data packet that carries the adaptation layer routing identifier BAP routing ID#1 on the BAP layer. Optionally, in flow control feedback information #M1, the first indication information may indicate that the second node is not available for a data packet corresponding to one or more different BAP routing IDs (including BAP routing ID#1), that is, the first indication information may correspond to a plurality of BAP routing IDs.

In a possible implementation, the first node receives second indication information, sent by the second node, indicating that the second node is attempting to perform link recovery. The second indication information indicates that a radio link failure (radio link failure, RLF) occurs between the second node and a next-hop node of the second node, and the second node is attempting to recover a connection to the next-hop node. In this case, the first node may consider that the second node is not available, or consider that the link between the first node and the second node is not available. The first node may reroute all data packets that originally need to be sent through the second node. In an example, refer to FIG. 1. If IAB node 4 needs to send a data packet to IAB node 1, a path indicated by a BAP routing ID carried in the data packet is IAB node 4→IAB node 2→IAB node 1. If IAB node 4 receives second indication information sent by IAB node 2, to be specific, IAB node 2 finds that an RLF occurs on a link between IAB node 2 and IAB node 1 and IAB node 2 is attempting to recover the link, node 4 may consider that a link between node 4 and IAB node 2 is not available, and cannot continue to send any data packet to IAB node 2.

In a possible implementation, if the flow control feedback information received by the first node and sent by the second node includes a flow control feedback report at a BAP routing ID granularity and a flow control feedback report at a BH RLC CH granularity, the first node may jointly determine, based on feedback information at the two granularities, a data packet for which congestion occurs on the second node and a data packet for which congestion does not occur on the second node, so as to determine next-hop nodes for different data packets.

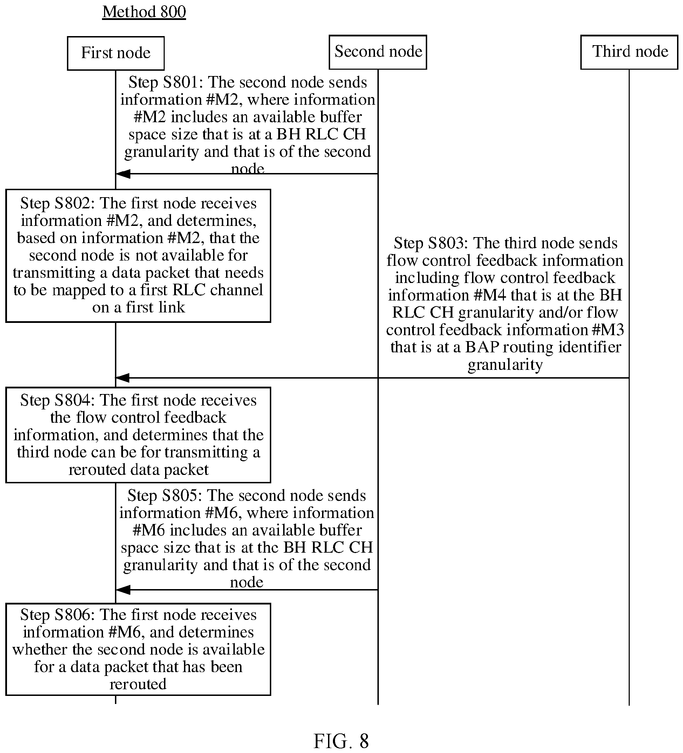

In an example, the first node receives at least two different BAP control PDUs (BAP control PDUs) from the second node, and the at least two different BAP control PDUs may be classified into two types of different BAP control PDUs respectively including flow control feedback information at two different granularities. One type of BAP control PDU includes the flow control feedback information at the BAP routing ID granularity. The first node determines, based on the flow control feedback information at the BAP routing ID granularity, that for the data packet carrying BAP routing ID#1, congestion occurs on the second node, and that the second node is not available for the data packet carrying BAP routing ID#1, and needs to reroute the data packet carrying BAP routing ID#1, where BAP routing ID#1 indicates path #1, and the data packet carrying BAP routing ID#1 may be considered as a data packet that needs to be transmitted on path #1. For details of a case in which the first node determines, based on the flow control feedback information at the BAP routing ID granularity, that for the data packet carrying BAP routing ID#1, congestion occurs on the second node, refer to descriptions of the foregoing plurality of possible implementations in step S702. Details are not described herein again. Besides, the other type of BAP control PDU includes the flow control feedback information at the BH RLC CH granularity. Based on the feedback information and threshold TH#2, the first node may determine a BH RLC CH data packet that is mapped to the link between the first node and the second node and for which the second node is not available, and determine a BH RLC CH data packet that is mapped to the link between the first node and the second node and for which the second node is still available. For details about how to perform determining based on the flow control feedback information at the BH RLC CH granularity, refer to descriptions of determining a next-hop node for a data packet (or determining whether to reroute the data packet) based on the flow control feedback information at the BH RLC CH granularity in step S802 in a method 800 in an embodiment corresponding to FIG. 8. Details are not described herein.

Based on the feedback information of the two different types, the first node determines the data packet for which congestion occurs on the second node, considers that the second node (or the link between the first node and the second node) is not available for the data packet, and needs to reroute the data packet. There may be the following four different manners, which are specifically as follows:
Manner 1: When determining the data packet for which the link between the first node and the second node is not available, the first node may perform determining based on an intersection set of determining results of the two types of feedback information. For example, if the first node determines, based on the flow control feedback information at the BAP routing ID granularity, that the second node is not available for a data packet carrying a routing identifier as BAP routing ID#1, and determines, based on the flow control feedback information at the BH RLC CH granularity, that the second node is not available for a data packet that needs to be mapped to BH RLC CH#1, where BH RLC CH#1 identifies a wireless backhaul RLC channel that is on a wireless backhaul link between the first node and the second node. Based on the determining results of the two types of feedback information, the first node may obtain the intersection set of the two types of data packets. To be specific, the first node may determine that the second node is not available for the data packet that carries the routing identifiers as BAP routing ID#1 and that needs to be mapped, according to a mapping rule, to BH RLC CH#1 for sending to the second node, and the first node needs to reroute the data packet. In this application, a BH RLC CH to which the first node maps a data packet for sending to the second node may be determined according to the mapping rule configured by the IAB donor, or may be determined based on configuration information that is of a default BH RLC CH and that is obtained by the first node.
Manner 2: When determining the data packet for which the link between the first node and the second node is not available, the first node may perform determining based on a union set of determining results of the two types of feedback information. For example, if the first node determines, based on the flow control feedback information at the BAP routing ID granularity, that the second node is not available for a data packet carrying a routing identifier as BAP routing ID#1, and determines, based on the flow control feedback information at the BH RLC CH granularity, that the second node is not available for a data packet that needs to be mapped to BH RLC CH#1, where BH RLC CH#1 identifies a wireless backhaul RLC channel that is on a wireless backhaul link between the first node and the second node. Based on the determining results of the two types of feedback information, the first node may obtain the union set of the two types of data packets. To be specific, the first node may determine that the second node is not available for a data packet that meets either type of the two types of data packets, in other words, the second node is not available for the data packet that carries the routing identifiers as BAP routing ID#1 or the data packet that needs to be mapped to BH RLC CH#1 for sending to the second node, and the first node needs to reroute the data packet.
Manner 3: Flow control feedback information corresponding to a routing identifier granularity is mainly used, in other words, the first node may perform determining based only on a result of the flow control feedback information at the BAP routing ID granularity. For example, the first node determines, based on the flow control feedback information at the BAP routing ID granularity, that the second node is not available for a data packet carrying a routing identifier as BAP routing ID#1, and determines, based on the flow control feedback information at the BH RLC CH granularity, that the second node is not available for a data packet that needs to be mapped to BH RLC CH#1, but is available for a data packet that needs to be mapped to BH RLC CH#2, where BH RLC CH#1 and BH RLC CH#2 respectively identify two wireless backhaul RLC channels that are on a wireless backhaul link between the first node and the second node. Based on determining results of the two types of feedback information, the first node determines, based only on the result of the flow control feedback information at the BAP routing ID granularity, whether the second node is available for a data packet. In other words, provided that a routing identifier carried in the data packet is BAP routing ID#1, the first node considers that the second node is not available for the data packet. For example, if a type of data packet is to be mapped, according to a mapping rule, to BH RLC CH#2 for transmission to the second node, but a routing identifier carried in the type of data packet is BAP routing ID#1, the first node considers that the second node is not available for the type of data packet. This may also be understood as that, in this case, a priority of the flow control feedback information corresponding to the routing identifier (BAP routing ID) granularity is high.
Manner 4: The flow control feedback information corresponding to the BH RLC CH granularity is mainly used, in other words, the first node may perform determining based only on a result of the flow control feedback information at the BH RLC CH granularity. For example, the first node determines, based on the flow control feedback information at the BAP routing ID granularity, that the second node is not available for a data packet carrying a routing identifier as BAP routing ID#1, but is available for a data packet carrying a routing identifier as BAP routing ID#2, and determines, based on the flow control feedback information at the BH RLC CH granularity, that the second node is not available for a data packet that needs to be mapped to BH RLC CH#1, but is available for a data packet that needs to be mapped to BH RLC CH#2, where BH RLC CH#1 and BH RLC CH#2 respectively identify two wireless backhaul RLC channels that are on a wireless backhaul link between the first node and the second node. Based on determining results of the two types of feedback information, the first node determines, based only on the result of the flow control feedback information at the BH RLC CH granularity, whether the second node is available for a data packet. In other words, provided that a next-hop node on a transmission path indicated by a routing identifier carried in the data packet is the second node, and the data packet is to be mapped to BH RLC CH#1 for sending to the second node, the first node considers that the second node is not available for the data packet. For example, if a type of data packet is to be mapped, according to a mapping rule, to BH RLC CH#1 for transmission to the second node, but a routing identifier carried in the type of data packet is BAP routing ID#2, the first node considers that the second node is not available for the type of data packet. This may also be understood as that, in this case, a priority of the flow control feedback information corresponding to the BH RLC CH granularity is high.

A specific decision manner used by the first node may be determined by the first node, or may be indicated by the second node to the first node. For example, the second node sends indication information to the first node, to indicate the first node to use any one of Manner 1 to Manner 4 to determine availability of the link between the first node and the second node for the data packet. Specifically, the indication information may be carried by a media access control (media access control, MAC) control element (control element, CE) or a BAP control PDU. Alternatively, the specific decision manner is determined based on a configuration of the IAB donor (or specifically, an IAB donor CU when the IAB donor is of a CU-DU separation architecture, or specifically, an IAB donor CU-CP when the CU is further of a CP-UP separation architecture). For example, the IAB donor CU provides configuration information for the first node through an RRC message or an F1AP message, to indicate the first node to use any one of Manner 1 to Manner 4 to determine availability of the link between the first node and the second node for the data packet. Optionally, if a manner of the configuration of the IAB donor is used, different manners may be configured for the first node on different links (between the first node and different second nodes). In this case, in addition to the indication information indicating a specific determining manner, the configuration information provided by the IAB donor for the first node may further carry an identifier of the second node.

In this application, in the first node, threshold TH#1 and/or TH#2, of the available buffer space size in the flow control feedback information, for determining availability of the second node may be configured by the IAB donor (or the IAB donor CU or the IAB donor CP) for the first node through an RRC message or an F1AP message. There may be a plurality of configuration manners.

Case 1: Threshold TH#1 may be configured on a per-BAP routing ID basis, in other words, the configured thresholds may be different for different BAP routing ID values. Configuration information provided by the IAB donor for the first node may include a threshold list, and each item (item) in the list includes a specific value of one or more BAP routing IDs and a corresponding value of threshold TH#1.

Case 2: Threshold TH#2 may be configured on a per-BH RLC CH basis, in other words, the configured thresholds may be different for different BH RLC CH values. Configuration information provided by the IAB donor for the first node may include a threshold list, and each item in the list includes an identifier of one or more BH RLC CHs and a corresponding value of threshold TH#2. In this application, an identifier of each BH RLC CH may be determined by both an identifier of a next-hop node and a BH RLC CH ID on a link between the first node and the next-hop node, where the identifier of the next-hop node may be a BAP address of the next-hop node.

Case 3: Threshold TH#1 may be configured on a per-next-hop node basis. To be specific, configured threshold TH#1 may be different for each next-hop node of the first node. However, for a same next-hop node, threshold TH#1 is applicable to all BAP routing IDs involved in flow control feedback information that is fed back by the next-hop node to the first node and that is at the BAP routing ID granularity. In this case, configuration information provided by the IAB donor needs to carry a value of one or more configured thresholds TH#1, and further needs to indicate a next-hop node or some next-hop nodes, of the first node, to which each threshold is specifically applicable. The next-hop node of the first node may be identified by a BAP address of the next-hop node.

Case 4: Threshold TH#2 may be configured on a per-next-hop node basis, in other words, configured threshold TH#2 may be different for each next-hop node of the first node. However, for a same next-hop node, threshold TH#2 is applicable to all BH RLC CHs involved in flow control feedback information that is fed back by the next-hop node to the first node and that is at the BH RLC CH granularity, or is applicable to all BH RLC CHs that are on a wireless backhaul link between the first node and the next-hop node. In this case, configuration information provided by the IAB donor needs to carry a value of one or more configured thresholds TH#2, and further needs to indicate a next-hop node or some next-hop nodes, of the first node, to which each threshold is specifically applicable. The next-hop node of the first node may be identified by a BAP address of the next-hop node.

Case 5: Threshold TH#1 or TH#2 may be configured as follows: The two different thresholds are configured based on a BAP routing ID granularity and a BH RLC CH granularity. For example, thresholds corresponding to all flow control feedback information at the BAP routing ID granularity are TH#1, and thresholds corresponding to all flow control feedback information at the BH RLC CH granularity are TH#2. In this case, configuration information provided by the IAB donor needs to carry a value of a configured threshold, and further needs to indicate a granularity of flow control feedback information to which the threshold is specifically applicable to, to be specific, specify whether the threshold is a threshold corresponding to the flow control feedback information that is at the BAP routing ID granularity or a threshold corresponding to the flow control feedback information that is at the BH RLC CH granularity. For example, the configuration information provided by the IAB donor for the first node may carry a value of threshold TH#1 corresponding to the flow control feedback information that is at the BAP routing ID granularity, where threshold TH#1 is applicable to all different BAP routing IDs; or the configuration information carries a value of threshold TH#2 corresponding to the flow control feedback information that is at the BH RLC CH granularity, where threshold TH#2 is applicable to all different BH RLC CHs between the first node and the next-hop node.

Case 6: Configuration of thresholds TH#1 and TH#2 may alternatively be configuration of same threshold TH#S for flow control feedbacks that are at two different granularities. In other words, configuration information provided by the IAB donor carries a value of configured threshold TH#S, and threshold TH#S is applicable to both the flow control feedback information at the BAP routing ID granularity and the flow control feedback information at the BH RLC CH granularity that are of the first node. It may be understood that threshold TH#S is applicable to all different BH RLC CHs between the first node and a next-hop node, and is further applicable to all different BAP routing IDs of the first node. In this case, the configuration information provided by the IAB donor needs to carry the value of configured threshold TH#S. Optionally, it may be further indicated in the configuration information that threshold TH#S is applicable to the two different types of flow control feedback information.

In this application, for configuration of the threshold in Case 5 and Case 6, there may also be a variant configuration manner, to distinguish between the uplink and the downlink for threshold configuration. To be specific, when the first node is provided with threshold-related configuration information for determining, based on the flow control feedback information, whether the next-hop node is available, the IAB donor specifies whether the configured threshold is specifically applicable to the uplink flow control feedback (hop-by-hop flow control feedback fed back by the parent node to the first node) or the downlink flow control feedback (hop-by-hop flow control feedback fed back by the child node to the first node). For example, in a variant 5a of Case 5, the IAB donor configures threshold TH-UL-1 for all uplink flow control feedbacks that are at the BAP routing ID granularity, configures corresponding threshold TH-LTL-2 for all uplink flow control feedbacks that are at the BH RLC CH granularity, configures threshold TH-DL-1 for all downlink flow control feedbacks that are at the BAP routing ID granularity, and configures corresponding threshold TH-DL-2 for all downlink flow control feedbacks that are at the BH RLC CH granularity. For another example, in a variant 6a of Case 6, the IAB donor configures a threshold TH-LTL for all uplink flow control feedbacks, and configures a threshold TH-DL for all downlink flow control feedbacks.

As described above, if the first node determines that the second node is not available for data packets of some BAP routing IDs, the first node may reroute these data packets, select an appropriate backup path, and then send these data packets to a next-hop node (for example, the third node) on the selected backup path.

In this case, optionally, embodiments of this application further include step S703: The third node sends flow control feedback information to the first node.

The flow control feedback information sent by the third node to the first node may include flow control feedback information #M3 that is at the BAP routing ID granularity and/or flow control feedback information #M4 that is at the BH RLC CH granularity.

For example, the first node may receive a BAP control PDU from the third node, where the BAP control PDU includes the flow control feedback information that is at the BAP routing ID granularity. The flow control feedback information at the BAP routing ID granularity includes a plurality of available buffer space values corresponding to different BAP routing IDs.

Step S704: The first node determines, based on the flow control feedback information sent by the third node, that the third node can be for transmitting a data packet that needs to be rerouted.

It may be understood that the data packet that needs to be rerouted by the first node may be the data packet that needs to be transmitted through the first path. The first path may be considered as the primary path of the data packet carrying the BAP layer routing identifier as BAP routing ID#1. In a possible implementation, the first node may determine, based on flow control feedback information #M3, that the third node can be for transmitting the data packet carrying the BAP layer routing identifier as BAP routing ID#1.

That the first node determines, based on information #M3, that the third node can be for transmitting the data packet carrying the BAP layer routing identifier as BAP routing ID#1 may also be understood as: The first node determines that the third node can be for transmitting the data packet that needs to be rerouted, where the data packet that needs to be rerouted is the data packet (for example, the data packet carrying the BAP layer routing identifier as BAP routing ID#1) that needs to be rerouted because the first node determines that the second node is not available in the foregoing step S702.

In a possible implementation, the first node receives flow control feedback information #M3 sent by the third node, where flow control feedback information #M3 may be the flow control feedback information that is at the BAP routing ID granularity, and includes the plurality of available buffer space values corresponding to different BAP routing IDs. One or more of these different BAP routing IDs include a same BAP address field of a destination node. For a BAP address, if a sum of available buffer space values, in #M3, corresponding to all BAP routing IDs that include the BAP address is greater than or equal to preset threshold TH#3, the first node may determine that the third node is available for a data packet whose destination node is the BAP address, or the third node may be used as a next-hop node on a backup path that can be selected when the first node reroutes a data packet whose destination node is the BAP address. Otherwise, if a sum of available buffer space values, in #M3, corresponding to all BAP routing IDs that include the BAP address is less than (or equal to) preset threshold TH#3, the first node may determine that the third node is not available for a data packet whose destination node is the BAP address. For example, in flow control feedback information #M3 sent by the third node to the first node, destination node fields of three BAP routing IDs (BAP routing ID#2, BAP routing ID#3, and BAP routing ID#4) are all BAP address #1, and a sum of available buffer space values respectively corresponding to the three BAP routing IDs is SumBAP address #1 (where SumBAP address #1 is an integer greater than or equal to 0) that is assumed to be A2 (where A2 is an integer greater than 0). If the sum SumBAP address#1 of available buffer space sizes corresponding to the BAP routing IDs whose BAP addresses are the same is greater than or equal to threshold TH#3, the first node may determine that the third node is available for the data packet whose destination node is BAP address 1, in other words, link #2 is available for the data packet whose destination node is BAP address 1. Link #2 is a wireless backhaul link between the first node and the third node. If a BAP address of a destination node carried in BAP routing ID#1 is also BAP address #1, when determining that the second node is not available for the data packet carrying the BAP layer routing identifier as BAP routing ID#1, the first node may select the third node as the next-hop node if the first node reroutes the data packet. Therefore, link #2 may also be understood as a backup link of the data packet that carries BAP layer routing identifier as BAP routing ID#1 and that needs to be rerouted. It may be understood that if SumBAP address #1 is less than (or equal to) threshold TH#3, the first node may consider that the third node is not available for the data packet whose destination node is BAP address 1, in other words, link #2 is not available for the data packet whose destination node is BAP address 1.

In an example, as shown in FIG. 6, it is assumed that at IAB node 1 (the first node), a path indicated by the BAP routing identifier BAP routing ID#1 included in a to-be-sent data packet is path 2. To be specific, a destination node of the data packet is IAB node 9, a primary path is path #2, and IAB node 1 has determined, based on flow control feedback information of IAB node 2 (the second node), that IAB node 2 is not available for the to-be-sent data packet, and IAB node 1 needs to reroute the to-be-sent data packet. In flow control feedback information, at the BAP routing ID granularity, received by IAB node 1 from IAB node 3 (the third node), an available buffer space value corresponding to BAP routing ID 3 is B3, and an available buffer space value corresponding to BAP routing ID 4 is B4, where BAP routing ID 3 is used to identify path 3 to IAB node 9, and BAP routing ID 4 is used to identify path 4 to IAB node 9. IAB node 1 pre-configures threshold TH#3. If a sum of B3 and B4 is greater than (or equal to) threshold TH#3 (or may be equal to threshold TH#3), IAB node 1 determines that a link between IAB node 1 and IAB node 3 is an available link for the data packet whose destination node identifier carried on a BAP layer is a BAP address of IAB node 9. IAB node 1 may reroute and send the to-be-sent data packet including BAP routing ID#1 to IAB node 3.

In this application, a granularity of threshold TH#3 preset on the first node may have the following plurality of possibilities. For example, threshold TH#3 may be at a granularity of a destination node (or a granularity of a target BAP address carried by a data packet on a BAP layer), in other words, different thresholds may be set for different target nodes. Alternatively, threshold TH#3 is at a granularity of the first node, in other words, the first node configures one threshold TH#3, and the threshold is applicable to different BAP addresses. Alternatively, threshold TH#3 may be at a granularity of a next-hop node, in other words, different next-hop nodes of the first node may have different thresholds TH#3, where threshold TH#3 corresponding to each next-hop node is applicable to all BAP addresses involved in flow control feedback information that is at the BAP routing ID granularity and that is fed back by the next-hop node to the first node.

In this application, a specific manner of obtaining threshold TH#3 is as follows: Threshold TH#3 may be pre-configured by the IAB donor (which may be the IAB donor CU or the IAB donor CU-CP) for the first node (for example, IAB node 1 in FIG. 6), and the IAB donor may specifically configure threshold TH#3 for the first node through an RRC message or an F1AP message. Alternatively, the third node (for example, IAB node 3 in FIG. 6) determines threshold TH#3 and notifies the first node of threshold TH#3 (where for example, the third node notifies the first node of threshold TH#3 through a BAP control PDU or a MAC CE). Alternatively, threshold TH#3 may be determined by the first node. Optionally, considering the plurality of possibilities of the granularity of threshold TH#3, if the first node obtains threshold TH#3 in a manner in which threshold TH#3 is configured by the IAB donor or notified by the third node, in a configuration message (used to configure threshold TH#3 for the first node) sent by the IAB donor to the first node or in a notification message (used to configure threshold TH#3 for the first node) sent by the third node to the first node, a specific granularity (the granularity of the destination node, the granularity of the next-hop node, or the granularity of the first node) of threshold TH#3 provided for the first node may be indicated. Further, optionally, if the first node obtains threshold TH#3 in the manner in which threshold TH#3 is configured by the IAB donor or notified by the third node, when thresholds TH#3 are at different granularities, an applicable range of each configured threshold TH#3 may be further specifically indicated in the configuration message sent by the IAB donor to the first node or the notification message sent by the third node to the first node. For example, if threshold TH#3 of the first node is at the granularity of the destination node, the configuration message (used to configure threshold TH#3 for the first node) sent by the IAB donor to the first node or the notification message (used to configure threshold TH#3 for the first node) sent by the third node to the first node carries a value of one or more different thresholds TH#3, and needs to indicate an identifier (namely, a BAP address of a destination node) of one or more destination nodes to which a value of each threshold TH#3 is applicable. For another example, if threshold TH#3 of the first node is at the granularity of the next-hop node, the configuration message (used to configure threshold TH#3 for the first node) sent by the IAB donor to the first node or the notification message (used to configure threshold TH#3 for the first node) sent by the third node to the first node carries a value of one or more different thresholds TH#3, and needs to indicate an identifier of one or more next-hop nodes to which a value of each threshold TH#3 is applicable.

Optionally, if the first node obtains threshold TH#3 in a manner in which threshold TH#3 is notified by the third node, the third node may obtain configuration information from the IAB donor (which may be the IAB donor CU or the IAB donor CU-CP) in advance, and the configuration information may include any one or more of the following content: a specific granularity of threshold TH#3 that is provided by the third node for the first node, and specific values of thresholds TH#3 that are at different granularities and that need to be provided by the third node for the first node and an applicable range of each threshold TH#3. The applicable range of each threshold TH#3 may be understood with reference to the descriptions in the previous paragraph.

In another possible implementation, the first node may receive W pieces of flow control feedback information of the third node in a period of continuous duration #T3, where W is a positive integer greater than or equal to 1, and the W pieces of flow control feedback information are available buffer space sizes that are at the BAP routing ID granularity and that are of the third node. It is assumed that, Z pieces in the W pieces of flow control feedback information include specific numeric values of available buffer space sizes corresponding to backup paths of a to-be-rerouted data packet. It is assumed that a target node of the to-be-rerouted data packet is a node identified by BAP address #1. Available buffer space values, corresponding to all BAP routing IDs including BAP address #1, in each of the Z pieces of flow control feedback information are summed, obtained results are {B1, B2, ..., BZ} from the first value to the Z^{th} value (where Bj is an integer greater than 0, j is a positive integer, and 1≤j≤Z), and Z≤W. If each of {B1, B2, ..., Bz} is greater than (or equal to) threshold TH#3, the first node may determine that the third node is available for the to-be-rerouted data packet, in other words, the third node may be used as a next-hop node on a backup path that can be selected when the first node reroutes the to-be-rerouted data packet. Otherwise, if any value in {B1, B2, ..., Bz} is less than (or equal to) threshold TH#3, the first node may determine that the third node is not available for the to-be-rerouted data packet. Alternatively, in still another possible implementation, if at least R values in {B1, B2, ..., Bz} are greater than (or equal to) threshold TH#3, where R is a positive integer that satisfies 1≤R≤Z, the first node may determine that the third node is available for the to-be-rerouted data packet, or the third node may be used as a next-hop node on a backup path that can be selected when the first node reroutes the to-be-rerouted data packet. Otherwise, if a quantity of values, in {B1, B2, ..., Bz}, greater than (or equal to) threshold TH#3 is less than R, the first node may determine that the third node is not available for the to-be-rerouted data packet. Alternatively, in still another possible implementation, if a result of summation of {B1, B2, ..., Bz} is greater than (or equal to) threshold TH#3, the first node may determine that the third node is available for the to-be-rerouted data packet. Otherwise, if a result of summation of {B1, B2, ..., Bz} is less than (or equal to) threshold TH#3, the first node may determine that the third node is not available for the to-be-rerouted data packet. Alternatively, in yet another possible implementation, if a quantity of values, in {B1, B2, ..., Bz}, greater than (or equal to) threshold TH#3 is Nabove, and a ratio of Nabove to Z is greater than (or equal to) threshold RTH5, where 0<RTH5 ≤ 1, the first node may determine that the third node is available for the to-be-rerouted data packet. Otherwise, if a ratio of Nabove to Z is less than threshold RTH5, the first node may determine that the third node is not available for the to-be-rerouted data packet.

In an example, the first node receives the flow control feedback information that is at the BAP routing ID granularity and that is sent by the third node.

The flow control feedback information includes an available buffer space value corresponding to one or more BAP routing IDs whose destination nodes fields are BAP address #1 (where for example, BAP addresses included in BAP routing ID#2 and BAP routing ID#3 are all BAP address #1). If an available buffer space value corresponding to a BAP routing ID whose destination node field is BAP address #1 exists, or if a sum of available buffer space values corresponding to several BAP routing IDs whose destination nodes fields are BAP address #1 is greater than threshold TH#3, a timer (where for example, the timer is named as timer) is started. It is assumed that duration of the timer is #T3=40s. If W pieces of flow control feedback information are received within 40s after the timer is started, where several (assumed to be Z) pieces of flow control feedback information include available buffer space values corresponding to BAP routing IDs whose destination nodes fields are BAP address#1, and a sum of available buffer space values, corresponding to BAP routing IDs whose destination nodes fields are BAP address#1, included in each of the Z pieces of flow control feedback information is greater than (or equal to) threshold TH#3, the first node may determine that the third node is available for the rerouted data packet whose destination node is BAP address#1. In other words, the third node may be for transmitting the to-be-rerouted data packet whose destination node is BAP address #1. Alternatively, before the timer expires (in other words, within 40s after the timer is started), if R pieces in W pieces of updated flow control feedback information received from the third node meet the following condition: A sum of available buffer space values, corresponding to BAP routing IDs whose destination nodes fields are BAP address# 1, included in each of the R pieces of flow control feedback information is greater than (or equal to) threshold TH#3 (where for example, R=2, one information includes an available buffer space value P corresponding to BAP routing ID#2, where P is greater than TH#3, and the other information includes an available buffer space value Q2 corresponding to BAP routing ID#2 and an available buffer space value Q3 corresponding to BAP routing ID#3, where a sum of Q2 and Q3 is greater than TH#3), and R is a positive integer that satisfies 1≤R≤W, the first node may consider that the third node is available for the rerouted data packet whose destination node is BAP address #1, may select the third node as the next-hop node of the data packet whose destination node is BAP address #1, and may stop timing of the timer. It should be noted that the R pieces of flow control feedback information may be R pieces of consecutive flow control feedback information or R pieces of non-consecutive flow control feedback information.

In this application, manners of obtaining and configuring duration #T3 by the first node are similar to the manners of obtaining and configuring duration #T1. Details are not described herein again.

In the foregoing embodiment, manners of obtaining and configuring W, Z, R, and RTHS about the flow control feedback information received by the first node is similar to the manners of obtaining and configuring threshold TH#1 above, and details are not described herein again.

In a possible implementation, the first node may determine, based on flow control feedback information #M4 that is at the BH RLC CH granularity and that is sent by the third node, that the third node can be for transmitting the data packet that needs to be rerouted.

It may be understood that the data packet that needs to be rerouted by the first node may be the data packet that needs to be transmitted through the first path. The first path may be considered as the primary path of the data packet carrying the BAP layer routing identifier as BAP routing ID#1.

In an example, as shown in FIG. 6, it is assumed that at IAB node 1 (the first node), a path indicated by the BAP routing identifier (for example, BAP routing ID#1) included in a to-be-sent data packet is path 2. To be specific, a destination node of the data packet is IAB node 9, a primary path is path #2, and IAB node 1 has determined, based on flow control feedback information of IAB node 2 (the second node), that IAB node 2 is not available for the to-be-sent data packet, and IAB node 1 needs to reroute the to-be-sent data packet. IAB node 1 receives, from IAB node 3 (the third node), the flow control feedback information that is at the BH RLC CH granularity, and further determines, based on the feedback information, whether the third node is available for the to-be-sent data packet (or referred to as the rerouted data packet). The first node determines, based on flow control feedback information #M4 that is at the BH RLC CH granularity and that is of the third node, whether the third node is available for the rerouted data packet (for example, the data packet carrying the BAP routing identifier as BAP routing ID#1). Specifically, there may be the following several possibilities, which are described below.

Possibility 1: An appropriate BH RLC CH (for example, BH RLC CH#02 on link #103) that needs to be mapped to is configured on a link (for ease of description, referred to as link #103 for short) between IAB node 1 (the first node) and IAB node 3 (the third node) for the data packet (for example, the data packet carrying the BAP routing identifier as BAP routing ID#1) that needs to be rerouted at the first node, that is, the first node is configured with a BH RLC CH to which the rerouted data packet needs to be mapped and that is on backup link #103. In this case, if an available buffer space value that corresponds to BH RLC CH#02 and that is in flow control feedback information #M4 sent by the third node is greater than (or equal to) threshold TH#4, the first node (IAB node 1) may determine that the third node (IAB node 3) is available for the rerouted data packet carrying the BAP routing identifier as BAP routing ID#1; otherwise, IAB node 1 may determine that IAB node 3 is not available for the rerouted data packet that carries the BAP routing identifier as BAP routing ID#1.

Possibility 2: An appropriate BH RLC CH that needs to be mapped to is not configured on link #103 between IAB node 1 and IAB node 3 for the data packet (for example, the data packet carrying the BAP routing identifier as BAP routing ID#1) that needs to be rerouted at IAB node 1, that is, the first node is not configured with a BH RLC CH to which the rerouted data packet needs to be mapped and that is on backup link #103. In this case, considering that the first node may select any BH RLC CH on link #103 to send the rerouted data packet to the third node when the first node determines that the rerouted data packet needs to be sent to the third node, if an available buffer space value, corresponding to any BH RLC CH, in flow control feedback information #M4 sent by the third node to the first node is greater than (or equal to) threshold TH#4, the first node (IAB node 1) may determine that the third node (IAB node 3) is available for the rerouted data packet carrying the BAP routing identifier as BAP routing ID#1. It may be understood that, if available buffer space values, corresponding to all BH RLC CHs, in #M4 are all less than (or equal to) threshold TH#4, IAB node 1 may determine that IAB node 3 is not available for the rerouted data packet carrying the BAP routing identifier as BAP routing ID#1.

Possibility 3: An appropriate BH RLC CH that needs to be mapped to is not configured on link #103 between IAB node 1 and IAB node 3 for the data packet (for example, the data packet carrying the BAP routing identifier as BAP routing ID#1) that needs to be rerouted at IAB node 1, that is, the first node is not configured with a BH RLC CH to which the rerouted data packet needs to be mapped and that is on backup link #103. In this case, considering that the first node may select any BH RLC CH on link #103 to send the rerouted data packet to the third node when the first node determines that the rerouted data packet needs to be sent to the third node, if a sum of available buffer space values, corresponding to all different BH RLC CHs, in flow control feedback information #M4 sent by the third node to the first node is greater than (or equal to) threshold TH#4, the first node (IAB node 1) may determine that the third node (IAB node 3) is available for the rerouted data packet carrying the BAP routing identifier as BAP routing ID#1. It may be understood that, if the sum of available buffer space values, corresponding to all BH RLC CHs, in #M4 is less than (or equal to) threshold TH#4, IAB node 1 may determine that IAB node 3 is not available for the rerouted data packet carrying the BAP routing identifier as BAP routing ID#1.

After IAB node 1 determines, in any one of the foregoing three possibilities, that the third node (IAB node 3) is available for the rerouted data packet carrying the BAP routing identifier as BAP routing ID#1, IAB node 1 may reroute and send the to-be-sent data packet including BAP routing ID#1 to IAB node 3.

In this application, a granularity of threshold TH#4 preset on the first node may have the following plurality of possibilities: For example, threshold TH#4 may be at the BH RLC CH granularity, in other words, different thresholds may be set for different BH RLC CHs on the link between the first node and the third node. Alternatively, threshold TH#4 is at the granularity of the first node, in other words, the first node is configured with threshold TH#4, and the threshold is applicable to all BH RLC CHs on links between the first node and all different next-hop nodes (or third nodes) on backup paths. Alternatively, threshold TH#4 may be at the granularity of the next-hop node, in other words, different next-hop nodes of the first node may have different thresholds TH#4, where threshold TH#4 corresponding to each next-hop node is applicable to all BH RLC CHs involved in flow control feedback information that is at the BH RLC CH granularity and that is fed back by the next-hop node to the first node.

In this application, a specific manner of obtaining threshold TH#4 is as follows: Threshold TH#4 may be pre-configured by the IAB donor (which may alternatively be the IAB donor CU or the IAB donor CU-CP) for the first node (for example, IAB node 1 in FIG. 6), and the IAB donor may specifically configure threshold TH#4 for the first node through an RRC message or an F1AP message. Alternatively, the third node (for example, IAB node 3 in FIG. 6) determines threshold TH#4 and notifies the first node of threshold TH#4 (where for example, the third node notifies the first node of threshold TH#4 through a BAP control PDU or a MAC CE). Alternatively, threshold TH#4 may be determined by the first node. Optionally, considering the plurality of possibilities of the granularity of threshold TH#4, if the first node obtains threshold TH#4 in a manner in which threshold TH#4 is configured by the IAB donor or notified by the third node, in a configuration message (used to configure threshold TH#4 for the first node) sent by the IAB donor to the first node or in a notification message (used to configure threshold TH#4 for the first node) sent by the third node to the first node, a specific granularity (the BH RLC CH granularity, the granularity of the next-hop node, or the granularity of the first node) of threshold TH#4 provided for the first node may be indicated. Further, optionally, if the first node obtains threshold TH#4 in the manner in which threshold TH#4 is configured by the IAB donor or notified by the third node, when thresholds TH#4 are at different granularities, an applicable range of each configured threshold TH#4 may be further specifically indicated in the configuration message sent by the IAB donor to the first node or the notification message sent by the third node to the first node. For example, if threshold TH#4 of the first node is at the BH RLC CH granularity, the configuration message (used to configure threshold TH#4 for the first node) sent by the IAB donor to the first node or the notification message (used to configure threshold TH#4 for the first node) sent by the third node to the first node carries a value of one or more different thresholds TH#4, and needs to indicate one or more BH RLC CHs to which a value of each threshold TH#4 is applicable, where each BH RLC CH may be specifically identified by a link identifier and a BH RLC CH ID together, and the link identifier may be indicated by an identifier (for example, a BAP address of a next-hop node) of the next-hop node of the first node. For another example, if threshold TH#4 of the first node is at the granularity of the next-hop node, the configuration message (used to configure threshold TH#4 for the first node) sent by the IAB donor to the first node or the notification message (used to configure threshold TH#4 for the first node) sent by the third node to the first node carries a value of one or more different thresholds TH#4, and needs to indicate an identifier (for example, a BAP address of a next-hop node) of one or more next-hop nodes to which a value of each threshold TH#4 is applicable.

Optionally, if the first node obtains threshold TH#4 in a manner in which threshold TH#4 is notified by the third node, the third node may obtain configuration information from the IAB donor (which may be the IAB donor CU or the IAB donor CU-CP) in advance, and the configuration information may include any one or more of the following content: a specific granularity of threshold TH#4 that is provided by the third node for the first node, and specific values of thresholds TH#4 that are at different granularities and that need to be provided by the third node for the first node and an applicable range of each threshold TH#4. The applicable range of each threshold TH#4 may be understood with reference to the descriptions in the previous paragraph.

It should be noted that, in this application, for a method for determining whether the backup path is available, refer to the method for determining whether the primary path is available in step S702. Details are not described again.

It should be noted that, when a to-be-transmitted data packet at the first node needs to be rerouted, but there are a plurality of (at least two) available backup links (or backup paths), the first node may randomly select one of the backup links (or backup paths) to reroute the data packet; or the IAB donor (which may alternatively be the IAB donor CU or the IAB donor CU-CP) may set different priorities for different backup links (or backup paths) and provide the priorities for the first node, and the first node selects a backup link (or a backup path) with a highest priority from a plurality of available backup links (or backup paths) to reroute the data packet. After selecting the backup link (or backup path) that is for rerouting the data packet, the first node transmits the rerouted data packet to a next-hop node corresponding to the backup link (or the backup path).

It should be noted that the backup link (or the backup link and the priority, or the backup path and the priority) may be configured at the BAP routing ID granularity.

In this application, that the first node determines whether to reroute a data packet may be specifically: In addition to determining whether a primary path of the data packet is available (or whether a first link on the primary path is available, or whether the next-hop node, namely, the second node, of the first node on the primary path is available), the first node further needs to determine whether the data packet has an available backup path (or whether there is an available backup link, or whether a next-hop node, namely, the third node, of the first node on the available backup path is available). If the first node determines that the primary path of the data packet is not available and at least one backup path is available, the first node may reroute the data packet (to be specific, select the backup path and send the data packet to a next-hop node that is on the backup path). Otherwise, the first node does not perform a rerouting operation on the data packet.

It should be noted that, in this application, the first node may simultaneously receive the flow control feedback information sent by the second node and the flow control feedback information sent by the third node. Alternatively, the first node first receives the flow control feedback information sent by the third node, and then receives the flow control feedback information of the second node. This may also be understood as that a relative sequence between step S703 and step S704 and the foregoing step S701 and step S702 is not limited. In this application, step S701 and step S702 may form a separate embodiment for determining whether a primary path of a data packet is available and a data packet that needs to be rerouted. Step S703 and step S704 are optional steps, or may form a separate embodiment for determining whether a backup link of a data packet is available.

In this application, after determining that the second node is not available, and determining that the next-hop node is the third node, the first node may further continue to monitor a buffer status of the second node, to determine whether the second node is available. This may also be understood as that the first node (which may be specifically the IAB node or the IAB donor DU) may further cancel rerouting of the data packet after congestion on a primary path of the data packet is relieved, so that the data packet can continue to be transmitted on the primary path. For example, when rerouting the data packet, the first node may start a timer (for example, a timer T-routing back), so as to monitor whether congestion on the second node is relieved, and determine whether the second node can continue to be used.

In this case, optionally, this embodiment of this application further includes step S705 and step S706. Detailed descriptions are as follows:
Step S705: The first node receives information #M5 sent by the second node.

Information #M5 may be the flow control feedback information sent by the second node. The flow control feedback information may be the flow control feedback information at the BAP routing ID granularity, and includes the available buffer space size corresponding to BAP routing ID#1 (indicating the first path, where the first path is the primary path of the data packet, and the next-hop node on the primary path is the second node).

Step S706: The first node determines, based on information #M5, whether the second node is available for the data packet that carries BAP routing ID#1 and that has been rerouted.

If the first node determines, based on information #M5, that the second node is available for the data packet that carries BAP routing ID#1 and that has been rerouted, the first node may stop rerouting of a to-be-transmitted data packet carrying BAP routing ID#1, but perform routing selection based on a BAP routing ID part in a data packet header, and send such type of data packets to the second node. Otherwise, the first node may continue to reroute such type of data packets.

During specific execution, if the first node has determined, based on the descriptions of step S702, that the link between the first node and the second node is not available for the data packet carrying BAP routing ID#1, and has rerouted the data packet carrying BAP routing ID#1 (which may also be understood as selecting another backup path for transmission, for example, sending the data packet to the third node), if an available buffer space numeric value, corresponding to BAP routing ID#1, in updated flow control feedback information #M5 that is of the second node and that is received by the first node is greater than (or equal to) threshold TH#5, the first node may consider that the link between the first node and the second node has been available for the data packet carrying BAP routing ID#1, and when the first node performs routing selection, the first node may route the data packet to the second node again, to be specific, cancel rerouting of the data packet, and continue to send the data packet to the second node.

In an example, the first node may determine, based on threshold TH#5 and a rerouting recovery timer (where for example, the timer is named as T-routing back#1), whether an executed rerouting mechanism needs to be stopped. If the first node has determined, based on the descriptions of step S702, that the link between the first node and the second node is not available for the data packet carrying BAP routing ID#1, after the first node has rerouted the data packet carrying BAP routing ID#1 (which may also be understood as selecting another backup path for transmission, for example, sending the data packet to the third node), if available buffer space numeric values, corresponding to BAP routing ID#1, in one or more pieces of updated flow control feedback information that are sent by the second node and that are received by the first node in duration in which timer T-routing back#1 runs are all greater than (or equal to) threshold TH#5, the first node may consider that the second node has been available for the data packet carrying BAP routing ID#1, in other words, may consider that the link between the first node and the second node has been available for the data packet carrying BAP routing ID#1, and when the first node performs routing selection, the first node may route the data packet to the second node again, to be specific, cancel rerouting of the data packet, and continue to send the data packet to the second node.

In another example, if the first node has determined, based on the descriptions in step S702, that the link between the first node and the second node is not available for the data packet carrying BAP routing ID#1, after the first node has rerouted the data packet carrying BAP routing ID#1 (which may also be understood as selecting another backup path for transmission, for example, sending the data packet to the third node), the first node receives T pieces of flow control feedback information of the second node within a period of continuous duration #T4, T is a positive integer greater than or equal to 1, and the T pieces of flow control feedback information are available buffer space sizes that are at the BAP routing ID granularity and that are of the second node. It is assumed that S pieces in the T pieces of flow control feedback information include specific numeric values that are of available buffer space sizes corresponding to BAP routing ID#1 and that are {C1, C2, ..., CS} from the first value to the S^{th} value (where Cx is an integer greater than 0, x is a positive integer, and 1≤x≤S). S is a positive integer less than or equal to T. If each numeric value in {C1, C2, ..., CS} is greater than (or equal to) threshold TH#5, the first node may consider that the second node has been available for the data packet carrying BAP routing ID#1. In other words, the first node may consider that the link between the first node and the second node has been available for the data packet carrying BAP routing ID#1, and when the first node performs routing selection, the first node may route the data packet to the second node again, to be specific, cancel rerouting of the data packet, and continue to send the data packet to the second node.

In still another example, if the first node has determined, based on the descriptions in step S702, that the link between the first node and the second node is not available for the data packet carrying BAP routing ID#1, after the first node has rerouted the data packet carrying BAP routing ID#1 (which may also be understood as selecting another backup path for transmission, for example, sending the data packet to the third node), the first node receives T pieces of flow control feedback information of the second node within a period of continuous duration #T4, T is a positive integer greater than or equal to 1, and the T pieces of flow control feedback information are available buffer space sizes that are at the BAP routing ID granularity and that are of the second node. It is assumed that S pieces in the T pieces of flow control feedback information include specific numeric values that are of available buffer space sizes corresponding to BAP routing ID#1 and that are {C1, C2, ..., CS} from the first value to the S^{th} value (where Cx is an integer greater than 0, x is a positive integer, and 1≤x≤S). S is a positive integer less than or equal to T. If at least V numeric values in {C1, C2, ..., CS} are greater than or equal to threshold TH#5, where V is a positive integer that satisfies 1≤V≤S, the first node may consider that the second node has been available for the data packet carrying BAP routing ID#1. In other words, the first node may consider that the link between the first node and the second node has been available for the data packet carrying BAP routing ID#1, and when the first node performs routing selection, the first node may route the data packet to the second node again, to be specific, cancel rerouting of the data packet, and continue to send the data packet to the second node.

For the foregoing two implementations in which the flow control feedback information is monitored in the period of continuous duration #T4 to determine whether the second node is available for the data packet carrying BAP routing ID#1, in an example, when the first node receives the flow control feedback information that is at the BAP routing ID granularity and that is sent by the second node, if the available buffer space value corresponding to BAP routing ID#1 is greater than (or equal to) threshold TH#5, a timer (where for example, the timer is named as timer) is started for BAP routing ID#1. It is assumed that duration of the timer is #T1=35s. If available buffer space values that correspond to BAP routing ID#1 and that are in flow control feedback information received within 35s after the timer is started are all greater than (or equal to) threshold TH#5, the first node may consider that the second node has been available for the data packet carrying BAP routing ID#1. Alternatively, if available buffer space values, corresponding to BAP routing ID#1, carried in J pieces in T pieces of updated flow control feedback information received from the next-hop node before the timer expires (in other words, within 35s after the timer is started) are all greater than (or equal to) threshold TH#5, where J is a positive integer that satisfies 1≤J≤T, the first node may consider that the second node is still available for the data packet carrying BAP routing ID#1. Alternatively, if it is accumulated that available buffer space values (or numeric values), corresponding to BAP routing ID#1, carried in J pieces in updated flow control feedback information received from the next-hop node before the timer expires (in other words, within 35s after the timer is started) are all greater than (or equal to) threshold TH#5, where J is a positive integer, the first node may consider that the second node is still available for the data packet carrying BAP routing ID#1, and when the first node performs routing selection, the first node may route the data packet to the second node again, to be specific, cancel rerouting of the data packet, continue to send the data packet to the second node, and may stop timing of the timer.

In this application, manners of obtaining and configuring duration #T4 by the first node are similar to the manners of obtaining and configuring duration #T1. Details are not described herein again.

In an example, if T1 times of fed back available buffer space numeric values, corresponding to BAP routing ID#1, in T (where T is an integer greater than 1) times of flow control feedback information received by the first node and sent by the second node are greater than (or equal to) threshold TH#5, or a proportion of a quantity of pieces of flow control feedback information to T is greater than (or equal to) RTH2, where such pieces of flow control feedback information are in the T times of flow control feedback information, and carry available buffer space numeric values that correspond to BAP routing ID#1 and that are greater than (or equal to) threshold TH#5, and 0<RTH2≤1, the first node determines that the second node has been available. Specifically, the T1 times may be consecutive T1 times or non-consecutive T1 times. T1 is less than or equal to T.

In this application, in the first node, threshold TH#5, of the available buffer space in the flow control feedback information, for determining availability of the second node may be configured by the IAB donor (or the IAB donor CU or the IAB donor CP) for the first node through an RRC message or an F1AP message. There may be a plurality of configuration manners.

Case 1: Threshold TH#5 may be configured on a per-BAP routing ID basis, in other words, the configured thresholds may be different for different BAP routing ID values. Configuration information provided by the IAB donor for the first node may include a threshold list, and each item (item) in the list includes a specific value of one or more BAP routing IDs and a corresponding value of threshold TH#5.

Case 2: Threshold TH#5 may be configured on a per-next-hop node basis. To be specific, configured threshold TH#5 may be different for each next-hop node of the first node. However, for a same next-hop node, threshold TH#5 is applicable to all BAP routing IDs involved in flow control feedback information that is fed back by the next-hop node to the first node and that is at the BAP routing ID granularity. In this case, configuration information provided by the IAB donor needs to carry a value of one or more configured thresholds TH#5, and further needs to indicate a next-hop node or some next-hop nodes, of the first node, to which each threshold is specifically applicable. The next-hop node of the first node may be identified by a BAP address of the next-hop node.

Case 3: Threshold TH#5 may also be configured for the flow control feedback information at the BAP routing ID granularity. For example, thresholds corresponding to all flow control feedback information that is at the BAP routing ID granularity are all TH#5. In this case, configuration information provided by the IAB donor needs to carry a value of configured threshold TH#5, and further needs to indicate that the threshold is specifically applicable to the flow control feedback information that is at the BAP routing ID granularity. For example, the configuration information provided by the IAB donor for the first node may carry the value of threshold TH#5 corresponding to the flow control feedback information that is at the BAP routing ID granularity, and threshold TH#5 is applicable to all different BAP routing IDs.

In this application, for configuration of the threshold in Case 3, there may also be a variant configuration manner, to distinguish between the uplink and the downlink for threshold configuration. To be specific, when the first node is provided with threshold-related configuration information for determining, based on the flow control feedback information, whether the next-hop node is available, the IAB donor specifies whether the configured threshold is specifically applicable to the uplink flow control feedback (hop-by-hop flow control feedback fed back by the parent node to the first node) or the downlink flow control feedback (hop-by-hop flow control feedback fed back by the child node to the first node). For example, in a variant 3a of Case 3, the IAB donor configures threshold TH#5-UL-1 for all uplink flow control feedbacks that are at the BAP routing ID granularity, and configures threshold TH#5-DL-1 for all downlink flow control feedbacks that are at the BAP routing ID granularity.

Similarly, in the foregoing embodiment, manners of obtaining and configuring T, T1, S, J, V, and RTH2 about the flow control feedback information received by the first node is similar to the manners of obtaining and configuring threshold TH#1 above, and details are not described herein again.

Similarly, in the foregoing embodiment, manners of obtaining and configuring X, Y, M, N, and B1 involved in a case in which the first node determines, based on the flow control feedback information, whether the second node is available is similar to the manners of obtaining and configuring threshold TH#1 above, and details are not described herein again.

For the foregoing implementation in which the flow control feedback information is monitored based on threshold TH#5 and the rerouting recovery timer to determine whether the second node is available for the data packet that carries BAP routing ID#1 and that has been rerouted, a starting operation of the rerouting recovery timer may be as follows: In an example, after determining in step S702 that the second node is not available for the data packet carrying BAP routing ID#1, the first node may start timer T-routing back#1 to monitor a congestion relief status of the second node. Alternatively, after determining in step S702 that the second node is not available for the data packet carrying BAP routing ID#1, the first node may start timer T-routing back#1 when an available buffer space numeric value that is in received updated flow control feedback information sent by the second node and that corresponds to a BAP routing ID (for example, BAP routing ID#1) carried in the data packet that is rerouted is greater than (or equal to) threshold TH#5. An operation of stopping the rerouting recovery timer may be specifically: if an available buffer space numeric value that corresponds to BAP routing ID#1 and that is in updated flow control feedback information, of the second node, received by the first node before rerouting recovery timer T-routing back#1 expires is less than (or equal to) threshold TH#1, stopping timing of timer T-routing back#1. That is, if detecting that the available buffer space size in the flow control feedback information is less than threshold TH#1, the first node considers that the second node is still not available for the data packet carrying BAP routing ID#1. In this case, the first node may continue to perform a rerouting operation on the data packet.

In this application, duration of the rerouting recovery timer T-routing back#1 of the first node may alternatively be configured by the IAB donor (or the IAB donor CU, or the IAB donor CP) for the first node through an RRC message or an F1AP message. There may be a plurality of possible configuration manners.

Case 1: The duration of timer T-routing back#1 may be configured on a per-BAP routing ID basis, in other words, the configured duration of the timer T-routing back may be different for different BAP routing ID values. Configuration information provided by the IAB donor for the first node may include a timer duration list, and each item in the list includes a specific value of one or more BAP routing IDs and a corresponding value of the duration of the timer T-routing back.

Case 2: The duration of timer T-routing back#1 may be configured on a per-next-hop node basis. To be specific, the configured duration of the timer T-routing back may be different for each next-hop node of the first node. However, for a same next-hop node, the duration of T-routing back#1 is applicable to all BAP routing IDs involved in flow control feedback information that is fed back by the next-hop node to the first node and that is at the BAP routing ID granularity. In this case, configuration information provided by the IAB donor needs to carry a value of one or more pieces of configured duration of T-routing back#1, and further needs to indicate a next-hop node or some next-hop nodes, of the first node, to which each duration of T-routing back#1 is specifically applicable. The next-hop node of the first node may be identified by a BAP address of the next-hop node.

Case 3: Configuration of the duration of timer T-routing back#1 may alternatively be configuration of one duration value for the feedback information that is at the BAP routing ID granularity. In other words, duration of timers corresponding to all flow control feedback information that is at the BAP routing ID granularity is the duration of T-routing back#1. In this case, the configuration information provided by the IAB donor needs to carry a value of configured duration of timer T-routing back#1, and further needs to indicate that the timer duration is specifically corresponding duration applicable to the flow control feedback information that is at the BAP routing ID granularity. For example, the configuration information provided by the IAB donor for the first node may carry the value of the duration, of timer T-routing back#1, corresponding to the flow control feedback information that is at the BAP routing ID granularity. The duration of timer T-routing back#1 is applicable to all different BAP routing IDs.

For configuration of the duration of timer T-routing back#1 in Case 3, there may also be a variant configuration manner, to distinguish between the uplink and the downlink for configuration of the duration of timer T-routing back#1. To be specific, when the first node is provided with duration-related configuration information for determining, based on the flow control feedback information, whether the next-hop node is available, the IAB donor specifies whether the configured duration of timer T-routing back#1 is specifically applicable to an uplink flow control feedback (hop-by-hop flow control feedback fed back by the parent node to the first node) or a downlink flow control feedback (hop-by-hop flow control feedback fed back by the child node to the first node). For example, in a variant 3a of Case 3, the IAB donor configures duration T-routing back#1-UL-1 of the timer T-routing back for all uplink flow control feedbacks that are at the BAP routing ID granularity, and configures duration T-routing back#1-DL-1 for all downlink flow control feedbacks that are at the BAP routing ID granularity.

In this application, threshold TH#5 may be greater than or equal to threshold TH#1. For example, threshold TH#5 is set to be greater than threshold TH#1, so that frequent switching of a determining result of the first node for the second node can be reduced, thereby saving resources.

In a possible implementation, the first node receives fifth indication information of the second node, where the fifth indication information indicates that the link is successfully restored, or the first node receives sixth indication information of the second node, where the sixth indication information indicates that the second node is available for the data packet that carries the adaptation layer routing identifier BAP routing ID#1 on the BAP layer. In this case, the first node may consider that the second node has been available for the data packet carrying BAP routing ID#1, or consider that the link between the first node and the second node has been available for the data packet carrying BAP routing ID#1. When performing routing selection, the first node may reroute the data packet to the second node again, to be specific, cancel rerouting of the data packet, and continue to send the data packet to the second node.

In other words, in this application, for the feedback information of the second node, whether the data packet needs to be rerouted may be flexibly determined, and after the rerouting, the buffer status of the second node may be further detected, so as to ensure that after congestion of the primary path is relieved, the primary path can be used as soon as possible to transmit the data packet.

According to the communication method provided in this application, the first node may perform rerouting the data packet based on received flow control feedback information when a link is congested. In this way, link congestion can be relieved, and an average transmission delay of the data packet can be reduced, thereby improving user experience.

FIG. 8 shows a communication method according to this application. The method in FIG. 8 includes the following steps.

Step S801: A second node sends information #M2 to a first node, where information #M2 includes an available buffer space size that corresponds to BH RLC CH#1 and that is of the second node.

BH RLC CH#1 is used to identify a first radio link control channel on link #1 between the first node and the second node, and the second node is a next-hop node of the first node on a first link. For example, information #M2 may be flow control feedback information of the second node, and the flow control feedback information may include an available buffer space size corresponding to the first radio link control channel on the first link.

In this application, service data or signaling corresponding to different types may be mapped by the first node to different transmission channels for transmission to the next-hop node. The transmission channel herein may be a backhaul RLC channel (BH RLC CH) between the first node and the next-hop node. If the second node feeds back, in the flow control feedback information, buffer information that is at a BH RLC CH granularity, this may be understood as that the second node feeds back available buffer space sizes that correspond to different BH RLC channels on link #1 and that are in a buffer status of the second node, and an available buffer space size corresponding to each BH RLC CH reflects a value of a maximum data amount of a data packet that can be sent by the first node to the second node through the BH RLC CH on link #1. The flow control feedback information, at the BH RLC CH granularity, of the second node may include one or more available buffer space sizes corresponding to one or more BH RLC CHs. For example, there are three radio link control channels on link #1, which are BH RLC CH#1, BH RLC CH#2, and BH RLC CH#3. Flow control feedback information #M2 of the second node may include an available buffer space size corresponding to BH RLC CH#1, and may further include an available buffer space size corresponding to BH RLC CH#2 and/or an available buffer space size corresponding to BH RLC CH#3.

Step S802: The first node receives information #M2, and determines, based on information #M2, that the second node is not available for transmitting a data packet that needs to be mapped to the first radio link control channel on the first link.

A first data packet is the data packet that needs to be mapped to the first radio link control channel on the first link, a primary path of the first data packet is a first path, and the second node is a next-hop node of the first node on the first path. In other words, if the first node performs routing selection based on a BAP routing ID carried in the first data packet, the first node needs to send the first data packet to the second node, and according to a mapping rule configured by the first node, the first node needs to map the first data packet to the first radio link control channel on the first link for sending to the second node. Therefore, the first data packet may also be considered as a data packet that is in to-be-sent data packets at the first node and that originally needs to be mapped to BH RLC CH#1 for sending to the second node.

In this application, the first link is a link between the first node and the second node.

In this application, the first node may determine, based on the available buffer space size that corresponds to BH RLC CH#1 and that is included in information #M2 sent by the second node, a next-hop node that is of the first node and that is for transmitting the first data packet. For example, in a possible implementation, if the available buffer space size that corresponds to BH RLC CH#1 and that is in information #M2 fed back by the second node is greater than threshold TH#2 (or may be equal to threshold TH#2), the first node may determine that the second node is available for the data packet mapped to BH RLC CH#1 that is on the link between the first node and the second node, or determine that the radio link between the first node and the second node is available for the data packet corresponding to BH RLC CH#1. In this way, the first node may determine to transmit the first data packet through the second node.

In another possible implementation, if the available buffer space size that corresponds to BH RLC CH#1 and that is in information #M2 fed back by the second node is less than or equal to threshold TH#2, the first node may determine that the second node is not available for the data packet that needs to be mapped to BH RLC CH#1 that is on the link between the first node and the second node, or determine that the radio link between the first node and the second node is not available for the data packet corresponding to BH RLC CH#1. In this case, the first node needs to select an appropriate backup link for the data packet that originally needs to be mapped to BH RLC CH#1 for transmitting to the second node. For example, according to the foregoing descriptions, it can be learned that the first data packet is the data packet that originally needs to be mapped to BH RLC CH#1 for transmitting to the second node. If the first node may determine that a backup path (for example, a second path) can be for transmitting the first data packet, the backup path and the primary path of the first data packet have a same target node, and a next-hop node of the first node on the backup path is a third node, the first node may further determine to transmit the first data packet through the third node. In this application, that the backup path and the primary path have a same target node may mean: BAP address fields of target nodes included in a BAP routing ID used to identify the backup path and a BAP routing ID used to identify the primary path are the same, that is, the backup path and the primary path have the same target node on a wireless backhaul link; or the backup path and the primary path have the same target node on an IP layer.

In this application, it should be understood that, that the first node selects an appropriate backup link for the data packet that originally needs to be mapped to BH RLC CH#1 for transmission to the second node may be understood as: The first node selects an appropriate backup path for the data packet, where the backup link of the data packet is a link between the first node and a next-hop node on the backup path.

It should be noted that, in this embodiment, determining performed when a value is equal to a threshold is also not limited. In an example, when the available buffer space size corresponding to BH RLC CH#1 is equal to threshold TH#2, the first node may determine that the second node is available for the data packet mapped to BH RLC CH#1 that is on the link between the first node and the second node, where in this case, only when the available buffer space size corresponding to BH RLC CH#1 is less than threshold TH#2, the first node may determine that the second node is not available for the data packet mapped to BH RLC CH#1 that is on the link between the first node and the second node; or the first node may determine that the second node is not available for the data packet mapped to BH RLC CH#1 that is on the link between the first node and the second node, where in this case, only when the available buffer space size corresponding to BH RLC CH#1 is greater than threshold TH#2, the first node may determine that the second node is available for the data packet mapped to BH RLC CH#1 that is on the link between the first node and the second node. This is also applicable to a case in which the value is equal to the threshold described in the following specific examples.

In an example, flow control feedback information #M2 received by the first node may be at the BH RLC CH granularity. Specifically, refer to FIG. 1. It is assumed that the first node is IAB node 1, the second node is IAB node 2, a primary path of data packet #P1 (namely, the first data packet) is path #1: IAB node 1→IAB node 2→IAB node 4. If data packet #P1 is transmitted through path #1, according to a mapping rule configured on IAB node 1, data packet #P1 may be mapped to BH RLC CH#1 for sending to IAB node 2, where BH RLC CH#1 is an RLC channel (or referred to as a BH RLC channel) that is on a backhaul link between IAB node 1 and IAB node 2. If an available buffer space size that is in flow control feedback information #M2 fed back by IAB node 2 to IAB node 1 and that corresponds to BH RLC CH#1 is less than (or equal to) threshold TH#2, IAB node 1 determines that IAB node 2 is not available for the data packet mapped to BH RLC CH#1 that is on the link between IAB node 1 and IAB node 2, in other words, IAB node 1 determines that IAB node 2 is not available for the data packet that needs to be mapped to BH RLC CH#1 that is on the link between IAB node 1 and IAB node 2 for sending to IAB node 2. That is, IAB node 1 may determine that IAB node 2 is not available for data packet #P1.

It should be noted that manners of obtaining and configuring threshold TH#2 of the first node are described in step S702 in the method 700, and details are not described herein again.

In a possible implementation, the first node may receive Mz pieces of flow control feedback information of the second node in a period of continuous duration #T2, where Mz is a positive integer greater than or equal to 1, and the Mz pieces of flow control feedback information are available buffer space sizes that are at the BH RLC CH granularity and that are of the second node. It is assumed that N2 pieces in the Mz pieces of flow control feedback information include specific numeric values that are of available buffer space sizes corresponding to BH RLC CH#1 and that are {A1, A2, ..., AN2} from the 1^{st} value to the (N2)^{th} value (where Ax is an integer greater than 0, x is a positive integer, and 1≤x≤N2), and N2≤Mz. If each value in {A1, A2, ..., AN2} is less than or equal to threshold TH#2, the first node may determine that for the data packet mapped to BH RLC CH#1 for sending to the second node, congestion occurs on the second node. In this case, the first node needs to select an appropriate backup link for a data packet that is originally mapped to BH RLC CH#1 for sending to the second node and that is in data packets to be sent by the first node. For example, if the first node may determine that a backup path can be for transmitting data packet #P1 (the first data packet) that needs to be mapped to BH RLC CH#1, and a next-hop node of the first node on the backup path is the third node, the first node may further determine to transmit the first data packet through the third node.

In this application, the first node determines that for the data packet mapped to BH RLC CH#1 for sending to the second node, congestion occurs on the second node, in other words, the second node is not available for a data packet that subsequently needs to be mapped to BH RLC CH#1 for sending to the second node. This may alternatively be understood as that the second node is not available for the data packet that needs to be mapped to BH RLC CH#1, or may be alternatively understood as that link #1 between the first node and the second node is not available for the data packet that needs to be mapped to BH RLC CH#1 for sending to the second node, or may be alternatively understood as that link #1 between the first node and the second node is not available for the data packet that needs to be mapped to BH RLC CH#1. The second node is a next-hop node of the first node. When the first node determines that the second node is not available for the data packet that needs to be mapped to BH RLC CH#1 that is on the link between the first node and the second node for sending to the second node, the first node may reroute the data packet, to be specific, select an appropriate backup path for the data packet, and send the data packet to a next-hop node that is on the backup path.

In this application, the data packet mapped to BH RLC CH#1 may be understood as the data packet mapped to BH RLC CH#1 for sending to the second node. The data packet that needs to be mapped to BH RLC CH#1 may be understood as a data packet that needs to be mapped by the first node to BH RLC CH#1 for sending to the second node, namely, a data packet that is originally mapped, according to the configured mapping rule, by the first node to BH RLC CH#1 for sending to the second node.

In another possible implementation, the first node may receive Mz pieces of flow control feedback information of the second node in a period of continuous duration #T2, where Mz is a positive integer greater than or equal to 1, and the Mz pieces of flow control feedback information are available buffer space sizes that are at the BH RLC CH#1 granularity and that are of the second node. It is assumed that N2 pieces in the Mz pieces of flow control feedback information include specific numeric values that are of available buffer space sizes corresponding to BH RLC CH#1 and that are {A1, A2, ..., AN2} from the 1^{st} value to the (N2)^{th} value (where Ax is an integer greater than 0, x is a positive integer, and 1≤x≤N2), and N2 is a positive integer less than or equal to Mz. If at least Y2 numeric values in {A1, A2, ..., AN2} are less than or equal to threshold TH#2, where Y2 is a positive integer that satisfies 1≤Y2≤N2, the first node may determine that for the data packet mapped to BH RLC CH#1 for sending to the second node, congestion occurs on the second node. In this case, the first node needs to select an appropriate backup link for a data packet that is originally mapped to BH RLC CH#1 for sending to the second node and that is in data packets to be sent by the first node. For example, if the first node may determine that a backup path can be for transmitting data packet #P1 (the first data packet) that needs to be mapped to BH RLC CH#1, and a next-hop node of the first node on the backup path is the third node, the first node may further determine to transmit the first data packet through the third node.

For the foregoing two implementations, in this step, in which the flow control feedback information is monitored in the period of continuous duration #T2 to determine whether the second node is available for the data packet that needs to be mapped to BH RLC CH#1, in an example, when the first node receives the flow control feedback information that is at the BH RLC CH granularity and that is sent by the second node, if the available buffer space value corresponding to BH RLC CH#1 is less than (or may be equal to) threshold TH#2, a timer (where for example, the timer is named as timer) is started for BH RLC CH#1. It is assumed that duration of the timer is #T2=28s. If available buffer space values that correspond to BH RLC CH#1 and that are in flow control feedback information that is sent by the second node and that is received by the first node within 28s after the timer is started are all less than (or equal to) threshold TH#2, the first node may determine that for the data packet mapped to BH RLC CH#1 for sending to the second node, congestion occurs on the second node, and considers that the second node is not available for the data packet that needs to be mapped to BH RLC CH#1, or considers that the link between the first node and the second node cannot be for transmitting the first data packet. If available buffer space values, corresponding to BH RLC CH#1, carried in X2 pieces in Mz pieces of updated flow control feedback information received by the first node from the second node before the timer expires (in other words, within 28s after the timer is started) are all greater than (or equal to) threshold TH#2, where X2 is a positive integer that satisfies 1≤X2≤Mz, the first node may consider that the second node is still available for the data packet mapped to BH RLC CH#1, may still select the second node as a next-hop node for transmitting the first data packet, and may stop timing of the timer. Alternatively, if it is accumulated that available buffer space values (or numeric values), corresponding to BH RLC CH#1, carried in X2 pieces in updated flow control feedback information received from the next-hop node before the timer expires (in other words, within 28s after the timer is started) are all greater than (or equal to) threshold TH#2, where X2 is a positive integer, the first node may consider that the second node is still available for the data packet mapped to BH RLC CH#1, may still select the second node as a next-hop node for transmitting the first data packet, and may stop timing of the timer.

In an example, if M01 times of fed back available buffer space numeric values, corresponding to BH RLC CH#1, in Mz (where Mz is an integer greater than 1) times of flow control feedback information that are received by the first node and that are sent by the second node are less than (or equal to) threshold TH#2, or a proportion of a quantity of pieces of flow control feedback information to Mz is greater than (or equal to) RTH3, where such pieces of flow control feedback information are in the Mz times of flow control feedback information, and carry available buffer space numeric values that correspond to BH RLC CH#1 and that are less than (or equal to) threshold TH#2, and 0<RTH3≤1, the first node may determine that for the data packet mapped to BH RLC CH#1 for sending to the second node, congestion occurs on the second node. Specifically, the M01 times may be consecutive M01 times or non-consecutive M01 times. Mz is an integer greater than or equal to 1, and M01 is less than or equal to Mz.

In an example, if available buffer space numeric values that correspond to BH RLC CH#1 and that are in Mz (where Mz is an integer greater than or equal to 1) times of flow control feedback information sent by the second node and received by the first node within running duration #T2 of the timer are all less than (or equal to) threshold TH#2, the first node may determine that for the data packet mapped to BH RLC CH#1 for sending to the second node, congestion occurs on the second node. Specifically, the M01 times may be consecutive M01 times or non-consecutive M01 times.

In this application, timer duration #T2 of the first node may alternatively be configured by the IAB donor (or the IAB donor CU or the IAB donor CP) for the first node through an RRC message or an F1AP message. There may be a plurality of possible configuration manners.

Case 1: Duration #T2 may be configured on a per-BH RLC CH basis, in other words, configured duration #T2 may be different for different BH RLC CH values. Configuration information provided by the IAB donor for the first node may include a timer duration list, and each item in the list includes an identifier of one or more BH RLC CHs and a corresponding value of duration #T2.

Case 2: Duration #T2 may be configured on a per-next-hop node basis, in other words, configured duration #T2 may be different for each next-hop node of the first node. However, for a same next-hop node, duration #T2 is applicable to all BH RLC CHs involved in flow control feedback information that is fed back by the next-hop node to the first node and that is at the BH RLC CH granularity, or is applicable to all BH RLC CHs that are on the wireless backhaul link between the first node and the next-hop node. In this case, configuration information provided by the IAB donor needs to carry a value of one or more pieces of configured duration #T2, and further needs to indicate a next-hop node or some next-hop nodes, of the first node, to which each duration #T2 is specifically applicable. The next-hop node of the first node may be identified by a BAP address of the next-hop node.

Case 3: Configuration of duration #T2 may alternatively be that pieces of duration, of the timer corresponding to all BH RLC CHs, in the flow control feedback information that is at the BH RLC CH granularity are all duration #T2. In this case, the configuration information provided by the IAB donor needs to carry a value of configured timer duration #T2, and further needs to indicate that the timer duration is duration corresponding to the flow control feedback information that is at the BH RLC CH granularity. For example, the configuration information provided by the IAB donor for the first node may carry the value of duration #T2 corresponding to the flow control feedback information that is at the BH RLC CH granularity, and duration #T2 is applicable to all different BH RLC CHs.

Case 4: Configuration of duration #T2 may alternatively be configuration of same duration #TS for flow control feedbacks that are at two different granularities. In other words, configuration information provided by the IAB donor carries a value of configured duration #TS, and duration #TS is applicable to both the flow control feedback information at the BAP routing ID granularity and the flow control feedback information at the BH RLC CH granularity that are of the first node. It may be understood that duration #TS is applicable to all different BH RLC CHs between the first node and the next-hop node, and is further applicable to all different BAP routing IDs of the first node. In this case, the configuration information provided by the IAB donor needs to carry a value of configured duration #TS. Optionally, it may be further indicated in the configuration information that duration #TS is applicable to two types of flow control feedback information.

For configuration of duration #T2 in Case 3 and Case 4, there may also be a variant configuration manner, to distinguish between the uplink and the downlink for configuration of duration #T2. To be specific, when the first node is provided with duration-related configuration information for determining, based on the flow control feedback information, whether the next-hop node is available, the IAB donor specifies whether configured duration #T2 is specifically applicable to an uplink flow control feedback (hop-by-hop flow control feedback fed back by the parent node to the first node) or a downlink flow control feedback (hop-by-hop flow control feedback fed back by the child node to the first node). For example, in a variant 3a of Case 3, the IAB donor configures duration #T2-UL-2 for all uplink flow control feedbacks that are at the BH RLC CH granularity, and configures duration #T2-DL-2 for all downlink flow control feedbacks that are at the BH RLC CH granularity. For example, in a variant 4a of Case 4, the IAB donor configures duration #T2-UL for all uplink flow control feedbacks, and configures duration #T2-DL for all downlink flow control feedbacks.

In a possible implementation, the first node receives the flow control feedback information of the second node, where the flow control feedback information includes the available buffer space numeric value, for example, #B2, corresponding to BH RLC CH#1. If the first node detects that a data amount of the data packet that is mapped to BH RLC CH#1 and that has been sent to the second node is greater than or equal to #B2 (in other words, the first node has sent, to the second node through BH RLC CH#1, the data packet whose data amount is greater than or equal to #B2), the first node determines that the second node is not available for the data packet mapped to BH RLC CH#1 that is on the first link between the first node and the second node.

In an example, the first node receives, from the second node, flow control feedback information #M2 that is at the BH RLC CH granularity, where flow control feedback information #M2 includes an available buffer space numeric value, for example, #B2, corresponding to BH RLC CH#1. The first node has sent, to the second node through BH RLC CH#1 within duration #TB1 before the first node receives flow control feedback information #M2 sent by the second node, a data packet whose data amount is greater than or equal to #B2. On this basis, the first node determines that the second node is not available for the data packet that needs to be mapped to BH RLC CH#1 that is on the link between the first node and the second node for sending to the second node. The first node may reroute the data packet, to be specific, select an appropriate backup path for the data packet, and send the data packet to a next-hop node on the backup path.

In another example, the first node receives, from the second node, flow control feedback information #M2 that is at the BH RLC CH granularity, where flow control feedback information #M2 includes an available buffer space numeric value, for example, #B2, corresponding to BH RLC CH#1. A data amount of a data packet sent to the second node through BH RLC CH#1 in duration #TB2 after the first node receives flow control feedback information #M2 sent by the second node is greater than or equal to #B2 (that is, the first node sends, to the second node through BH RLC CH#1, the data packet whose data amount is greater than or equal to #B2). On this basis, the first node determines that the second node is not available for the data packet that needs to be mapped to BH RLC CH#1 that is on the link between the first node and the second node for sending to the second node. The first node may reroute the data packet, for example, select an available backup path, and send the data packet to a next-hop node on the backup path. Optionally, within duration #TB2 after the first node receives flow control feedback information #M2 sent by the second node, the first node has not received another piece of updated flow control feedback information that is at the BH RLC CH granularity and that is sent by the second node.

In still another example, the first node receives, from the second node, flow control feedback information #M2 that is at the BH RLC CH granularity, where flow control feedback information #M2 includes an available buffer space numeric value, for example, #B2, corresponding to BH RLC CH#1. If a data amount of a data packet that is sent by the first node to the second node and that corresponds to BH RLC CH#1 reaches #B2 (in other words, the data amount of the data packet sent by the first node to the second node through BH RLC CH#1 reaches #B2) after the first node receives flow control feedback information #M2, the first node may determine that the second node is not available for the data packet that needs to be mapped to BH RLC CH#1 that is on the link between the first node and the second node for sending to the second node. The first node may reroute the data packet, for example, select an available backup path, and send the data packet to a next-hop node on the backup path.

In still another example, the first node receives, from the second node, flow control feedback information #M2 that is at the BH RLC CH granularity, where flow control feedback information #M2 includes an available buffer space numeric value, for example, #B2, corresponding to BH RLC CH#1. If a data amount of a data packet that is sent by the first node to the second node and that corresponds to BH RLC CH#1 reaches #B2 (in other words, the data amount of the data packet sent by the first node to the second node through BH RLC CH#1 reaches #B2) after the first node receives flow control feedback information #M2 and before the first node receives another piece of updated flow control feedback information that is at the BH RLC CH granularity and that is sent by the second node (in other words, the first node has not received the another piece of updated flow control feedback information that is at the BH RLC CH granularity and that is sent by the second node), the first node may determine that the second node is not available for the data packet that needs to be mapped to BH RLC CH#1 that is on the link between the first node and the second node for sending to the second node. The first node may reroute the data packet, for example, select an available backup path, and send the data packet to a next-hop node on the backup path.

In this application, timer duration #TB1 of the first node may alternatively be configured by the IAB donor (or the IAB donor CU or the IAB donor CP) for the first node through an RRC message or an F1AP message. There may be a plurality of possible configuration manners.

Case 1: Duration # TB1 may be configured on a per-BH RLC CH basis, in other words, configured duration #TB1 may be different for different BH RLC CH values. Configuration information provided by the IAB donor for the first node may include a timer duration list, and each item in the list includes an identifier of one or more BH RLC CHs and a corresponding value of duration #TB1.

Case 2: Duration #TB1 may be configured on a per-next-hop node basis, in other words, configured duration #TB1 may be different for each next-hop node of the first node. However, for a same next-hop node, duration #TB1 is applicable to all BH RLC CHs involved in flow control feedback information fed back by the next-hop node to the first node at the BH RLC CH granularity, or is applicable to all BH RLC CHs that are on the wireless backhaul link between the first node and the next-hop node. In this case, configuration information provided by the IAB donor needs to carry a value of one or more pieces of configured duration #TB1, and further needs to indicate a next-hop node or some next-hop nodes, of the first node, to which each duration #TB1 is specifically applicable. The next-hop node of the first node may be identified by a BAP address of the next-hop node.

Case 3: Configuration of duration #TB1 may be that pieces of duration, of the timer corresponding to all BH RLC CHs, in the flow control feedback information that is at the BH RLC CH granularity are all duration #TB1. In this case, the configuration information provided by the IAB donor needs to carry a value of configured timer duration #TB1, and timer duration #TB1 further needs to be specified as duration corresponding to the flow control feedback information that is at the BH RLC CH granularity. For example, the configuration information provided by the IAB donor for the first node may carry the value of duration #TB1 corresponding to the flow control feedback information that is at the BH RLC CH granularity, and duration #TB1 is applicable to all different BH RLC CHs.

Case 4: Configuration of duration #TB1 alternatively be configuration of same duration #TS for flow control feedbacks that are at two different granularities. In other words, configuration information provided by the IAB donor carries a value of configured duration #TS, and duration #TS is applicable to both the flow control feedback information at the BAP routing ID granularity and the flow control feedback information at the BH RLC CH granularity that are of the first node. It may be understood that duration #TS is applicable to all different BH RLC CHs between the first node and the next-hop node, and is further applicable to all different BAP routing IDs of the first node. In this case, the configuration information provided by the IAB donor needs to carry a value of configured duration #TS. Optionally, it may be further indicated in the configuration information that duration #TS is applicable to two types of flow control feedback information.

For configuration of duration #TB1 in Case 3 and Case 4, there may also be a variant configuration manner, to distinguish between an uplink and a downlink for configuration of duration #TB1. To be specific, when the first node is provided with duration-related configuration information for determining, based on the flow control feedback information, whether the next-hop node is available, the IAB donor specifies whether configured duration #TB1 is specifically applicable to an uplink flow control feedback (hop-by-hop flow control feedback fed back by the parent node to the first node) or a downlink flow control feedback (hop-by-hop flow control feedback fed back by the child node to the first node). For example, in a variant 3a of Case 3, the IAB donor configures duration #TB1-UL-2 for all uplink flow control feedbacks that are at the BH RLC CH granularity, and configures duration TB1-DL-2 for all downlink flow control feedbacks that are at the BH RLC CH granularity. For example, in a variant 4a of Case 4, the IAB donor configures duration #TB1-LTL for all uplink flow control feedbacks, and configures duration TB1-DL for all downlink flow control feedbacks.

Manners of obtaining and configuring timer duration #TB2 are similar to those of duration #TB1. For details, refer to the foregoing descriptions of timer duration #TB1. Details are not described herein again.

Similarly, in the foregoing embodiment, manners of obtaining and configuring X2, Y2, M01, Mz, N2, B2, and RTH3 involved in a case in which the first node determines, based on the flow control feedback information, whether the second node is available is similar to the manners of obtaining and configuring threshold TH#2 above, and details are not described herein again.

In a possible implementation, the first node receives, from the second node, flow control feedback information #M2 that is at the BH RLC CH granularity, where flow control feedback information #M2 may include third indication information corresponding to BH RLC CH#1. The third indication information indicates that, for the data packet mapped to BH RLC CH#1, congestion already occurs on the second node (or for the data packet mapped to BH RLC CH#1 for sending to the second node, congestion occurs on the second node), that is, the second node is not available for the data packet that needs to be mapped to BH RLC CH#1. Optionally, in flow control feedback information #M2, the third indication information may indicate that the second node is not available for a data packet that needs to be mapped to one or more different BH RLC CHs (including BH RLC CH#1), in other words, the third indication information may correspond to a plurality of BH RLC CHs.

In a possible implementation, the first node receives fourth indication information, sent by the second node, indicating that the second node is attempting to perform link recovery. The fourth indication information indicates that a radio link failure occurs between the second node and a next-hop node of the second node, and the second node is attempting to recover a connection to the next-hop node. In this case, the first node may consider that the second node is not available, or consider that the link between the first node and the second node is not available. The first node may reroute all data packets that originally need to be sent through the second node. In an example, refer to FIG. 1. If IAB node 4 has a data packet to be sent to IAB node 1, and IAB node 4 receives fourth indication information sent by IAB node 2, to be specific, IAB node 2 finds that an RLF occurs on a link between IAB node 2 and IAB node 1 and is attempting to recover, IAB node 4 may consider that a link between IAB node 4 and IAB node 2 is not available, and cannot continue to send any data packet to node 2.

It should be understood that, in this embodiment, the first node may also receive the feedback information, at the BAP routing ID granularity, of the second node. In this case, in addition to a flow control feedback report at the BH RLC CH granularity, the flow control feedback information received by the first node further includes a flow control feedback report that is at the BAP routing ID granularity. In this case, the first node may jointly determine, based on feedback information at the two granularities, a data packet for which congestion occurs on the second node and a data packet for which congestion does not occur on the second node, so as to determine next-hop nodes for different data packets. For details, refer to any determining method in Manner 1 to Manner 4 in step S702 in the method 700 for decision making, and details are not described herein again.

As described above, if the first node determines that the second node is not available for data packets that need to be mapped to some BH RLC CHs that are on the first link, the first node may reroute these data packets, select an appropriate backup path, and then send these data packets to a next-hop node (for example, the third node) on the selected backup path.

In this case, optionally, embodiments of this application further include step S803: The third node sends flow control feedback information to the first node.

The flow control feedback information sent by the third node to the first node may include flow control feedback information #M4 that is at the BH RLC CH granularity and/or flow control feedback information #M3 that is at the BAP routing ID granularity.

For example, the first node may receive a BAP control PDU from the third node, where the BAP control PDU includes the flow control feedback information that is at the BH RLC CH granularity, and the flow control feedback information at the BH RLC CH granularity includes a plurality of available buffer space values corresponding to different BH RLC CHs.

Step S804: The first node determines, based on the flow control feedback information sent by the third node, that the third node can be for transmitting the data packet that needs to be rerouted.

It may be understood that the data packet that needs to be rerouted by the first node may be a data packet that needs to be mapped to the first radio link control channel (namely, BH RLC CH#1) that is on the first link. The first link is the link between the second node and the first node. In a possible implementation, the first node may determine, based on flow control feedback information #M4, that the third node can be for transmitting the data packet that needs to be rerouted, in other words, the link between the first node and the third node can be for transmitting the data packet that originally needs to be mapped to BH RLC CH#1 for transmission to the second node, or this may be understood as that the third node can be for transmitting the data packet that originally needs to be mapped to BH RLC CH#1 for transmission to the second node.

For example, the first node may determine, based on information #M4, that the third node can be for transmitting the data packet that originally needs to be mapped to BH RLC CH#1 for transmission to the second node. This may also be understood as that the first node determines that the third node can be for transmitting the data packet that needs to be rerouted, and the data packet that needs to be rerouted, namely, the data packet that needs to be rerouted when the first node determines, in the foregoing step S802, that the second node is not available (for example, the data packet that originally needs to be mapped, according to a BAP routing ID in the data packet and a mapping rule configured on the first node, to BH RLC CH#1 that is on the link between the first node and the second node for sending to the second node).

In a possible implementation, the first node may determine, based on flow control feedback information #M4 that is at the BH RLC CH granularity and that is sent by the third node, that the third node can be for transmitting the data packet that needs to be rerouted (the data packet that originally needs to be mapped to BH RLC CH#1 that is on the link between the first node and the second node for sending to the second node).

In another possible implementation, the first node determines, based on information #M3, that the third node can be for transmitting the data packet that needs to be rerouted (the data packet that originally needs to be mapped to BH RLC CH#1 that is on the link between the first node and the second node for sending to the second node). Information #M3 is the flow control feedback information that is at the BAP routing ID granularity.

For example, the data packet that needs to be rerouted is the first data packet, and a BAP routing identifier included in the first data packet is BAP routing ID#1. In this case, for a case in which the first node determines that the third node is available for the first data packet that needs to be rerouted, refer to the foregoing two implementations. For a specific process, refer to step S704 in the method 700. Details are not described herein again.

It should be understood that, in this embodiment, for a method for determining whether the third node is available, refer to the method for determining whether the second node is available in step S802, by replacing the second node with the third node for understanding. Details are not described again.

It should be noted that, when a to-be-transmitted data packet at the first node needs to be rerouted, but there are a plurality of (at least two) available backup links (or backup paths), the first node may randomly select one of the backup links to reroute the data packet; or the IAB donor (which may alternatively be the IAB donor CU or the IAB donor CU-CP) may set different priorities for different backup links (or backup paths) and provide the priorities for the first node, the first node selects a backup link (or a backup path) with a highest priority from a plurality of available backup links (or backup paths) to reroute the data packet. After selecting the backup link (or backup path) that is for rerouting the data packet, the first node transmits the rerouted data packet to a next-hop node corresponding to the backup link (or the backup path).

It should be noted that the backup link (or the backup link and the priority, or the backup path and the priority) may be configured at the BH RLC CH granularity.

In this application, that the first node determines whether to reroute a data packet may be specifically: In addition to determining whether a primary path of the data packet is available (or whether a first link on the primary path is available, or whether a next-hop node, namely, the second node, of the first node on the primary path is available), the first node further needs to determine whether the data packet has an available backup link (or whether there is an available backup path, or whether a next-hop node, namely, the third node, of the first node on the backup path is available). If the first node determines that the first link on the primary path of the data packet is not available and at least one backup path is available, the first node may reroute the data packet (to be specific, select the backup path and send the data packet to a next-hop node that is on the backup path). Otherwise, the first node does not perform a rerouting operation on the data packet.

It should be noted that, in this application, the first node may simultaneously receive the flow control feedback information sent by the second node and the flow control feedback information sent by the third node. Alternatively, the first node first receives the flow control feedback information sent by the third node, and then receives the flow control feedback information of the second node. This may also be understood as that a relative sequence between step S803 and step S804 and the foregoing step S801 and step S802 is not limited. In this application, step S801 and step S802 may form a separate embodiment for determining whether a primary path of a data packet is available and a data packet that needs to be rerouted. Step S803 and step S804 are optional steps, or may form a separate embodiment for determining whether a backup link of a data packet is available.

In this application, after determining that the second node is not available, and determining that the next hop is the third node, the first node may further continue to monitor a buffer status of the second node, to determine whether the second node is available. This may also be understood as that the first node (which may be specifically the IAB node or the IAB donor DU) may further cancel rerouting of the data packet after congestion on the second node for the data packet is relieved, so that the data packet can continue to be transmitted on an originally determined link. For example, when rerouting the data packet, the first node may start a timer (for example, a timer T-routing back), so as to monitor whether congestion on the second node is relieved, and determine whether the second node can continue to be used.

In this case, optionally, this embodiment of this application further includes step S805 and step S806. Detailed descriptions are as follows:
Step S805: The first node receives information #M6 sent by the second node.

Information #M6 may be flow control feedback information sent by the second node. The flow control feedback information may be flow control feedback information that is at the BH RLC CH granularity, and includes an available buffer space size corresponding to BH RLC CH#1 (indicating the first radio link control channel that is on the link between the first node and the second node, or an ID of a BH RLC CH of the first radio link control channel).

Step S806: The first node determines, based on information #M6, whether the second node is available for the data packet that needs to be mapped to BH RLC CH#1 for sending to the second node.

It should be noted that, in this step, that the first node determines whether the second node is available for the data packet that needs to be mapped to BH RLC CH#1 for sending to the second node may be simplified as follows: The first node determines whether the second node is available for the data packet that needs to be mapped to BH RLC CH#1.

If the first node determines, based on information #M6, that the second node is available for the data packet that needs to be mapped to BH RLC CH#1, the first node may stop rerouting the to-be-transmitted data packet that originally needs to be mapped to BH RLC CH#1 for sending to the second node, and then send such type of data packets to the second node again. Otherwise, the first node may continue to reroute such type of data packets.

It may be understood that, before step S806, the first node has rerouted the data packet that originally needs to be mapped to BH RLC CH#1 for sending to the second node. For example, the first node determines, according to the foregoing step S802, that the second node is not available for the data packet that originally needs to be mapped to BH RLC CH#1 for sending to the second node, and needs to reroute the data packet. The first node further determines, based on the descriptions of steps S803 and S804, that the third node is available for the data packet that needs to be rerouted, and the first node reroutes the data packet (in other words, selects the third node as a next-hop node). In updated flow control feedback information #M6 received by the first node from the second node, if the available buffer space numeric value corresponding to BH RLC CH#1 is greater than (or equal to) threshold TH#6, the first node may consider that the link between the first node and the second node is available for the data packet that needs to be mapped to BH RLC CH#1, and when performing routing selection, the first node may route the data packet to the second node again, to be specific, cancel rerouting of the data packet, and continue to send the data packet to the second node.

In an example, the first node may determine, based on threshold TH#6 and a rerouting recovery timer (where for example, the timer is named as T-routing back#2), whether an executed rerouting mechanism needs to be stopped. If the first node has determined, based on the descriptions of step S802, that the link between the first node and the second node is not available for the data packet that needs to be mapped to BH RLC CH#1, and has rerouted the data packet that needs to be mapped to BH RLC CH#1 (which may also be understood as selecting another backup link for transmission, for example, sending the data packet to the third node), if available buffer space numeric values that correspond to BH RLC CH#1 and that are in one or more pieces of updated flow control feedback information that are sent by the second node and that are received by the first node in duration in which timer T-routing back#2 runs are all greater than (or equal to) threshold TH#6, the first node may consider that the second node has been available for the data packet that needs to be mapped to BH RLC CH#1, in other words, may consider that the link between the first node and the second node has been available for the data packet that needs to be mapped to BH RLC CH#1, and when the first node performs routing selection, the first node may route the data packet to the second node again, to be specific, cancel rerouting of the data packet, and continue to send the data packet to the second node.

In still another example, if the first node has determined, based on the descriptions in step S802, that the link between the first node and the second node is not available for the data packet that needs to be mapped to BH RLC CH#1, after the first node has rerouted the data packet that needs to be mapped to BH RLC CH#1 (which may also be understood as selecting another backup link for transmission, for example, sending the data packet to the third node), the first node receives T1 pieces of flow control feedback information of the second node within a period of continuous duration #T5, T1 is a positive integer greater than or equal to 1, and the T1 pieces of flow control feedback information are available buffer space sizes that are at the BH RLC CH granularity and that are of the second node. It is assumed that S1 pieces in the T1 pieces of flow control feedback information include specific numeric values that are of available buffer space sizes corresponding to BH RLC CH#1 and that are {C1, C2, ..., CS1} from the first value to the (S1)^{th} value (where Cx is an integer greater than 0, x is a positive integer, and 1≤x≤S1). S1 is a positive integer less than or equal to T1. If each numeric value in {C1, C2, ..., CS1} is greater than (or equal to) threshold TH#6, the first node may consider that the second node has been available for the data packet that needs to be mapped to BH RLC CH#1. In other words, the first node may consider that the link between the first node and the second node has been available for the data packet that needs to be mapped to BH RLC CH#1, and when the first node performs routing selection, the first node may route the data packet to the second node again, to be specific, cancel rerouting of the data packet, and continue to send the data packet to the second node.

In yet another example, if the first node has determined, based on the descriptions in step S802, that the link between the first node and the second node is not available for the data packet that needs to be mapped to BH RLC CH#1, after the first node has rerouted the data packet that needs to be mapped to BH RLC CH#1 (which may also be understood as selecting another backup link for transmission, for example, sending the data packet to the third node), the first node receives T1 pieces of flow control feedback information of the second node within a period of continuous duration #T5, T1 is a positive integer greater than or equal to 1, and the T1 pieces of flow control feedback information are available buffer space sizes that are at the BH RLC CH granularity and that are of the second node. It is assumed that S1 pieces in the T1 pieces of flow control feedback information include specific numeric values that are of available buffer space sizes corresponding to BH RLC CH#1 and that are {C1, C2, ..., CS1} from the first value to the (S1)^{th} value (where Cx is an integer greater than 0, x is a positive integer, and 1≤x≤S1). S1 is a positive integer less than or equal to T1. If at least U1 numeric values in {C1, C2, ..., CN} are less than or equal to threshold TH#5, where U1 is a positive integer that satisfies 1≤U1≤S1, the first node may consider that the second node has been available for the data packet that needs to be mapped to BH RLC CH#1. In other words, the first node may consider that the link between the first node and the second node has been available for the data packet that needs to be mapped to BH RLC CH#1, and when the first node performs routing selection, the first node may route the data packet to the second node again, to be specific, cancel rerouting of the data packet, and continue to send the data packet to the second node.

For the foregoing two implementations, in this step, in which the flow control feedback information is monitored in the period of continuous duration #T5 to determine whether the second node is available for the data packet that needs to be mapped to BH RLC CH#1, in an example, when the first node receives the flow control feedback information that is at the BH RLC CH granularity and that is sent by the second node, if the available buffer space value corresponding to BH RLC CH#1 is less than (or equal to) threshold TH#6, a timer (where for example, the timer is named as timer) is started. It is assumed that duration of the timer is #T5=20s. If available buffer space values that correspond to BH RLC CH#1 and that are in flow control feedback information that is sent by the second node and that is received within 20s after the timer is started are all greater than (or equal to) threshold TH#6, the first node may consider that the second node has been available for the data packet that needs to be mapped to BH RLC CH#1. If available buffer space values, corresponding to BH RLC CH#1, carried in J1 pieces in T1 pieces of updated flow control feedback information received from the second node before the timer expires (in other words, within 20s after the timer is started) are all greater than (or equal to) threshold TH#5, where J1 is a positive integer that satisfies 1≤J1≤T1, the first node may consider that the second node is still available for the data packet that needs to be mapped to BH RLC CH#1. Alternatively, if it is accumulated that available buffer space values (or numeric values), corresponding to BH RLC CH#1, carried in J1 pieces in updated flow control feedback information received from the next-hop node before the timer expires (in other words, within 20s after the timer is started) are all greater than (or equal to) threshold TH#6, where J1 is a positive integer, the first node may consider that the second node is still available for the data packet that needs to be mapped to BH RLC CH#1, and when the first node performs routing selection, the first node may route the data packet to the second node again, to be specific, cancel rerouting of the data packet, continue to send the data packet to the second node, and stop timing of the timer.

In this application, manners of obtaining and configuring duration #T5 by the first node are similar to the manners of obtaining and configuring duration #T2. Details are not described herein again.

In an example, if T01 times of fed back available buffer space numeric values, corresponding to BH RLC CH#1, in T1 (where T1 is an integer greater than 1) times of flow control feedback information that are received by the first node and that are sent by the second node are greater than (or equal to) threshold TH#6, or a proportion of a quantity of pieces of flow control feedback information to T1 is greater than (or equal to) RTH4, where such pieces of flow control feedback information are in the T1 times of flow control feedback information, and carry available buffer space numeric values that correspond to BH RLC CH#1 and that are greater than (or equal to) threshold TH#6, and 0<RTH4≤1, the first node determines that the second node has been available. Specifically, the T01 times may be consecutive T01 times or non-consecutive T01 times. T01 is less than or equal to T1.

In this application, in the first node, threshold TH#6, of the available buffer space in the flow control feedback information, for determining availability of the second node may be configured by the IAB donor (or the IAB donor CU or the IAB donor CP) for the first node through an RRC message or an F1AP message. There may be a plurality of configuration manners.

Case 1: Threshold TH#6 may be configured on a per-BH RLC CH basis, in other words, the configured thresholds may be different for different BH RLC CH values. Configuration information provided by the IAB donor for the first node may include a threshold list, and each item (item) in the list includes an identifier of one or more BH RLC CHs and a corresponding value of threshold TH#6.

Case 2: Threshold TH#6 may be configured on a per-next-hop node basis, in other words, configured threshold TH#6 may be different for each next-hop node of the first node. However, for a same next-hop node, threshold TH#6 is applicable to all BH RLC CHs involved in flow control feedback information that is fed back by the next-hop node to the first node and that is at the BH RLC CH granularity. In this case, configuration information provided by the IAB donor needs to carry a value of one or more configured thresholds TH#6, and further needs to indicate a next-hop node or some next-hop nodes, of the first node, to which each threshold is specifically applicable. The next-hop node of the first node may be identified by a BAP address of the next-hop node.

Case 3: Threshold TH#6 may be a threshold corresponding to all BH RLC CHs in the flow control feedback information that is at the BH RLC CH granularity. In this case, configuration information provided by the IAB donor needs to carry a value of configured threshold TH#6, and further needs to indicate that threshold TH#6 is the threshold corresponding to the flow control feedback information that is at the BH RLC CH granularity. For example, the configuration information provided by the IAB donor for the first node may carry the value of threshold TH#6 corresponding to the flow control feedback information that is at the BH RLC CH granularity, and threshold TH#6 is applicable to all different BH RLC CHs.

Case 4: Configuration of threshold TH#6 and threshold TH#5 may alternatively be configuration of a same threshold TH#S for flow control feedbacks that are at two different granularities. In other words, configuration information provided by the IAB donor carries a value of configured threshold TH#S, and threshold TH#S is applicable to both the flow control feedback information at the BAP routing ID granularity and the flow control feedback information at the BH RLC CH granularity that are of the first node. It may be understood that threshold TH#S is applicable to all different BH RLC CHs between the first node and the next-hop node, and is further applicable to all different BAP routing IDs of the first node. In this case, the configuration information provided by the IAB donor needs to carry the value of configured threshold TH#S. Optionally, it may be further indicated in the configuration information that threshold TH#S is applicable to two different types of flow control feedback information.

In this application, for configuration of the threshold in Case 3 and Case 4, there may also be a variant configuration manner, to distinguish between an uplink and a downlink for threshold configuration. To be specific, when the first node is provided with threshold-related configuration information for determining, based on the flow control feedback information, whether the next-hop node is available, the IAB donor specifies whether the configured threshold is specifically applicable to an uplink flow control feedback (hop-by-hop flow control feedback fed back by the parent node to the first node) or a downlink flow control feedback (hop-by-hop flow control feedback fed back by the child node to the first node). For example, in a variant 3a of Case 3, the IAB donor configures threshold TH#6-UL-2 for all uplink flow control feedbacks that are at the BH RLC CH granularity, and configures threshold TH#6-DL-2 for all downlink flow control feedbacks that are at the BH RLC CH granularity. For another example, in a variant 4a of Case 4, the IAB donor configures a threshold TH-UL for all uplink flow control feedbacks, and configures a threshold TH-DL for all downlink flow control feedbacks.

For the foregoing implementation in which the flow control feedback information is monitored based on threshold TH#6 and the rerouting recovery timer to determine whether the second node is available for the data packet that needs to be mapped to BH RLC CH#1 and that has been rerouted, a starting operation of the rerouting recovery timer may be as follows: In an example, after determining in step S802 that the second node is not available for the data packet that needs to be mapped to BH RLC CH#1, the first node may start timer T-routing back#2 to monitor a congestion relief status of the second node. Alternatively, after determining in step S802 that the second node is not available for the data packet that needs to be mapped to BH RLC CH#1, the first node may start timer T-routing back#2 when an available buffer space numeric value that is in received updated flow control feedback information sent by the second node and that corresponds to BH RLC CH#1 is greater than (or equal to) threshold TH#6. An operation of stopping the rerouting recovery timer may be specifically: if an available buffer space numeric value that needs to be mapped to BH RLC CH#1 and that is in updated flow control feedback information, of the second node, received by the first node before rerouting recovery timer T-routing back#2 expires is less than (or equal to) threshold TH#2, stopping timing of timer T-routing back#2. That is, if detecting that the flow control feedback information is less than threshold TH#2, the first node considers that the second node is still not available for the data packet that needs to be mapped to BH RLC CH#1. In this case, the first node may continue to perform a rerouting operation on the data packet.

In this application, duration of the rerouting recovery timer T-routing back#1 of the first node may alternatively be configured by the IAB donor (or the IAB donor CU, or the IAB donor CP) for the first node through an RRC message or an F1AP message. There may be a plurality of possible configuration manners.

Case 1: The duration of timer T-routing back#1 may be configured on a per-BH RLC CH basis, in other words, the configured duration of the timer T-routing back may be different for different BH RLC CHs. Configuration information provided by the IAB donor for the first node may include a timer duration list, and each item in the list includes an identifier of one or more BH RLC CHs and a corresponding value of the duration of the timer T-routing back.

Case 2: The duration of timer T-routing back#2 may be configured on a per-next-hop node basis. To be specific, the configured duration of the timer T-routing back may be different for each next-hop node of the first node. However, for a same next-hop node, the duration of T-routing back#2 is applicable to all BH RLC CHs involved in flow control feedback information fed back by the next-hop node to the first node at the BH RLC CH granularity. In this case, configuration information provided by the IAB donor needs to carry a value of one or more pieces of configured duration of T-routing back#2, and further needs to indicate a next-hop node or some next-hop nodes, of the first node, to which each duration of T-routing back#2 is specifically applicable. The next-hop node of the first node may be identified by a BAP address of the next-hop node.

Case 3: Configuration of duration of timer T-routing back#2 may be that pieces of duration of timer T-routing back#2 corresponding to all BH RLC CHs in the flow control feedback information at the BH RLC CH granularity are all a same numeric value. In this case, the configuration information provided by the IAB donor needs to carry a value of configured duration of timer T-routing back#2, and the duration of timer T-routing back#2 further needs to be specified as duration corresponding to the flow control feedback information that is at the BH RLC CH granularity. For example, the configuration information provided by the IAB donor for the first node may carry the value of duration of timer T-routing back#2 corresponding to the flow control feedback information that is at the BH RLC CH granularity, and duration of timer T-routing back#2 is applicable to all different BH RLC CHs.

Case 4: Configuration of duration of timer T-routing back#2 may alternatively be configuration of same duration #TS for flow control feedbacks that are at two different granularities. In other words, configuration information provided by the IAB donor carries a value of configured duration #TS, and duration #TS is applicable to both the flow control feedback information at the BAP routing ID granularity and the flow control feedback information at the BH RLC CH granularity that are of the first node. It may be understood that duration #TS is applicable to all different BH RLC CHs between the first node and the next-hop node, and is further applicable to all different BAP routing IDs of the first node. In this case, the configuration information provided by the IAB donor needs to carry a value of configured duration #TS. Optionally, it may be further indicated in the configuration information that duration #TS is applicable to two types of flow control feedback information.

For configuration of duration of timer T-routing back#2 in Case 3 and Case 4, there may also be a variant configuration manner, to distinguish between an uplink and a downlink for configuration of duration of timer T-routing back#2. To be specific, when the first node is provided with duration-related configuration information for determining, based on the flow control feedback information, whether the next-hop node is available, the IAB donor specifies whether the configured duration of timer T-routing back#2 is specifically applicable to an uplink flow control feedback (hop-by-hop flow control feedback fed back by the parent node to the first node) or a downlink flow control feedback (hop-by-hop flow control feedback fed back by the child node to the first node). For example, in a variant 3a of Case 3, the IAB donor configures duration T-routing back#2-UL-2 of the timer T-routing back for all uplink flow control feedbacks that are at the BH RLC CH granularity, and configures duration T-routing back#2-DL-2 for all downlink flow control feedbacks that are at the BH RLC CH granularity. For example, in a variant 4a of Case 4, the IAB donor configures duration T-routing back-LTL of the timer T-routing back for all uplink flow control feedbacks that are at the BAP routing ID granularity, and configures duration T-routing back-DL for all downlink flow control feedbacks that are at the BH RLC CH granularity.

Similarly, in the foregoing embodiment, manners of obtaining and configuring T1, S1, 11, U1, and RTH4 involved in a case in which the first node determines, based on the flow control feedback information, whether the second node is available is similar to the manners of obtaining and configuring threshold TH#1 in step S702 in the method 700, and details are not described herein again.

In this application, optionally, threshold TH#6 may be greater than or equal to threshold TH#2. For example, threshold TH#6 is set to be greater than threshold TH#2, so that frequent switching of a determining result of the first node for the second node can be reduced, thereby saving resources.

In a possible implementation, the first node receives fifth indication information of the second node, where the fifth indication information indicates that a link between the second node and a next-hop node is successfully restored; or the first node receives sixth indication information of the second node, where the sixth indication information indicates that the second node is available for the data packet that needs to be mapped to BH RLC CH#1. The first node may determine that the second node is available, or the link between the second node and the first node is available, or the second node is available for the data packet that needs to be mapped to BH RLC CH#1. When performing routing selection, the first node may reroute the data packet to the second node again, to be specific, cancel rerouting of the data packet, and continue to send the data packet to the second node.

In other words, in this application, for the feedback information of the second node, whether the data packet needs to be rerouted may be flexibly determined, and after the rerouting, the buffer status of the second node may be further detected, so as to ensure that after congestion of the primary path is relieved, the primary path can be used as soon as possible to transmit the data packet.

According to the communication method provided in this application, the first node may perform rerouting the data packet based on received flow control feedback information when a link is congested. In this way, link congestion can be relieved, and an average transmission delay of the data packet can be reduced, thereby improving user experience.

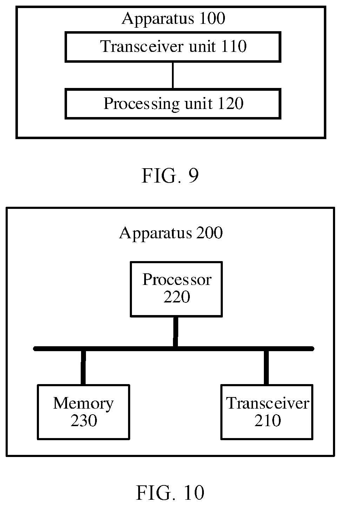

The communication methods provided in embodiments of this application are described above in detail with reference to FIG. 7 and FIG. 8. The following describes communication apparatuses provided in embodiments of this application with reference to FIG. 9 and FIG. 10. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between nodes. It may be understood that, to implement the foregoing functions, each node such as a transmitting end device or a receiving end device includes a corresponding hardware structure and/or software module for performing each function. A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional module division may be performed on the transmitting end device or the receiving end device based on the foregoing method examples. For example, each functional module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

FIG. 9 is a schematic block diagram of a communication apparatus 100 according to an embodiment of this application. As shown in the figure, the apparatus 100 may include a transceiver unit 110 and a processing unit 120.

The communication apparatus 100 may be the first node in the foregoing method embodiments, or may be a chip configured to implement a function of the first node in the foregoing method embodiments. It should be understood that the apparatus 100 may correspond to the first node in the method 700 and the method 800 according to embodiments of this application, and the apparatus 100 may perform the steps corresponding to the first node in the method 700 and the method 800 in embodiments of this application. It should be understood that a specific process in which the units perform the foregoing corresponding steps is described in detail in the foregoing method embodiments, and for brevity, details are not described herein again.

In a possible design, the transceiver unit is configured to receive first information, where the first information includes a size of an available space in a first buffer space of a second node, the first buffer space is for buffering a data packet that is to be transmitted through a first path, the first path is a primary path that is for transmitting the data packet, and the second node is a next-hop node of the first node on the primary path. The processing unit is configured to determine that the size of the available space in the first buffer space is less than or equal to a first threshold, and the processing unit is configured to determine to transmit, through a third node, the data packet that is to be transmitted through the first path, where the third node is a next-hop node of the first node on a backup path that is for transmitting the data packet.

In a possible implementation, the processing unit is configured to determine that the size of the available space in the first buffer space is greater than the first threshold, and the processing unit is configured to determine to transmit, through the third node, the data packet that is to be transmitted through the first path.

In a possible implementation, the transceiver unit is configured to receive N pieces of first information in first duration, where the N pieces of first information include sizes of available spaces in N first buffer spaces. The processing unit is configured to determine that there are X available spaces whose sizes are less than or equal to the first threshold in the N first buffer spaces, and the processing unit is configured to determine to transmit, through the third node, the data packet that is to be transmitted through the first path, where N is an integer greater than 1, and X is less than or equal to N.

In a possible implementation, the transceiver unit is configured to receive second information, where the second information includes a size of an available space in a second buffer space of the second node, the second buffer space is for buffering a data packet that is to be mapped to a first radio link control channel on a first link, and the first link is a link between the first node and the second node. The processing unit is configured to determine, based on the size of the available space in the first buffer space and the size of the available space in the second buffer space, to transmit, through the third node, the data packet that is to be transmitted through the first path.

In a possible implementation, that the processing unit is configured to determine, based on the size of the available space in the first buffer space and the size of the available space in the second buffer space, to transmit, through the third node, the data packet that is to be transmitted through the first path includes: The processing unit is configured to determine that the size of the available space in the first buffer space is less than or equal to the first threshold, and/or the size of the available space in the second buffer space is less than or equal to a second threshold, and the processing unit is configured to determine to transmit, through the third node, the data packet that is to be transmitted through the first path.

In a possible implementation, that the processing unit is configured to determine, based on the size of the available space in the first buffer space and the size of the available space in the second buffer space, to transmit, through the third node, the data packet that is to be transmitted through the first path includes: The processing unit is configured to determine that the size that is of the available space in the first buffer space and that is received by the transceiver unit in the first duration is less than or equal to the first threshold, and/or the size that is of the available space in the second buffer space and that is received by the transceiver unit in second duration is less than or equal to the first threshold, and the processing unit is configured to determine to transmit, through the third node, the data packet that is to be transmitted through the first path.

In a possible implementation, that the processing unit is configured to determine that the size of the available space in the first buffer space is less than or equal to a first threshold, and the processing unit is configured to determine to transmit, through a third node, the data packet that is to be transmitted through the first path includes: The processing unit is configured to determine that a data packet that is to be transmitted through the first path and whose data amount is equal to the size of the available space in the first buffer space has been sent to the second node in third duration before the transceiver unit receives the first information, the processing unit is configured to determine to transmit, through the third node, the data packet that is to be transmitted through the first path. Alternatively, the processing unit is configured to determine that a data packet that is to be transmitted through the first path and whose data amount is equal to the size of the available space in the first buffer space has been sent to the second node in fourth duration after the transceiver unit receives the first information, and the processing unit is configured to determine to transmit, through the third node, the data packet that is to be transmitted through the first path.

In a possible implementation, that the processing unit is configured to determine that the size of the available space in the first buffer space is less than or equal to a first threshold, and the processing unit is configured to determine to transmit, through a third node, the data packet that is to be transmitted through the first path includes: The processing unit is configured to determine that the size of the available space in the first buffer space is less than or equal to the first threshold, and that the third node can be for transmitting the data packet that is to be transmitted through the first path, the processing unit is configured to determine to transmit, through the third node, the data packet that is to be transmitted through the first path.

In a possible implementation, that the processing unit is configured to determine that the third node can be for transmitting the data packet that is to be transmitted through the first path includes: The transceiver unit is configured to receive third information, where the third information includes a size of an available space in at least one buffer space of the third node, the at least one buffer space is in one-to-one correspondence with at least one backup path, and the at least one backup path and the first path have a same destination node. The processing unit is configured to determine that a sum of sizes of available spaces in the at least one buffer space is greater than a third threshold, and the processing unit is configured to determine that the third node can be for transmitting the data packet that is to be transmitted through the first path.

In a possible implementation, that the processing unit is configured to determine that the third node can be for transmitting the data packet that is to be transmitted through the first path includes: The transceiver unit is configured to receive fourth information, where the fourth information includes a size of an available space in a fourth buffer space of the third node, the fourth buffer space is for buffering a data packet that is to be mapped to a first radio link control channel on a second link, and the second link is a link between the first node and the third node. The processing unit is configured to determine that the size of the available space in the fourth buffer space is greater than a fourth threshold, and the processing unit is configured to determine that the third node can be for transmitting the data packet that is to be transmitted through the first path.

In a possible implementation, that the processing unit is configured to determine that the third node can be for transmitting the data packet includes: The transceiver unit receives fourth information, where the fourth information includes a size of an available space in at least one buffer space of the third node, the at least one buffer space is for buffering a data packet that is to be mapped to at least one radio link control channel on a second link, the at least one buffer space is in one-to-one correspondence with the at least one radio link control channel, and the second link is a link between the first node and the third node. The processing unit is configured to determine that a sum of sizes of available spaces in the at least one buffer space is greater than a fourth threshold, and the processing unit is configured to determine that the third node can be for transmitting the data packet that is to be transmitted through the first path.

In a possible implementation, the transceiver unit is configured to receive fifth information, where the fifth information includes a size of an available space in the first buffer space of the second node. The processing unit is configured to determine that the size of the available space in the first buffer space is greater than a fifth threshold, and the processing unit is configured to determine that the second node can be for transmitting the data packet that is to be transmitted through the first path.

In a possible implementation, that the transceiver unit is configured to receive fifth information includes: The transceiver unit is configured to receive Y pieces of fifth information in fifth duration, where the Y pieces of fifth information include sizes of available spaces in Y first buffer spaces. The processing unit is configured to determine that sizes of all available spaces in the Y first buffer spaces are greater than a fifth threshold, and the processing unit is configured to determine that the second node can be for transmitting the data packet that is to be transmitted through the first path. Y is an integer greater than 1.

In a possible design, the transceiver unit is configured to receive second information, where the second information includes a size of an available space in a second buffer space of the second node, the second buffer space is for buffering a data packet that is to be mapped to a first radio link control channel on a first link, and the first link is a link between the first node and the second node. The processing unit is configured to determine that the size of the available space in the second buffer space is less than or equal to a second threshold, and the processing unit is configured to determine to transmit a first data packet through a third node, where the first data packet is the data packet that is to be mapped to the first radio link control channel on the first link, a primary path of the first data packet is a first path, the second node is a next-hop node of the first node on the first path, the third node is a next-hop node of the first node on a second path that is for transmitting the first data packet, the second path is a backup path of the first data packet, a link between the first node and the third node is a second link, and the first path and the second path have a same destination node.

In a possible implementation, the processing unit is configured to determine that the size of the available space in the second buffer space is greater than the second threshold, and the processing unit is configured to determine to transmit the first data packet through the second node.

In a possible implementation, that the transceiver unit is configured to receive second information includes: The transceiver unit is configured to receive K pieces of second information in second duration, where the K pieces of second information include sizes of available spaces in K second buffer spaces. The processing unit is configured to determine that L sizes of available spaces in the K second buffer spaces are less than or equal to the second threshold, the processing unit is configured to determine to transmit the first data packet through the third node, where K is an integer greater than 1, and L is less than or equal to K.

In a possible implementation, the transceiver unit is configured to receive first information, where the first information includes a size of an available space in a first buffer space of the second node, and the first buffer space is for buffering a data packet that is to be transmitted through the first path, where the first path is a primary path that is for transmitting the data packet. The processing unit is configured to determine, based on the size of the available space in the second buffer space and the size of the available space in the first buffer space, to transmit, through the third node, the first data packet, where the third node is the next-hop node of the first node on the backup path that is for transmitting the first data packet.

In a possible implementation, that the processing unit is configured to determine, based on the size of the available space in the second buffer space and the size of the available space in the first buffer space, to transmit the first data packet through the third node includes: The processing unit is configured to determine that the size of the available space in the second buffer space is less than or equal to a second threshold, and/or the size of the available space in the first buffer space is less than or equal to a first threshold, and the processing unit is configured to determine to transmit the first data packet through the third node.

In a possible implementation, that the processing unit is configured to determine, based on the size of the available space in the second buffer space and the size of the available space in the first buffer space, to transmit the first data packet through the third node includes: The processing unit is configured to determine that the size that is of the available space in the second buffer space and that is received by the transceiver unit in second duration is less than or equal to a second threshold, and/or the size that is of the available space in the first buffer space and that is received by the transceiver unit in first duration is less than or equal to a first threshold, and the processing unit is configured to determine to transmit the first data packet through the third node.

In a possible implementation, that the processing unit is configured to determine that the size of the available space in the second buffer space is less than or equal to a second threshold, and the processing unit is configured to determine to transmit the first data packet through the third node includes: The processing unit is configured to determine that a first-type data packet whose data amount is equal to the size of the available space that is in the second buffer space has been sent to the second node in third duration before the transceiver unit receives the second information, where the first-type data packet is a data packet mapped, by the first node for sending to the second node, to the first radio link control channel on the first link, and the processing unit is configured to determine to transmit the first data packet through the third node. Alternatively, the processing unit is configured to determine that a first-type data packet whose data amount is equal to the size of the available space that is in the second buffer space has been sent to the second node in fourth duration after the transceiver unit receives the second information, and the processing unit is configured to determine to transmit the first data packet through the third node.

In a possible implementation, that the processing unit is configured to determine that the size of the available space in the second buffer space is less than or equal to a second threshold, and the processing unit is configured to determine to transmit the first data packet through the third node includes: The processing unit is configured to: determine that the size of the available space in the second buffer space is less than or equal to the second threshold, and determine that the third node can be for transmitting the first data packet, and the processing unit is configured to determine to transmit the first data packet through the third node.

In a possible implementation, that the processing unit is configured to determine to transmit the first data packet through the third node includes: The transceiver unit is configured to receive fourth information, where the fourth information includes a size of an available space in at least one buffer space of the third node, the at least one buffer space is for buffering a data packet that is mapped, for sending to the third node, to at least one radio link control channel on the second link, the at least one buffer space is in one-to-one correspondence with the at least one radio link control channel, and the second link is a link between the first node and the third node. The processing unit is configured to determine that a sum of sizes of available spaces in the at least one buffer space is greater than a fourth threshold, and the processing unit is configured to determine that the third node can be for transmitting the first data packet.

In a possible implementation, that the processing unit is configured to determine to transmit a first data packet through a third node includes: The transceiver unit is configured to receive fourth information, where the fourth information includes a size of an available space in a fourth buffer space of the third node, the fourth buffer space is for buffering a data packet mapped, for sending to the third node, to a second radio link control channel on the second link, and the second link is the link between the first node and the third node. The processing unit is configured to determine that the size of the available space in the fourth buffer space is greater than a fourth threshold, and the processing unit is configured to determine to transmit the first data packet through the third node.

In a possible implementation, that the processing unit is configured to determine to transmit a first data packet through a third node includes: The transceiver unit is configured to receive third information, where the third information includes a size of an available space in at least one buffer space of the third node, the at least one buffer space is in one-to-one correspondence with at least one backup path, and the at least one backup path and the first path have a same destination node. The processing unit is configured to determine that a sum of sizes of available spaces in the at least one buffer space is greater than a third threshold, and the processing unit is configured to determine to transmit the first data packet through the third node.

In a possible implementation, the transceiver unit is configured to receive fifth information, where the fifth information includes a size of an available space in the second buffer space of the second node. The processing unit is configured to determine that the size of the available space in the second buffer space is greater than a fifth threshold, and the processing unit is configured to determine that the second node can be for transmitting the data packet that is to be mapped to the first radio link control channel on the first link.

In a possible implementation, that the transceiver unit is configured to receive fifth information includes: The transceiver unit is configured to receive P pieces of fifth information in fifth duration, where the P pieces of fifth information include sizes of available spaces in P second buffer spaces. When the processing unit is configured to determine that all sizes of available spaces in the P second buffer spaces are greater than the fifth threshold, the processing unit is configured to determine to transmit, through the third node, the data packet that is to be mapped to the first radio link control channel on the first link, where P is an integer greater than 1.

FIG. 10 is a schematic block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the apparatus 200 further includes a memory 230, configured to store instructions. Optionally, the apparatus 200 further includes a transceiver 210, and the processor 220 controls the transceiver 210 to send a signal and/or receive a signal.

It should be understood that the processor 220 and the memory 230 may be integrated into one processing apparatus. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna. There may be one or more antennas. The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 200.

It should be understood that a specific process in which the transceiver and the processor perform the foregoing corresponding steps is described in detail in the foregoing method embodiments, and for brevity, details are not described herein.

In an implementation process, steps in the foregoing methods can be implemented by using a hardware integrated logical circuit in the processor, or by using instructions in a form of software. Steps of the methods disclosed with reference to embodiments of this application may be directly executed and completed by a hardware processor, or may be executed and completed by using a combination of hardware in the processor and a software module. The software module may be located on a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by a combination of hardware in the decoding processor and a software module. The software module may be located on the mature storage medium in the art, such as the random access memory, the flash memory, the read-only memory, the programmable read-only memory, the electrically erasable programmable memory, or the register. The storage medium is located in the memory, and the processor reads the information in the memory and completes the steps in the foregoing methods in combination with the hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus random access memory (direct rambus RAM, DR RAM). It should be noted that the memory of the systems and methods described in this specification includes but is not limited to these and any memory of another appropriate type.

According to the methods provided in embodiments of this application, this application further provides a computer program product. The computer program product includes computer program code. When the computer program code is run on a computer, the computer is enabled to perform the method in any one of embodiments in the method 700 and the method 800.

According to the methods provided in embodiments of this application, this application further provides a computer-readable medium. The computer-readable medium stores program code. When the program code is run on a computer, the computer is enabled to perform the method in any one of embodiments in the method 700 and the method 800.

According to the methods provided in embodiments of this application, this application further provides a system. The system includes the foregoing apparatus or device.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

A network side device and a terminal device in the foregoing apparatus embodiments correspond to a network side device or the terminal device in the method embodiments. A corresponding module or unit performs a corresponding step. For example, a communication unit (transceiver) performs a receiving step or a sending step in the method embodiments, and a step other than the sending step and the receiving step may be performed by a processing unit (processor). For a function of a specific unit, refer to a corresponding method embodiment. There may be one or more processors.

Terminologies such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first node, first information from a second node, wherein the first information comprises a size of an available space in a first buffer space of the second node, the first buffer space is for buffering a data packet that is to be transmitted through a first path, the first path is a primary path that is for transmitting the data packet, and the second node is a next-hop node of the first node on the primary path; and
if the size of the available space in the first buffer space is less than or equal to a first threshold, determining, by the first node, to transmit, through a third node, the data packet that is required to be transmitted through the first path, wherein the third node is a next-hop node of the first node on a backup path that is for transmitting the data packet.

2. The method according to claim 1, wherein
if the size of the available space in the first buffer space is greater than the first threshold, determining, by the first node, to transmit, through the second node, the data packet that is required to be transmitted through the first path.

3. The method according to claim 1 or 2, wherein the receiving, by a first node, first information from a second node comprises:
receiving, by the first node, N pieces of first information from the second node in first duration, wherein the N pieces of first information comprise sizes of available spaces in N first buffer spaces; and
if there are X available spaces whose sizes are less than or equal to the first threshold in the N first buffer spaces, determining, by the first node, to transmit, through the third node, the data packet that is to be transmitted through the first path, wherein
N is an integer greater than 1, and X is less than or equal to N.

4. The method according to any one of claims 1 to 3, wherein the method further comprises:
receiving, by the first node, second information from the second node, wherein the second information comprises a size of an available space in a second buffer space of the second node, the second buffer space is for buffering a data packet that is to be mapped to a first radio link control channel on a first link, and the first link is a link between the first node and the second node; and
determining, by the first node based on the size of the available space in the first buffer space and the size of the available space in the second buffer space, to transmit, through the third node, the data packet that is to be transmitted through the first path.

5. The method according to claim 4, wherein the determining, by the first node based on the size of the available space in the first buffer space and the size of the available space in the second buffer space, to transmit, through the third node, the data packet that is to be transmitted through the first path comprises:
if the size of the available space in the first buffer space is less than or equal to the first threshold, and/or the size of the available space in the second buffer space is less than or equal to a second threshold, determining, by the first node, to transmit, through the third node, the data packet that is to be transmitted through the first path.

6. The method according to claim 4, wherein the determining, by the first node based on the size of the available space in the first buffer space and the size of the available space in the second buffer space, to transmit, through the third node, the data packet that is to be transmitted through the first path comprises:
if the size that is of the available space in the first buffer space and that is received by the first node in the first duration is less than or equal to the first threshold, and/or the size that is of the available space in the second buffer space and that is received by the first node in second duration is less than or equal to the first threshold, determining, by the first node, to transmit, through the third node, the data packet that is to be transmitted through the first path.

7. The method according to any one of claims 1 to 6, wherein if the size of the available space in the first buffer space is less than or equal to a first threshold, the determining, by the first node, to transmit, through a third node, the data packet that is to be transmitted through the first path comprises:
if the first node determines that a data packet that is to be transmitted through the first path and whose data amount is equal to the size of the available space in the first buffer space has been sent to the second node in third duration before the first node receives the first information, determining, by the first node, to transmit, through the third node, the data packet that is to be transmitted through the first path; or
if the first node determines that a data packet that is to be transmitted through the first path and whose data amount is equal to the size of the available space in the first buffer space has been sent to the second node in fourth duration after the first node receives the first information, determining, by the first node, to transmit, through the third node, the data packet that is to be transmitted through the first path.

8. The method according to any one of claims 1 to 7, wherein if the size of the available space in the first buffer space is less than or equal to a first threshold, the determining, by the first node, to transmit, through a third node, the data packet that is to be transmitted through the first path comprises:
if the size of the available space in the first buffer space is less than or equal to the first threshold, and the first node determines that the third node can be for transmitting the data packet that is to be transmitted through the first path, determining, by the first node, to transmit, through the third node, the data packet that is to be transmitted through the first path.

9. The method according to claim 8, wherein that the first node determines that the third node can be for transmitting the data packet that is to be transmitted through the first path comprises:
receiving, by the first node, third information from the third node, wherein the third information comprises a size of an available space in at least one buffer space of the third node, the at least one buffer space is in one-to-one correspondence with at least one backup path, and the at least one backup path and the first path have a same destination node; and
if a sum of sizes of available spaces in the at least one buffer space is greater than a third threshold, determining, by the first node, that the third node can be for transmitting the data packet that is to be transmitted through the first path.

10. The method according to claim 8 or 9, wherein that the first node determines that the third node can be for transmitting the data packet that is to be transmitted through the first path comprises:
receiving, by the first node, fourth information from the third node, wherein the fourth information comprises a size of an available space in a fourth buffer space of the third node, the fourth buffer space is for buffering a data packet that is to be mapped to a first radio link control channel on a second link, and the second link is a link between the first node and the third node; and
if the size of the available space in the fourth buffer space is greater than a fourth threshold, determining, by the first node, that the third node can be for transmitting the data packet that is to be transmitted through the first path.

11. The method according to claim 8 or 9, wherein that the first node determines that the third node can be for transmitting the data packet comprises:
receiving, by the first node, fourth information from the third node, wherein the fourth information comprises a size of an available space in at least one buffer space of the third node, the at least one buffer space is for buffering a data packet that is to be mapped to at least one radio link control channel on a second link, the at least one buffer space is in one-to-one correspondence with the at least one radio link control channel, and the second link is a link between the first node and the third node; and
if a sum of sizes of available spaces in the at least one buffer space is greater than a fourth threshold, determining, by the first node, that the third node can be for transmitting the data packet that is to be transmitted through the first path.

12. The method according to any one of claims 1 to 11, comprising: receiving, by the first node, fifth information from the second node, wherein the fifth information comprises a size of an available space in the first buffer space of the second node; and
if the size of the available space in the first buffer space is greater than a fifth threshold, determining, by the first node, that the second node can be for transmitting the data packet that is to be transmitted through the first path.

13. The method according to claim 12, wherein the receiving, by the first node, fifth information from the second node comprises:
receiving, by the first node, Y pieces of fifth information from the second node in fifth duration, wherein the Y pieces of fifth information comprise sizes of available spaces in Y first buffer spaces; and
if the sizes of the available spaces in the Y first buffer spaces are all greater than the fifth threshold, determining, by the first node, that the second node can be for transmitting the data packet that is to be transmitted through the first path, wherein
Y is an integer greater than 1.

14. The method according to any one of claims 1 to 13, wherein
the first threshold is configured by a donor node of the first node, or the first threshold is indicated by the donor node of the first node based on indication information, or the first threshold is preconfigured for the first node.

15. The method according to claim 14, wherein
when the first node is an integrated access and backhaul donor distributed unit, the donor node of the first node is an integrated access and backhaul donor central unit; or when the first node is an integrated access and backhaul node, the donor node of the first node is an integrated access and backhaul donor or an integrated access and backhaul donor central unit.

16. The method according to any one of claims 3 to 13, wherein
the first duration is configured by a donor node of the first node, the first duration is indicated by the donor node of the first node based on indication information, or the first duration is preconfigured for the first node.

17. A communication apparatus, comprising a transceiver unit and a processing unit, wherein
the transceiver unit is configured to receive first information, wherein the first information comprises a size of an available space in a first buffer space of the second node, the first buffer space is for buffering a data packet that is to be transmitted through a first path, the first path is a primary path that is for transmitting the data packet, and the second node is a next-hop node of a first node on the primary path; and
the processing unit is configured to determine that the size of the available space in the first buffer space is less than or equal to a first threshold, and the processing unit is configured to determine to transmit, through a third node, the data packet that is required to be transmitted through the first path, wherein the third node is a next-hop node of the first node on a backup path that is for transmitting the data packet.

18. The apparatus according to claim 17, wherein
the processing unit is configured to determine that the size of the available space in the first buffer space is greater than the first threshold, and the processing unit is configured to determine to transmit, through the second node, the data packet that is required to be transmitted through the first path.

19. The apparatus according to claim 17 or 18, wherein
the transceiver unit is configured to receive N pieces of first information in first duration, wherein the N pieces of first information comprise sizes of available spaces in N first buffer spaces; and
the processing unit is configured to determine that there are X available spaces whose sizes are less than or equal to the first threshold in the N first buffer spaces, and the processing unit is configured to determine to transmit, through the third node, the data packet that is to be transmitted through the first path, wherein
N is an integer greater than 1, and X is less than or equal to N.

20. The apparatus according to any one of claims 17 to 19, wherein
the transceiver unit is configured to receive second information, wherein the second information comprises a size of an available space in a second buffer space of the second node, the second buffer space is for buffering a data packet that is to be mapped to a first radio link control channel on a first link, and the first link is a link between the first node and the second node; and
the processing unit is configured to determine, based on the size of the available space in the first buffer space and the size of the available space in the second buffer space, to transmit, through the third node, the data packet that is to be transmitted through the first path.

21. The apparatus according to claim 20, wherein that the processing unit is configured to determine, based on the size of the available space in the first buffer space and the size of the available space in the second buffer space, to transmit, through the third node, the data packet that is to be transmitted through the first path comprises:
the processing unit is configured to determine that the size of the available space in the first buffer space is less than or equal to the first threshold, and/or that the size of the available space in the second buffer space is less than or equal to a second threshold, and the processing unit is configured to determine to transmit, through the third node, the data packet that is to be transmitted through the first path.

22. The apparatus according to claim 20, wherein that the processing unit is configured to determine, based on the size of the available space in the first buffer space and the size of the available space in the second buffer space, to transmit, through the third node, the data packet that is to be transmitted through the first path comprises:
the processing unit is configured to determine that the size that is of the available space in the first buffer space and that is received by the transceiver unit in the first duration is less than or equal to the first threshold, and/or that the size that is of the available space in the second buffer space and that is received by the transceiver unit in second duration is less than or equal to the first threshold, and the processing unit is configured to determine to transmit, through the third node, the data packet that is to be transmitted through the first path.

23. The apparatus according to any one of claims 17 to 22, wherein that the processing unit is configured to determine that the size of the available space in the first buffer space is less than or equal to a first threshold, and the processing unit is configured to determine to transmit, through a third node, the data packet that is to be transmitted through the first path comprises:
the processing unit is configured to determine that a data packet that is to be transmitted through the first path and whose data amount is equal to the size of the available space in the first buffer space has been sent to the second node in third duration before the transceiver unit receives the first information, and the processing unit is configured to determine to transmit, through the third node, the data packet that is to be transmitted through the first path; or
the processing unit is configured to determine that a data packet that is to be transmitted through the first path and whose data amount is equal to the size of the available space in the first buffer space has been sent to the second node in fourth duration after the transceiver unit receives the first information, and the processing unit is configured to determine to transmit, through the third node, the data packet that is to be transmitted through the first path.

24. The apparatus according to any one of claims 17 to 22, wherein that the processing unit is configured to determine that the size of the available space in the first buffer space is less than or equal to a first threshold, and the processing unit is configured to determine to transmit, through a third node, the data packet that is to be transmitted through the first path comprises:
the processing unit is configured to determine that the size of the available space in the first buffer space is less than or equal to the first threshold, and that the third node can be for transmitting the data packet that is to be transmitted through the first path, and the processing unit is configured to determine to transmit, through the third node, the data packet that is to be transmitted through the first path.

25. The apparatus according to claim 24, wherein that the processing unit is configured to determine that the third node can be for transmitting the data packet that is to be transmitted through the first path comprises:
the transceiver unit is configured to receive third information, wherein the third information comprises a size of an available space in at least one buffer space of the third node, the at least one buffer space is in one-to-one correspondence with at least one backup path, and the at least one backup path and the first path have a same destination node; and
the processing unit is configured to determine that a sum of sizes of available spaces in the at least one buffer space is greater than a third threshold, and the processing unit is configured to determine that the third node can be for transmitting the data packet that is to be transmitted through the first path.

26. The apparatus according to claim 24 or 25, wherein that the processing unit is configured to determine that the third node can be for transmitting the data packet that is to be transmitted through the first path comprises:
the transceiver unit is configured to receive fourth information, wherein the fourth information comprises a size of an available space in a fourth buffer space of the third node, the fourth buffer space is for buffering a data packet that is to be mapped to a first radio link control channel on a second link, and the second link is a link between the first node and the third node; and
the processing unit is configured to determine that the size of the available space in the fourth buffer space is greater than a fourth threshold, and the processing unit is configured to determine that the third node can be for transmitting the data packet that is to be transmitted through the first path.

27. The apparatus according to claim 24 or 25, wherein that the processing unit is configured to determine that the third node can be for transmitting the data packet comprises:
the transceiver unit is configured to receive fourth information, wherein the fourth information comprises a size of an available space in at least one buffer space of the third node, the at least one buffer space is for buffering a data packet that is to be mapped to at least one radio link control channel on a second link, the at least one buffer space is in one-to-one correspondence with the at least one radio link control channel, and the second link is a link between the first node and the third node; and
the processing unit is configured to determine that a sum of sizes of available spaces in the at least one buffer space is greater than a fourth threshold, and the processing unit is configured to determine that the third node can be for transmitting the data packet that is to be transmitted through the first path.

28. The apparatus according to any one of claims 17 to 27, wherein the transceiver unit is configured to receive fifth information, wherein the fifth information comprises a size of an available space in the first buffer space of the second node; and
the processing unit is configured to determine that the size of the available space in the first buffer space is greater than a fifth threshold, and the processing unit is configured to determine that the second node can be for transmitting the data packet that is to be transmitted through the first path.

29. The apparatus according to claim 28, wherein that the transceiver unit is configured to receive fifth information comprises:
the transceiver unit is configured to receive Y pieces of fifth information in fifth duration, wherein the Y pieces of fifth information comprise sizes of available spaces in Y first buffer spaces; and
the processing unit is configured to determine that the sizes of the available spaces in the Y first buffer spaces are all greater than the fifth threshold, and the processing unit is configured to determine that the second node can be for transmitting the data packet that is to be transmitted through the first path, wherein
Y is an integer greater than 1.

30. The apparatus according to any one of claims 17 to 29, wherein
the first threshold is configured by a donor node of the first node, the first threshold is indicated by the donor node of the first node based on indication information, or the first threshold is preconfigured for the apparatus.

31. The apparatus according to claim 30, wherein
when the first node is an integrated access and backhaul donor distributed unit, the donor node of the first node is an integrated access and backhaul donor central unit; or when the first node is an integrated access and backhaul node, the donor node of the first node is an integrated access and backhaul donor or an integrated access and backhaul donor central unit.

32. The apparatus according to any one of claims 20 to 29, wherein
the first duration is configured by a donor node of the first node, the first duration is indicated by the donor node of the first node based on indication information, or the first duration is preconfigured for the apparatus.

33. A communication apparatus, comprising at least one processor, wherein the at least one processor is configured to execute a computer program stored in a memory, to enable the communication apparatus to implement the method according to any one of claims 1 to 16.

34. A computer-readable storage medium, comprising a computer program, wherein when the computer program is run on a computer, the computer is enabled to perform the method according to any one of claims 1 to 16.

35. A computer program product, wherein the computer program product comprises a computer program; and when the computer program is run, a computer is enabled to perform the method according to any one of claims 1 to 16.
